(19) Europäisches Patentamt / European Patent Office / Office européen des brevets

(11) **EP 4 358 721 B1**

(12) **FASCICULE DE BREVET EUROPEEN**

(45) Date de publication et mention
de la délivrance du brevet:
**23.07.2025   Bulletin 2025/30**

(21) Numéro de dépôt: **22744265.4**

(22) Date de dépôt: **22.06.2022**

(51) Classification Internationale des Brevets (IPC):
**A01N 59/04** *(2006.01)*      **A01P 3/00** *(2006.01)*
**A01N 25/30** *(2006.01)*      **A01N 41/06** *(2006.01)*
**A01G 17/02** *(2006.01)*

(52) Classification Coopérative des Brevets (CPC):
(C-Sets disponibles)
**A01P 3/00; A01N 59/04**                    (Cont.)

(86) Numéro de dépôt international:
**PCT/FR2022/051220**

(87) Numéro de publication internationale:
**WO 2022/269195 (29.12.2022 Gazette 2022/52)**

(54) **COMPOSITION COMPRENANT DU BICARBONATE DE POTASSIUM ET UTILISATION POUR TRAITER ET/OU PROTÉGER LES CULTURES**

ZUSAMMENSETZUNG MIT KALIUMBICARBONAT UND VERWENDUNG DAVON ZUR BEHANDLUNG UND/ODER SCHUTZ VON NUTZPFLANZEN

COMPOSITION COMPRISING POTASSIUM BICARBONATE AND USE THEREOF FOR TREATING AND/OR PROTECTING CROPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.06.2021   FR 2106708**

(43) Date de publication de la demande:
**01.05.2024   Bulletin 2024/18**

(73) Titulaire: **SCEA du Château Montrose**
**33180 Saint-Estephe (FR)**

(72) Inventeur: **DECUP, Vincent**
**33520 Bruges (FR)**

(74) Mandataire: **Regimbeau**
**20, rue de Chazelles**
**75847 Paris Cedex 17 (FR)**

(56) Documents cités:
**WO-A1-2006/100071      WO-A1-96/00705**
**CN-A- 106 811 763      DE-A1- 19 630 453**

(52)  Classification Coopérative des Brevets (CPC):
(Cont.)

C-Sets
**A01N 59/04, A01N 25/30, A01N 41/06**

**Description**

**DOMAINE DE L'INVENTION**

La présente invention se situe dans le domaine phytosanitaire. Elle concerne des compositions comprenant du bicarbonate de potassium et au moins un excipient choisi parmi les tensioactifs anioniques appartenant à la famille des taurates, l'excipient étant de préférence acceptable sur le plan phytosanitaire et/ou de préférence essentiellement biosourcé. Les compositions se présentent de préférence sous une forme solide. La présente invention porte également sur l'utilisation d'une telle composition et sur une méthode comprenant l'utilisation d'une telle composition, pour traiter et/ou protéger les cultures, de préférence les vignes, les cucurbitacées, et les solanacées.

**ETAT DE LA TECHNIQUE**

Les champignons phytopathogènes sont la principale cause de maladies chez les plantes. Ils sont notamment responsables d'environ 70% des maladies de plantes cultivées, parmi lesquelles 25% sont causées par les phytopathogènes de type mildious. Les pertes économiques annuelles dues aux maladies fongiques dans l'agriculture mondiale avant et après récolte, étaient estimées à plus de 200 milliards d'euros en 2003. Le contrôle des champignons phytopathogènes est donc d'une grande importance économique.

Ainsi, un large spectre de produits antifongiques a été développé et est disponible sur le marché.

Toutefois, la grande majorité de ces produits n'est pas inoffensive pour l'environnement et comprend des substances polluantes qui contaminent durablement les sols. Certains produits ont alors été développés pour un usage en agriculture biologique. Par exemple, les produits à base de soufre ou de cuivre sont respectivement autorisés pour le contrôle de l'oïdium et du mildiou de la vigne en agriculture biologique. Toutefois, ces substances sont difficilement éliminées des sols et peuvent être nocives (en particulier lorsque les concentrations augmentent). Ainsi, elles contaminent et polluent progressivement les sols année après année, traitement après traitement. De plus, les procédés d'obtention de ces substances (tels que les procédés d'extraction du cuivre) nécessitent en général l'utilisation de produits toxiques et/ou la production de sous-produits nocifs pour l'environnement et peu valorisables. En outre, du fait de l'ensemble de ces impacts détrimentaires sur l'environnement, ces substances peuvent également poser des problèmes sur le plan de leur homologation en agriculture biologique. Par exemple, le statut du cuivre et son utilisation sont régulièrement revus au niveau européen : le cuivre pouvait être utilisé pour un maximum de 6 kg/ha/an jusqu'en 2018 et depuis 2019, pour 4 kg/ha/an. Il relève donc à la fois d'une importance stratégique, économique et environnementale pour les exploitants de disposer de solutions alternatives de lutte contre les phytopathogènes tels que susmentionnés, qui soient à la fois obtenues selon des modes de production moins nocifs pour l'environnement et plus adaptées à la demande croissante en produits issus de l'agriculture biologique, tout en étant efficaces.

Il existe ainsi un réel besoin de réduire l'impact environnemental des produits antifongiques, en utilisant des matières premières et/ou des substances pouvant être obtenues par des procédés biologiques (i.e., matières premières et/ou substances biosourcées). En effet, de tels procédés de production sont moins polluants que les procédés chimiques (en particulier moins polluants que les procédés de la pétrochimie et de la carbochimie) et les substances ainsi produites sont peu, voire pas, toxiques et nocives pour l'environnement et sont plus facilement biodégradables. Dans ce contexte, le bicarbonate de potassium est un composé qui peut être 100% biosourcé, et qui est à la fois biodégradable et inoffensif pour l'environnement. Certaines études montrent que ce composé présente un effet antifongique.

Par exemple, WO 96/00705 décrit que des formulations comprenant du bicarbonate de sodium, du bicarbonate de potassium, du Neodol® (Shell, Pays-Bas), du kaolin et de l'oxyde de magnésium seraient efficaces pour traiter la pourriture, l'oïdium et le mildiou de la vigne.

WO 95/12975 décrit qu'une formulation comprenant du bicarbonate de potassium, du carbonate de potassium, de l'oléate de potassium, de l'octanoate de potassium, de l'hydroxytoluène butylé (BHT) et du polyacrylate de potassium serait efficace pour traiter la pourriture de la vigne.

WO 94/18831 décrit qu'une formulation comprenant du bicarbonate de sodium, du bicarbonate de potassium, du carbonate de sodium, de l'oléate de potassium, de l'octanoate de potassium, de la gomme guar et du BHT serait efficace pour traiter le mildiou de la vigne.

Toutefois, ces différentes compositions comprennent des composés non biosourcés, issus de la chimie (en particulier, la pétrochimie ou la carbochimie, selon des procédés de synthèse ayant un impact fortement détrimentaire sur l'environnement), nocifs pour l'environnement et non biodégradables, ou dont les sous-produits de dégradation sont nocifs pour l'environnement et non biodégradables, tels que le Neodol®, l'oxyde de magnésium, l'hydroxytoluène butylé (BHT) ou le polycrylate de potassium.

En outre, les solutions aqueuses de bicarbonate de potassium présentent une faible adhérence et un faible pouvoir d'étalement sur les pieds de plantes traitées, notamment les vignes (en particulier sur les feuilles de vigne) lorsqu'aucun excipient n'est utilisé. De plus, ces solutions sont facilement lessivées par les intempéries (en particulier par l'eau de pluie) lors de son passage en plein champ traité.

Il existe donc toujours un réel besoin pour de nouvelles compositions permettant de prévenir et/ou traiter efficacement les champignons phytopathogènes, avec une activité antifongique optimisée, présentant une meilleure adhérence, une meilleure capacité d'étalement, une résistance au lessivage et une longévité augmentées sur les feuilles des cultures à traiter, notamment les feuilles de vignes, de cucurbitacées et de solanacées, tout en étant adaptées à une utilisation en agriculture biologique (notamment viticulture biologique) et bien tolérées par les cultures traitées.

La présente invention permet de répondre à ce besoin. Les présents Inventeurs ont mis au point une nouvelle composition pouvant être biosourcée et biodégradable, comprenant du bicarbonate de potassium, et au moins un excipient pouvant être essentiellement biosourcé et/ou essentiellement biodégradable et/ou essentiellement d'origine naturelle et/ou comportant une phrase de conseil de prudence peu préoccupante, choisi parmi les tensioactifs anioniques appartenant à la famille des taurates. Les Inventeurs ont montré que, de manière inattendue, cette nouvelle composition est particulièrement stable sous la forme solide. Les Inventeurs ont en outre mis en évidence que, de manière inattendue, cette composition permet de protéger et/ou traiter les cultures contre les champignons phytopathogènes, notamment l'oïdium, le mildiou et la pourriture de la vigne et/ou des cucurbitacées et/ou des solanacées avec une grande efficacité. Les Inventeurs ont notamment montré qu'une telle composition présente un effet antifongique significatif permettant d'inhiber fortement la croissance du champignon responsable du mildiou de la vigne et/ou de cucurbitacées et/ou des solanacées. Cette nouvelle composition présente une amélioration significative des propriétés d'adhérence, d'étalement, de résistance au lessivage et de longévité sur les feuilles de vignes, de cucurbitacées et de solanacées.

Cette formulation est d'autant plus intéressante que sa matière active, le bicarbonate de potassium, peut être 100% biosourcée et peut notamment provenir d'un sous-produit de la fermentation alcoolique, le dioxyde de carbone, permettant ainsi de valoriser les gaz produits lors de la fermentation alcoolique et de limiter la libération du dioxyde de carbone, un gaz à effet de serre détrimentaire pour la couche d'ozone.

Elle associe de manière inédite au moins un tensioactif anionique appartenant à la famille des taurates, un composé pouvant également être biosourcé et/ou biodégradable et/ou naturel et/ou comportant une phrase de conseil de prudence peu préoccupante, au bicarbonate de potassium, permettant ainsi d'améliorer l'étalement et la fixation de la matière active sur la culture, ainsi que la stabilité de la composition sous la forme solide, pour un stockage à long terme avant utilisation. En retardant l'évaporation de l'eau, cette association inédite ralentit le lessivage par les eaux de pluie, améliore la dispersion du produit sur la feuille et la qualité du film de contact formé sur la feuille par les différents co-formulants. De plus, cette formulation améliore la tenue au froid de la composition. Les données montrent en outre que la présence d'au moins un excipient additionnel choisi parmi les tensioactifs polymères polyélectrolytes anioniques, les tensioactifs non-ioniques, les tensioactifs cationiques, et les argiles, permet d'accroître davantage l'efficacité antifongique de la composition. Les Inventeurs ont également mis en évidence un effet protecteur durable dans le temps et résistant au lessivage. Ainsi, la fréquence d'application du traitement peut être réduite au maximum, limitant les frais et l'impact sur l'environnement. Les données montrent en outre qu'une telle composition ne présente pas de phytotoxicité pour les cultures.

Cette formulation peut se présenter à l'état solide, sous forme de poudre, de comprimés, de granules, etc., tout en conservant ces différentes propriétés. En effet, la présence d'au moins un tensioactif anionique appartenant à la famille des taurates permet d'augmenter significativement la stabilité de la composition sous la forme solide, pour un stockage à long terme avant utilisation. Les granules sont une forme particulièrement avantageuse, moins volatile que la poudre et plus facile à stocker et plus durable que les compositions liquides. Or, aucun des produits commercialisés auprès des professionnels des filières viticoles et agricoles à l'heure actuelle ne se présente sous forme de granules.

## EXPOSE DE L'INVENTION

Dans le cadre de la présente invention, les Inventeurs ont mis en évidence, de manière tout à fait surprenante, qu'une composition comprenant du bicarbonate de potassium, et au moins un excipient choisi parmi les tensioactifs anioniques appartenant à la famille des taurates, et optionnellement au moins un excipient additionnel choisi parmi les tensioactifs (notamment un tensioactif choisi parmi les polymères polyélectrolytes anioniques, les tensioactifs non-ioniques, les tensioactifs cationiques), et optionnellement au moins un excipient supplémentaire choisi parmi les argiles, permet de protéger et/ou traiter les cultures, en particulier les vignes, les cucurbitacées et les solanacées, avec une grande efficacité et un effet protecteur durable dans le temps et résistant au lessivage. Ainsi, la fréquence d'application du traitement peut être réduite au maximum, limitant les frais et l'impact sur l'environnement. Les Inventeurs ont notamment montré qu'une telle composition présente un effet antifongique significatif. Ces résultats sont surprenants car une telle combinaison n'était pas connue, *a fortiori* pour avoir un effet antifongique ou un effet de protection ou de traitement des cultures. Les données montrent en outre qu'une telle composition ne présente pas ou peu de phytotoxicité pour les cultures.

La présente invention concerne donc une nouvelle composition comprenant du bicarbonate de potassium, et au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou de préférence un excipient essentiellement biodégradable, et/ou de préférence un excipient essentiellement d'origine naturelle. Alternativement ou additionnellement, l'excipient comporte une phrase de conseil de prudence peu préoccupante.

Les données montrent en outre que la présence d'au moins un excipient additionnel choisi parmi les tensioactifs polymères polyélectrolytes anioniques, les tensioactifs non-ioniques, les tensioactifs cationiques, et les argiles, permet d'accroître davantage l'efficacité antifongique de la composition. La présente invention concerne donc une composition comprenant du bicarbonate de potassium, au moins un excipient choisi parmi les tensioactifs anioniques appartenant à la famille des taurates, et au moins un excipient additionnel choisi parmi les tensioactifs polymères polyélectrolytes anioniques, les tensioactifs non-ioniques, les tensioactifs cationiques, et les argiles, permet d'accroître davantage l'efficacité antifongique de la composition ; ledit excipient étant de préférence un excipient acceptable sur le plan phytosanitaire, et/ou de préférence un excipient essentiellement biosourcé, et/ou de préférence un excipient essentiellement biodégradable, et/ou de préférence un excipient essentiellement d'origine naturelle. Alternativement ou additionnellement, l'excipient comporte une phrase de conseil de prudence peu préoccupante.

Les Inventeurs ont également montré que la composition peut se présenter sous une forme solide et qu'elle est particulièrement stable et adaptée à un stockage à moyen et long terme sous cette forme. L'invention porte donc sur une composition telle que définie ci-dessus se présentant sous une forme solide, de préférence sous la forme d'une poudre, de comprimés, de granules, ou une combinaison quelconque de ceux-ci.

La présente invention porte également sur l'utilisation d'une telle composition et sur une méthode comprenant l'utilisation d'une telle composition, pour traiter et/ou protéger les cultures, et/ou contrôler les champignons pathogènes et/ou maladies fongiques sur les cultures, les cultures étant de préférence des vignes, des cucurbitacées, des solanacées, ou toute combinaison de celles-ci, et de manière préférée des vignes.

La présente invention concerne en outre une méthode de protection et/ou de traitement des cultures, ainsi qu'une méthode pour contrôler les champignons pathogènes et/ou maladies fongiques sur les cultures, comprenant l'application d'une telle composition sur les cultures à protéger et/ou traiter, dans laquelle les cultures sont de préférence des vignes, des cucurbitacées, des solanacées, ou toute combinaison de celles-ci, et de manière préférée des vignes.

## DESCRIPTION DETAILLEE DE L'INVENTION

Définitions

Par « **végétal** », on entend un organisme appartenant au règne végétal. Le règne végétal comprend les lignées qui végètent : c'est-à-dire qui respirent, se nourrissent, croissent comme les plantes, selon les classifications scientifiques classiques. Le règne végétal est un assemblage polyphylétique d'organismes photosynthétiques et dont les cellules ont une paroi faite de cellulose. Le terme végétal désigne à la fois les plantes terrestres (ou végétaux verts) et les algues vertes, constituant le taxon des Chlorobiontes, ainsi que les algues rouges et les algues brunes. Le groupe végétal est donc formé de deux lignées, l'une d'algues et la seconde de plantes (en particulier les plantes terrestres), qui comprennent notamment les bryophytes (mousses et hépatiques), fougères (ptéridophytes), gymnospermes et angiospermes. Avantageusement, le végétal est une plante.

Par « **phytosanitaire** », on entend ce qui se rapporte aux soins/traitements des végétaux et des champignons supérieurs (ou champignons macroscopiques), en particulier les végétaux (ou organismes végétaux) et les champignons cultivés par l'homme (les végétaux/champignons non cultivés par l'homme, dits sauvages et/ou endémiques, peuvent également être concernés par les soins/traitements phytosanitaires, pour des raisons environnementales/conservatoires par exemple). Avantageusement, les végétaux (ou organismes végétaux) et/ou les champignons à soigner/traiter comprennent au moins une partie destinée à être consommée par des animaux ou transformée pour une consommation animale. Les animaux comprennent notamment le bétail (tel que bovin, cheval, mulet, âne, bétail, mouton, chèvre, porc), les volailles d'élevage, l'aquaculture (poissons et crustacés), les insectes d'élevage, les animaux familiers (chats, chiens, reptiles, oiseaux, etc.) et l'homme. Les soins/traitements phytosanitaire peuvent notamment comprendre les soins/-traitements visant à contrôler et/ou augmenter la croissance et/ou le développement et/ou le rendement, ainsi que les soins/traitements visant la prévention et/ou le traitement des maladies qui pourraient par exemple affecter ladite croissance, ledit développement ledit rendement.

Par « **composition phytosanitaire** », on entend une composition ayant au moins un effet phytosanitaire et/ou une composition adaptée à une utilisation phytosanitaire.

L'effet phytosanitaire peut être un effet comprenant ou consistant en un contrôle et/ou une augmentation de la croissance et/ou du développement et/ou du rendement. L'effet phytosanitaire peut être un effet thérapeutique, consistant de préférence à prévenir et/ou traiter et/ou contrôler les maladies des organismes végétaux. L'effet thérapeutique d'une composition phytosanitaire peut donc comprendre, consister essentiellement en, ou consister en, la prévention, le traitement ou le contrôle de nuisibles, tels que des plantes, animaux, insectes, parasites, virus et champignons pathogènes/nocif/nuisibles/détrimentaires pour l'organisme végétal/la culture à traiter. L'effet thérapeutique d'une composition phytosanitaire peut donc comprendre la prévention, le traitement ou le contrôle d'organismes pathogènes/nocifs/nuisibles/détrimentaires pour l'organisme végétal/la culture à traiter. Il s'agit donc dans ce cas d'un effet pesticide. Lesdits organismes pathogènes/nocifs/nuisibles/détrimentaires comprennent des plantes, animaux, insectes, parasites, virus et champignons (tels que mousses, champignons, bactéries, végétaux concurrents, insectes, rongeurs, acariens, mollusques, vers, nématodes, virus, etc.) entrant en compétition avec l'organisme végétal/la culture/les plantes cultivées ou nuisant à leur croissance ou à leur reproduction. L'effet phytosanitaire peut donc consister à repousser et/ou éloigner ces organismes (effet répulsif). L'effet phytosanitaire peut également comprendre un effet fongicide/antifongique/fongistatique (inhibition et/ou prévention du développement et/ou de la propagation des champignons/fungi et/ou effet létal pour les champignons/fungi), bactéricide/antibactérien/bactériostatique (inhibition et/ou prévention du développement et/ou de la propagation des bactéries et/ou effet létal pour les bactéries), acaricide (inhibition et/ou prévention du développement et/ou de la propagation des acariens et/ou effet létal pour les acariens), insecticide/anti-insecte (inhibition et/ou prévention du développement et/ou de la propagation des insectes et/ou effet létal pour les insectes), molluscicide (inhibition et/ou prévention du développement et/ou de la propagation des mollusques (tels les limaces et escargots) et/ou effet létal pour les mollusques (tels les limaces et escargots)), nématicide (inhibition et/ou prévention du développement et/ou de la propagation des nématodes et/ou effet létal pour les nématodes), parasiticide/antiparasitaire (inhibition et/ou prévention du développement et/ou de la propagation des parasites et/ou effet létal pour les parasites), virucide/antivirus (inhibition et/ou prévention du développement et/ou de la propagation des virus et/ou effet létal pour les virus), aphicide (inhibition et/ou prévention du développement et/ou de la propagation des pucerons et/ou effet létal pour les pucerons), herbicide (ou encore désherbant, défoliant, phytocide ou débroussaillant : inhibition et/ou prévention du développement et/ou de la propagation des plantes indésirables (aussi appelées mauvaises herbes ou adventices) et/ou effet létal pour les pucerons pour les plantes indésirables). La composition phytosanitaire peut également agir selon des mécanismes de compétition, prédation, mimétisme, stimulation des défenses naturelles, ou une combinaison quelconque de ces mécanismes. Alternativement ou en combinaison à l'effet thérapeutique/pesticide, l'effet phytosanitaire d'une composition phytosanitaire peut comprendre un effet bénéfique sur l'organisme végétal/la culture à traiter, tel qu'un effet d'augmentation de la croissance, un effet de stimulation de la floraison, un effet de stimulation de la croissance du fruit, un effet d'augmentation de la résistance (au froid, à la chaleur, aux intempéries, aux pathogènes etc.), un effet de stimulation des défenses naturelles, ou une combinaison quelconque de ces effets.

De préférence, l'effet phytosanitaire comprend, vis-à-vis de ces organismes pathogènes/nocifs/nuisibles/détrimentaires, la répulsion, la compétition, la prédation, le mimétisme, la stimulation des défenses naturelles, l'effet bactéricide/antibactérien/bactériostatique, l'effet fongicide/antifongique/fongistatique, l'effet parasiticide/antiparasitaire, ou une combinaison quelconque de ces effets. De préférence encore, l'effet phytosanitaire comprend au moins un effet fongicide. De préférence encore, l'effet phytosanitaire consiste essentiellement en au moins un effet antifongique. De préférence encore, l'effet phytosanitaire consiste en au moins un effet antifongique. De préférence encore, l'effet phytosanitaire consiste en un effet antifongique.

Ainsi, la composition est de préférence une composition phytosanitaire fongicide/antifongique, c'est-à-dire qu'elle possède un effet fongicide/antifongique (c'est-à-dire un effet d'inhibition et/ou de prévention du développement et/ou de la propagation des champignons/fungi et/ou effet létal pour les champignons/fungi). La composition phytosanitaire est de préférence une composition antifongique adaptée à une utilisation dans le domaine agricole (soit une composition phytosanitaire agricole), de préférence encore une composition antifongique adaptée à une utilisation dans le domaine viticole (soit une composition phytosanitaire viticole).

Par « utilisation phytosanitaire », on entend une utilisation produisant au moins un effet phytosanitaire, l'effet phytosanitaire étant de préférence tel que défini ci-dessus. De préférence, l'utilisation phytosanitaire comprend, consiste essentiellement en ou consiste en l'utilisation d'une composition phytosanitaire.

L'utilisation est de préférence une utilisation fongicide/antifongique, c'est-à-dire qu'elle conduit à un effet fongicide/antifongique (c'est-à-dire un effet d'inhibition et/ou de prévention du développement et de la propagation des champignons/fungi et/ou effet létal pour les champignons/fungi). L'utilisation est de préférence une utilisation antifongique dans le domaine agricole (soit une utilisation phytosanitaire agricole), de préférence encore une utilisation antifongique dans le domaine viticole (soit une utilisation phytosanitaire viticole).

Par « agricole » ou « domaine agricole » on entend tout ce qui se rapporte à l'agriculture et à l'horticulture (c'est-à-dire les travaux de la terre et la production des animaux et végétaux). Ainsi, le domaine/le champ/la spécialité/l'activité agricole comprend, consiste essentiellement en, consiste en ou est un(e) domaine/champ/spécialité/activité qui relève de l'agriculture (c'est-à-dire le domaine consacré ou relatif aux travaux de la terre et de la production des animaux et végétaux). La composition phytosanitaire agricole comprend, consiste essentiellement en, consiste en ou est donc une composition adaptée pour et/ou une composition pour les travaux de la terre et la production des animaux et végétaux. L'utilisation phytosanitaire agricole comprend, consiste essentiellement en, consiste en ou est donc une utilisation adaptée pour et/ou dans les travaux de la terre et la production des animaux et végétaux.

Par « viticole » ou « domaine viticole » on entend tout ce qui se rapporte à la culture de la vigne et à la production du vin. Ainsi, le domaine/le champ/la spécialité/l'activité viticole comprend, consiste essentiellement en, consiste en ou est un(e) domaine/champ/spécialité/activité qui relève de la culture de la vigne et de la production du vin. La composition phytosanitaire viticole comprend, consiste essentiellement en, consiste en ou est donc une composition adaptée pour et/ou une composition pour la culture de la vigne et la production du vin. L'utilisation phytosanitaire viticole comprend, consiste essentiellement en, consiste en ou est donc une utilisation adaptée pour et/ou dans la culture de la vigne et la production du vin.

Par « **culture** » on entend une production végétale ou de champignon tirée de l'exploitation de la terre. Le terme culture peut donc désigner à la fois le végétal ou le champignon cultivé (par exemple une plante cultivée) avant ou après récolte, la plantation/le champ comprenant le végétal ou le champignon cultivé avant ou après récolte, et l'ensemble des travaux et techniques mis en œuvre pour traiter la terre et pour en tirer des produits de consommation (tels que des végétaux ou des champignons cultivés).

Par **« vigne »** on entend à la fois un pied de vigne et la plantation de vignes (donc un ensemble de plants/pieds de vignes ou encore le cépage d'une vigne). Par « **vigne** » ou « **plant de vigne** » ou « **pied de vigne** » on entend un arbrisseau sarmenteux, grimpant, à fruits en grappes (raisin). La vigne peut être cultivée pour le raisin et/ou pour la production du vin. Avantageusement, la vigne appartient à la famille des *Vitaceae,* qui comprend notamment les genres *Vitis, Parthenocissus* et *Ampelopsis* (comprenant l'espèce *Ampelopsis brevipedunculata*)*.* La vigne appartient de préférence au genre *Vitis,* de préférence encore à l'espèce *Vitis vinifera.*

Par « **cucurbitacée** » on entend à la fois un plant de cucurbitacée et la plantation de cucurbitacées (donc un ensemble de plants/pieds de cucurbitacées). Par « **cucurbitacée** » ou « **plant de cucurbitacée** » ou « **pied de cucurbitacée** » ou « **plante cucurbitacée »** on entend une plante appartenant à la famille des *Cucurbitaceae* (Cucurbitacées). La famille des *Cucurbitaceae* est une famille de plantes dicotylédones de l'ordre des *Cucurbitales,* originaires pour la plupart des régions tropicales et subtropicales, qui comprend environ 800 espèces réparties en environ 130 genres. Ce sont généralement des plantes herbacées, annuelles ou vivaces, à port rampant ou grimpant, aux tiges munies de vrilles, et parfois des arbustes. Les fleurs sont unisexuées, portées parfois par les mêmes plantes (monoïques), parfois par des plantes différentes (dioïques). Les fruits sont le plus souvent des baies modifiées appelées péponides, plus rarement des fruits secs (capsules, samares). De nombreuses espèces de cucurbitacées sont cultivées pour leur fruits comestibles (notamment les courges, courgettes, concombres, cornichons, melons, pastèques, chayotes, etc.) et parfois pour leurs graines (courge à huile, pistache africaine, etc.).

La famille des cucurbitacées comprend notamment les genres suivants :

- *Bryonia* (comprenant par exemple la bryone dioïque),
- *Ecballium* (comprenant par exemple le concombre d'âne),
- *Citrullus* (comprenant par exemple la pastèque (*Citrullus vulgaris*) et la coloquinte vraie (*Citrullus colocynthis*))*,*
- *Cucumis* (comprenant par exemple le concombre (*Cucumis sativus*) et le melon (*Cucumis melo*)*,*
- *Cucurbita* (comprenant par exemple les différentes espèces de courges et courgettes),
- *Lagenaria* (comprenant par exemple les calebasses),
- *Luffa,*
- etc.

Ainsi, la cucurbitacée est avantageusement choisie parmi les genres *Bryonia* (de préférence la bryone dioïque), *Ecballium* (de préférence le concombre d'âne), *Citrullus* (de préférence la pastèque (*Citrullus vulgaris*) ou la coloquinte vraie (*Citrullus colocynthis*))*, Cucumis* (de préférence le concombre (*Cucumis sativus*) ou le melon (*Cucumis melo*)), *Cucurbita* (de préférence les courges ou les courgettes), *Lagenaria* (de préférence les calebasses), *Luffa,* et toute combinaison de ceux-ci.

Par « solanacée » on entend à la fois un plant de solanacée et la plantation de solanacées (donc un ensemble de plants/pieds de solanacées). Par « **solanacée** » ou « **plant de solanacée** » ou « **pied de solanacée** » ou « **plante solanacée** » on entend une plante appartenant à la famille des *Solanaceae.* Il s'agit d'une famille de plantes dicotylédones (*Magnoliopsida*) appartenant à l'ordre des *Solanales.* Ce sont généralement des plantes herbacées, des arbustes, des arbres ou des lianes avec des feuilles alternes, simples et sans stipules. La famille comprend une centaine de genres pour environ 2 700 espèces et occupe une grande diversité d'habitat, de morphologie et d'écologie. Cette famille comprend des espèces alimentaires telles que la pomme de terre (*Solanum tuberosum),* la tomate (*Solanum lycopersicum*)*,* l'aubergine (S*olanum melongena)* et les piments (*Capsicum*). De nombreuses plantes ornementales appartiennent également aux Solanacées : notamment *Petunia, Schizanthus, Salpiglossis* et *Datura.* Certaines espèces de solanacées, riches en alcaloïdes, sont connues pour leurs usages médicinaux, leurs effets psychotropes ou pour leur toxicité : notamment belladone, morelle, brugmansia, *Datura,* mandragore, tabac.

La famille des solanacées comprend notamment les genres *Coeloneurum, Espadaea, Goetzea, Henoonia, Solanum,* etc. Ainsi, la solanacée est avantageusement choisie parmi ces genres et toute combinaison de ceux-ci.

Avantageusement, la solanacée est choisie parmi les sous-familles des *Browallioideae,* des *Duckeodendron,* des *Goetzeoideae,* des *Nicotianoideae,* des *Petunioideae,* des *Schizanthoideae,* des *Schwenckioideae,* des *Solanoideae,* des *Cestroideae,* et toute combinaison de celles-ci. La solanacée est de préférence choisie parmi les pommes de terre *(Solanum tuberosum),* les tomates *(Solanum lycopersicum),* les aubergines *(Solanum melongena),* les piments *(Capsicum),* les *Petunia,* les *Schizanthus,* les *Salpiglossis,* les *Datura,* les belladones, les morelles, les brugmansia, les mandragores, les tabacs, et toute sous-espèce de celles-ci, et toute combinaison de celles-ci (de préférence parmi les pommes de terre *(Solanum tuberosum),* les tomates *(Solanum lycopersicum),* les aubergines *(Solanum melongena),* les piments *(Capsicum),* et toutes leurs sous-espèces, et toute combinaison de celles-ci ; de préférence encore les pommes de terre *(Solanum tuberosum),* notamment leurs sous-espèces, telles que *Solanum tuberosum* L. subsp. *Tuberosum,* et *Solanum tuberosum* L. subsp. *andigenum* (Juz. & Bukasov) Hawkes).

Par « **principe actif** » ou « **substance active** », on entend la substance chimique qui, dans une composition phytosanitaire, une composition cosmétique ou dans un médicament, possède au moins un effet phytosanitaire, cosmétique ou thérapeutique, respectivement. Dans le cas d'une composition phytosanitaire, l'effet phytosanitaire est de préférence tel que défini ci-dessus. Le principe actif est de préférence essentiellement biosourcé.

Par « **bicarbonate de potassium** » ou « **hydrogénocarbonate de potassium** », on entend un sel basique incolore et inodore ayant pour formule chimique $KHCO_3$. Le bicarbonate de potassium est encore appelé carbonate acide de potassium. Les cristaux monocliniques, de densité 2,17 se décomposent entre 100 °C et 200 °C. Il peut être fabriqué en faisant réagir du carbonate de potassium, de l'eau et du dioxyde de carbone, selon la réaction chimique suivante :

$$K_2CO_3 + H_2O + CO_2 \rightarrow 2KHCO_3.$$

Il peut également être synthétisé à partir de carbonate de potassium et d'eau. Le bicarbonate de potassium est de préférence essentiellement biosourcé.

Par « **excipient** » ou « **additif** », on entend toute substance d'une composition autre que le ou les principe(s) actif(s). L'ajout d'un excipient dans une composition est destiné à lui conférer une stabilité, une consistance, une forme, une(des) propriété(s) de dissolution, une(des) propriété(s) de ciblage, une(des) propriété(s) de conservation, une demi-vie, une biodisponibilité, un goût, une couleur, une(des) propriété(s) esthétique(s) et/ou une texture donnée, ou d'autres caractéristiques physiques, chimiques, biologiques ou gustatives particulières.

Un excipient est donc davantage défini par son utilisation que par une composition chimique particulière, ladite utilisation découlant notamment de ses propriétés physico-chimiques qui le rendent aptes à remplir son rôle d'excipient.

L'excipient peut notamment être un agent stabilisant, un conservateur, un antioxydant, un agent texturant ou agent de texture, un liant, un émulsifiant, un colorant, un pigment, un inhibiteur de corrosion, un inhibiteur de polymérisation, un anti-agglomérant, un tensioactif (pouvant aussi être appelé émulseur, produit mouillant, dispersant, émulsifiant), un antimoussant, un anti-lessivant, un épaississant, un solubilisant, un agent humectant, un dessiccant, un agent antiozonant, un agent anti-UV (photoprotecteur ; exemples : « quencher », absorbeur UV), un stabilisant thermique, un agent antigel (exemple : l'éthylène glycol, le diéthylène glycol, le propylène glycol, le glycérol, le méthanol, l'isopropanol), un ignifugeant (exemples : composé bromé, phosphoré, trioxyde d'antimoine avec un donneur d'halogène), un agent de mise en œuvre (exemples : lubrifiant, plastifiant, paraffine), un promoteur d'adhésion, un solvant, un diluant, un agent antistatique, un additif tampon, un traceur olfactif (tel l'éthanethiol), un agent combinant l'une quelconque de ces caractéristiques.

L'excipient n'a de préférence aucune interaction négative, particulièrement chimique, avec le(s) principe(s) actif(s), c'est-à-dire que l'excipient n'induit aucune diminution de l'activité/l'action/l'effet désiré(e) du(des) principe(s) actif(s), que ce soit avant ou après application/administration sur/dans l'organisme à traiter/protéger. L'excipient peut également être neutre vis-à-vis du(des) principe(s) actif(s), c'est-à-dire qu'il n'affecte en aucune manière l'activité/l'action/l'effet du(des) principe(s) actif(s). L'excipient est de préférence non toxique (en particulier pour les organismes végétaux à traiter, notamment les cultures, telles les vignes, les cucurbitacées, les solanacées ; et les animaux, notamment les mammifères et plus particulièrement l'homme). L'excipient est de préférence essentiellement d'origine naturelle. L'excipient est de préférence essentiellement biodégradable. De préférence encore, l'excipient est essentiellement biosourcé. De manière particulièrement préférée, l'excipient est essentiellement biosourcé et essentiellement biodégradable. Alternativement ou additionnellement, l'excipient comporte une phrase de conseil de prudence peu préoccupante.

Par « **excipient acceptable sur le plan phytosanitaire** » on entend un excipient adapté à une utilisation phytosanitaire. On entend notamment un excipient apte à être incorporé dans une composition phytosanitaire. Avantageusement, l'excipient acceptable sur le plan phytosanitaire n'induit aucune diminution de l'activité/l'action/l'effet phytosanitaire désiré(e) du(des) principe(s) actif(s) et/ou de la composition. L'excipient acceptable sur le plan phytosanitaire est de préférence non toxique (en particulier pour les organismes végétaux à traiter, notamment les cultures, telles les vignes, les cucurbitacées, les solanacées ; et les animaux, notamment les mammifères et plus particulièrement l'homme). L'excipient est de préférence d'origine naturelle. L'excipient est de préférence essentiellement biodégradable. L'excipient est de préférence encore essentiellement biosourcé. L'excipient est de préférence biodégradable et/ou biosourcé. Alternativement ou additionnellement, l'excipient comporte une phrase de conseil de prudence peu préoccupante. Avantageusement, l'excipient acceptable sur le plan phytosanitaire a été homologué ou est en cours d'homologation pour une utilisation phytosanitaire par les autorités compétentes sur le territoire visé.

Dans le cadre de la présente invention, il pourra être considéré que le terme « biosourcé », lorsqu'il est utilisé dans le contexte de l'un quelconque des aspects / modes de réalisation de l'invention, qualifie l'une quelconque des conditions suivantes, seule ou en combinaison avec au moins une autre desdites conditions : biosourcé, biodégradable, naturel, comportant une phrase de conseil de prudence peu préoccupante, acceptable sur le plan phytosanitaire. Sur la base de cette définition, l'interprétation à donner au terme « biosourcé » tout au long du présent texte sera aisément accessible à l'homme du métier d'après le contexte.

Au sens de la présente invention, les « **phrases de conseil »** ou « **phrases de prudence »** ou « **phrases de conseil de prudence** » ou encore « **phrases P** » sont des indications présentes sur les étiquettes et/ou les emballages et/ou la notice d'utilisation des composés/produits, donnant des informations à l'utilisateur sur ces composés/produits. Ces informations indiquent à l'utilisateur les précautions à prendre et/ou à mettre en œuvre, et/ou les risques encourus lors de la manipulation ou l'utilisation desdits composés/produits. D'après le Règlement (CE) no 1272/2008 dit "CLP", un conseil de prudence, ou "phrase P" est :

« Une phrase décrivant les mesures recommandées qu'il y a lieu de prendre pour réduire au minimum ou prévenir les effets néfastes découlant de l'exposition à une substance ou à un mélange dangereux en raison de son utilisation ou de son élimination. ».

Au sens de la présente invention, l'expression « produit/composé/ingrédient/excipient X comportant une phrase de conseil de prudence peu préoccupante » signifie que le produit/composé/ingrédient/excipient X affiche, sur son étiquette et/ou son emballage et/ou sa notice d'utilisation :

- pas ou peu d'avertissement/mise en garde avant son utilisation et/ou sur les risques encourus ; ou

- des avertissements/mises en garde peu ou pas préoccupant(e)s et/ou n'impliquant peu ou pas de risques ;

- pas ou peu d'appel à la prudence lors de son utilisation et/ou sur les risques encourus ;

où « pas ou peu » (ou « peu ou pas ») signifie que s'il est présent, le message d'attention est donné au titre du principe de précaution mais il est entendu que l'utilisation du produit X ne fait courir de risques (ou de risques significatifs) ni à l'utilisateur ni à l'environnement. De manière préférée, les avertissements/mises en garde indiquent à l'utilisateur que la manipulation et/ou l'utilisation des produits/composés/ingrédients/excipients implique(nt) peu de risques et/ou conséquences ou des risques/conséquences peu néfastes pour l'utilisateur et/ou l'environnement et/ou les zones/sites de traitements par les produits/composés/ingrédients/excipients. De manière encore plus préférée, les avertissements/mise en gardes sont essentiellement d'ordre général et/ou correspondent à des recommandations d'utilisation du produit/-composé/ingrédient/excipient, étant entendu qu'une utilisation conforme à ces recommandations n'implique aucun risque (ou aucun risque significatif) pour l'utilisateur et/ou l'environnement et/ou les zones/sites de traitement par les produits/composés/ingrédients/excipients.

Par « **tensioactif** » ou « **agent de surface** » (« **surfactant** » en anglais), on entend un composé qui modifie la tension superficielle entre deux surfaces. Les composés tensioactifs sont des molécules amphiphiles, c'est-à-dire qu'elles présentent deux parties de polarité différente, l'une lipophile (qui retient les matières grasses) est apolaire, l'autre hydrophile (miscible dans l'eau) est polaire. Ils permettent ainsi de solubiliser deux phases non miscibles, en interagissant avec la phase apolaire (c'est-à-dire lipophile donc hydrophobe) par sa partie hydrophobe ; et avec l'autre phase qui est polaire, par sa partie hydrophile.

De manière générale, un agent tensioactif est un composé qui est capable de modifier la tension superficielle d'un liquide, en particulier celle de l'eau, même lorsqu'il est utilisé en faible quantité. Ainsi, à l'exception des sels minéraux ou des bases (sauf l'ammoniac), la majorité des agents tensioactifs abaisse la tension superficielle de l'eau. Cependant pour connaitre leur caractère hydrophile ou hydrophobe majoritaire, on peut raisonner sur la valeur de leur HLB (« Hydrophilic-Lipophilic Balance », balance hydrophile/hydrophobe), qui estime numériquement cet équilibre entre partie lipophile et partie hydrophile.

Les tensioactifs peuvent être classés selon leur fonction et/ou leur typologie. Sur le plan fonctionnel, les tensioactifs comprennent par exemple :

- les détergents (ayant un pouvoir détersif et/ou nettoyant. Les détergents ont en général une HLB allant de 13 à 15) ;
- les agents de solubilisation (permettant de solubiliser des substances normalement insolubles dans le solvant utilisé. À très faible concentration, les tensioactifs sont capables de former des solutions vraies dans une phase aqueuse. Lorsque leur concentration dépasse une valeur particulière (la concentration micellaire critique), les molécules du tensioactif solubilisant se regroupent en agrégats appelés micelles. Ce regroupement se fait de sorte que leur pôle hydrophile soit le seul en contact avec les molécules d'eau. Par ce biais, la substance insoluble est prise en charge par les micelles et s'y insère. Les agents de solubilisation ont en général une HLB allant de 18 à 20) ;

- les agents moussants (favorisant la formation de mousse (dispersion d'un volume important de gaz dans un faible volume de liquide). Les agents moussants s'adsorbent à l'interface eau-air. Ils ont en général une HLB allant de 3 à 8) ;
- les agents mouillants (en diminuant la tension superficielle solide-liquide, les agents mouillants permettent un plus grand étalement du liquide sur le solide, favorisant ainsi le mouillage du solide par le liquide. Ce pouvoir mouillant participe à la mise en suspension de particules solides dans un liquide dans lequel elles sont insolubles, en chassant la couche d'air adhérant aux particules qui gêne la dispersion dans la phase liquide. Les agents mouillants ont en général une HLB allant de 13 à 15) ;
- les agents dispersants (permettant de fixer les particules hydrophobes contenues dans une solution hydrophile, telle que de l'eau, ce qui permet de créer une dispersion, c'est-à-dire une solution aqueuse contenant des particules en suspension. Ces agents préviennent la floculation des particules, c'est-à-dire leur regroupement en plus grosses parties, qui pourraient alors facilement sédimenter dans le fond de la solution. Les agents dispersants ont en général une HLB allant de 6 à 8) ;
- les agents émulsifiants (facilitant la formation d'une émulsion entre deux liquides non miscibles ; ayant en général une HLB inférieure à 6 pour une émulsion H/E (Huile dans Eau), ou supérieure à 10 pour une émulsion E/H (Eau dans Huile)) ;
- les tensioactifs antiseptiques (ayant un pouvoir bactériostatique ou bactéricide), et
- toute combinaison quelconque de ceux-ci.

Sur le plan typologique, les tensioactifs regroupent notamment les tensioactifs anioniques (leur partie hydrophile est chargée négativement), les tensioactifs cationiques (leur partie hydrophile est chargée positivement), les tensioactifs zwitterioniques ou amphotères (leur partie hydrophile comporte une charge positive et une charge négative, la charge globale est nulle), les tensioactifs non-ioniques (la molécule ne comporte aucune charge nette) et toute combinaison quelconque de ceux-ci.

Par « **tensioactif anionique** » on entend un tensioactif dont la partie hydrophile est chargée négativement. Les tensioactifs anioniques libèrent une charge négative (anion) en solution aqueuse. Ils ont une balance hydrophile/lipophile (HLB) relativement élevée (8 à 18) car ils ont une tendance hydrophile plus marquée. Parmi ce type de tensioactifs, on peut par exemple citer les savons, les dérivés sulfatés (exemples : laureth sulfate de sodium, laurylsulfate de sodium et laurylsulfate de triéthanolamine), les dérivés sulfonés (exemple : dioctylsufosuccinate de sodium), les lipoaminoacides, les taurates, les tensioactifs polymères polyélectrolytes anioniques, etc.

Les savons sont des sels d'acides gras, de formule générale RCOOM (R = longue chaîne hydrocarbonée, M = un métal, un alcalin ou une base organique). Selon la nature du groupe M, on distingue les savons alcalins (savons de $Na^+$, $K^+$, $NH_4^+$), les savons métalliques (notamment de calcium) et les savons organiques (notamment le savon de triéthanolamine, comprenant par exemple le stéarate de triéthanolamine).

Les tensioactifs anioniques peuvent être biosourcés et/ou biodégradables et/ou naturels et/ou comportant une phrase de conseil de prudence peu préoccupante et/ou acceptables sur le plan phytosanitaire. Le tensioactif anionique est de préférence essentiellement biosourcé. Le tensioactif anionique est de préférence choisi parmi les taurates, les polymères polyélectrolytes anioniques, et toute combinaison de ceux-ci.

Par « **taurate** » ou « **tauride** » ou « **tensioactif anionique appartenant à la famille des taurates** » on entend un tensioactif anionique comprenant une tête hydrophile constituée de N-méthyltaurine (acide 2-méthylaminoéthanesulfonique). Les taurates sont généralement composés d'un groupe de tête hydrophile, constitué de N-méthyltaurine (acide 2-méthylaminoéthanesulfonique), et d'un résidu lipophile, constitué d'un acide carboxylique à longue chaîne (acide gras), tous deux liés par une liaison amide. Les acides gras utilisés peuvent être par exemple choisis parmi les acides lauriques (C12), les acides myristiques (C14), les acides palmitiques (C16), les acides stéariques (C18), les acides oléiques (C18:1), les acides gras de noix de coco (C8 - C18), etc., et une combinaison quelconque de ceux-ci (telle qu'un mélange d'acides oléiques (C18:1) et d'acides gras de noix de coco (C8 - C18)). Le contre-ion peut par exemple être choisi parmi le sodium, l'ammonium, les métaux alcalins, les métaux alcalino-terreux, etc., et une combinaison quelconque de ceux-ci.

À température ambiante, les taurates sont généralement des masses pâteuses, qui se dissolvent bien dans l'eau et réagissent alors de manière neutre à légèrement alcaline (pH 7 - 8). Leur toxicité est très faible. Ils sont facilement biodégradables et ne sont pas sujets à la bioaccumulation.

En raison de leur liaison amide, les taurates sont stables dans une gamme de pH large (environ 2 - 10). Ce sont des tensioactifs très doux avec un bon pouvoir moussant et une grande stabilité de la mousse, même en présence de graisses et d'huiles. Les taurates conservent leurs bonnes propriétés de lavage même en eau dure ou en eau de mer. Les taurates possède en outre une bonne compatibilité avec les tensioactifs non ioniques et anioniques, conviennent à des concentrations d'environ 2 % en tant que co-tensioactifs.

Les taurates peuvent être biosourcés et/ou biodégradables et/ou naturels et/ou comportant une phrase de conseil de prudence peu préoccupante et/ou acceptables sur le plan phytosanitaire. Le tensioactif appartenant à la famille des taurates est de préférence essentiellement biosourcé.

Le taurate est de préférence choisi parmi les N-méthyltaurates et une combinaison quelconque de ceux-ci ; de préférence parmi les N-méthyltaurates de sodium, les N-méthyltaurates d'ammonium, les N-méthyltaurates de calcium, les N-méthyltaurates des métaux alcalins, les N-méthyltaurates de métaux alcalino-terreux, et toute combinaison de ceux-ci ; de préférence encore parmi les N-méthyltaurates de sodium. Avantageusement, le taurate comprend, consiste essentiellement en ou consiste en un N-méthyltaurate de sodium. Avantageusement, le taurate est choisi parmi les composés dont le nom de marque est l'Adinol™, de préférence l'Adinol™ OT-72 (Croda Inc., England) et une combinaison quelconque de ceux-ci.

Par « **tensioactif polymère polyélectrolyte anionique** » ou « **polymère polyélectrolyte anionique** » on entend un polymère qui porte des groupes ioniques ou ionisables, chargé négativement (polyanion). Des exemples de polymères polyélectrolytes anioniques comprennent notamment les pectines, les alginates, les poly(acide acrylique), les lignosulfonates, etc.

Les polymères polyélectrolytes anioniques peuvent être biosourcés et/ou biodégradables et/ou naturels et/ou comportant une phrase de conseil de prudence peu préoccupante et/ou acceptables sur le plan phytosanitaire. Le polymère polyélectrolyte anionique est de préférence essentiellement biosourcé.

Le tensioactif polymère polyélectrolyte anionique est de préférence choisi parmi les lignosulfonates, et une combinaison quelconque de ceux-ci. Avantageusement, le tensioactif polymère polyélectrolyte anionique comprend, consiste essentiellement en ou consiste en un lignosulfonate.

Par « **lignosulfonate** » ou « **lignine sulfonate** » on entend un polymère polyélectrolyte anionique ayant au moins un groupement sulfonate (de formule chimique $R-SO_3H$). Les lignosulfonates présentent des propriétés de conservateur et/ou d'agent dispersant. Les lignosulfonates ont un faible impact environnemental. Une analyse de cycle de vie (ACV) a montré qu'ils offrent une excellente alternative aux produits issus de la pétrochimie.

Les lignosulfonates peuvent être biosourcés et/ou biodégradables et/ou naturels et/ou comportant une phrase de conseil de prudence peu préoccupante et/ou acceptables sur le plan phytosanitaire. Ils peuvent notamment être obtenus à partir de pulpe de bois (il peut par exemple s'agir de sous-produits de la production de cellulose ou de pâte à papier). Le lignosulfonate est de préférence essentiellement biosourcé.

Le lignosulfonate est de préférence hydrosoluble (soluble dans l'eau).

Le lignosulfonate est de préférence choisi parmi les lignosulfonates de sodium, les lignosulfonates d'ammonium, les lignosulfonates de calcium, et toute combinaison de ceux-ci ; de préférence encore parmi les lignosulfonates de sodium. Avantageusement, le lignosulfonate comprend, consiste essentiellement en ou consiste en un lignosulfonates de sodium. Lorsque le lignosulfonate est choisi parmi les lignosulfonates de sodium, il présente de préférence la formule chimique $C_{20}H_{24}Na_2O_{10}S_2$.

Avantageusement, le lignosulfonate est choisi parmi les composés dont le nom de marque est l'Ufoxane 3A™ (Borregaard AS, Norway) et une combinaison quelconque de ceux-ci.

Par « **tensioactif non-ionique** », on entend un tensioactif dont la molécule ne comporte aucune charge nette (ne s'ionise pas dans l'eau). Les tensioactifs non-ioniques peuvent être classés en fonction de la nature de la liaison entre les parties hydrophile et hydrophobe de la molécule.

Les tensioactifs non-ioniques comprennent :

- les tensioactifs à liaison ester (R-CO-O-R'). Les tensioactifs à liaison ester comprennent les esters de glycol (exemple : stéarate d'éthylène glycol), les esters de glycérol (exemple : stéarate de glycérol, utilisé comme émulsionnant), les esters de polyoxyéthylèneglycol (obtenus par action d'oxyde d'éthylène sur un acide gras ou un mélange d'acides gras), les esters de sorbitane, les esters de sorbitane polyoxyéthyléniques (plus couramment appelés polysorbates) ;
- les tensioactifs à liaison éther (R-O-R'), tels que les éthers d'alcools gras et de polyoxyéthylèneglycol (souvent utilisés comme émulsionnants) ;
- les tensioactifs à liaison amide (R-CO-NH-R') ;
- les alcools éthoxylés non ioniques (dont la formule brute peut être la suivante : $R(OC_2H_4)_nOH$).

Les tensioactifs non-ioniques peuvent être biosourcés et/ou biodégradables et/ou naturels et/ou comportant une phrase de conseil de prudence peu préoccupante et/ou acceptables sur le plan phytosanitaire. Le tensioactif non-ionique est de préférence essentiellement biosourcé. Le tensioactif non-ionique est de préférence choisi parmi les alcools éthoxylés. Avantageusement, le tensioactif non-ionique comprend, consiste essentiellement en ou consiste en un alcool éthoxylé.

Par « **alcool éthoxylé** » on entend un composé obtenu par une réaction d'éthoxylation, c'est-à-dire par un procédé dans lequel l'oxyde d'éthylène réagit avec un alcool et/ou un phénol. L'oxyde d'éthylène, appelé aussi 1,2-Époxyéthane ou Oxirane, est un composé ayant pour formule chimique brute $C_2H_4O$. Les alcools éthoxylés peuvent être synthétisés selon la réaction chimique suivante :

Alcool (R-OH) + n unités d'oxyde d'éthylène (nC$_2$H$_4$O) -> R(OC$_2$H$_4$)$_n$OH.

Des exemples d'alcools éthoxylés sont : le glycolmonoalkyléther, le mercaptoéthanol, l'aminoéthanol, le diéthylène glycol, l'éthandiol, l'éthylène chlorhydrine, le cyanoéthanol, le polyéthylène glycol (PEG), le laurylalcooléthoxylate, le phénoléthoxylate, le nony-phénoléthoxylate.

Les alcools éthoxylés peuvent être biosourcés et/ou biodégradables et/ou naturels et/ou comportant une phrase de conseil de prudence peu préoccupante et/ou acceptables sur le plan phytosanitaire. L'alcool éthoxylé est de préférence essentiellement biosourcé.

L'alcool peut être primaire (dans lequel le groupe hydroxyle (-OH) est porté par un atome de carbone primaire, c'est-à-dire lié à un seul autre atome de carbone), secondaire (dans lequel le groupe hydroxyle est porté par un carbone secondaire, c'est-à-dire lié à deux autres carbones), tertiaire (dans lequel le groupe hydroxyle est porté par un atome de carbone tertiaire, c'est-à-dire lié à trois atomes de carbone) ou cyclique/phénolique (dans lequel le groupe hydroxyle est porté par un carbone présent dans un cycle). Les alcools éthoxylés peuvent donc être respectivement classés en alcools primaires éthoxylés, alcools secondaires éthoxylés, alcools tertiaires éthoxylés et alcools phénoliques/cycliques éthoxylés. L'alcool éthoxylé est de préférence choisi parmi les alcools secondaires éthoxylés non ioniques (par exemple obtenus à partir d'un alcool secondaire, ou comprenant un alcool secondaire)) et une combinaison quelconque de ceux-ci. Avantageusement, l'alcool éthoxylé comprend, consiste essentiellement en ou consiste en un alcool secondaire éthoxylé non ionique. L'alcool éthoxylé est de préférence choisi parmi les alcools secondaires éthoxylés non ioniques en C$_8$-C$_{18}$ et une combinaison quelconque de ceux-ci. Avantageusement, l'alcool éthoxylé comprend, consiste essentiellement en ou consiste en un alcool secondaire éthoxylé non ionique en C$_8$-C$_{18}$. L'alcool éthoxylé est de préférence encore un alcool secondaire éthoxylé non ionique en C$_8$-C$_{18}$. Avantageusement, l'alcool éthoxylé a pour formule brute C$_{12\text{-}14}$H$_{25\text{-}29}$O [CH$_2$CH$_2$O]$_x$H. Avantageusement, l'alcool éthoxylé est choisi parmi les composés dont le nom de marque est le Tergitol®, de préférence le Tergitol® 15-S-12 (Sigma-Aldrich, USA ou Dow Chemical, USA) et une combinaison quelconque de ceux-ci.

Par « **tensioactif cationique** » on entend un tensioactif dont la partie hydrophile est chargée positivement. Les tensioactifs cationiques libèrent une charge positive (cation) en solution aqueuse. Ils ont des propriétés bactériostatiques et émulsifiantes. Ce sont généralement des produits azotés (avec un atome d'azote chargé positivement). On peut notamment citer les sels d'ammonium quaternaire (tels que les sels d'alkyltriméthyl ammonium (exemple : bromure d'alkyltriméthyl ammonium), les sels d'alkylbenzyldiméthyl ammonium (exemple : chlorure de benzalkonium), les polymères organo-minéraux, les amines protonées, etc.

Les tensioactifs cationiques peuvent être biosourcés et/ou biodégradables et/ou naturels et/ou comportant une phrase de conseil de prudence peu préoccupante et/ou acceptables sur le plan phytosanitaire. Le tensioactif cationique est de préférence essentiellement biosourcé.

Le tensioactif cationique est de préférence choisi parmi les polymères organo-minéraux, et une combinaison quelconque de ceux-ci. Avantageusement, le tensioactif cationique comprend, consiste essentiellement en ou consiste en un polymère organo-minéral.

Par « **polymère organo-minéral** » ou « **polymère hybride** » on entend un polymère comprenant des composants organiques et inorganiques. Les polymères organo-minéraux comprennent par exemple les silanes, les siloxanes, etc. Les polymères organo-minéraux peuvent être biosourcés et/ou biodégradables et/ou naturels et/ou comportant une phrase de conseil de prudence peu préoccupante et/ou acceptables sur le plan phytosanitaire. Le polymère organo-minéral est de préférence essentiellement biosourcé. Le polymère organo-minéral est de préférence choisi parmi les siloxanes et toute combinaison quelconque de ceux-ci.

Par « **siloxane** » on entend une classe de composés du silicium (organosilicones), ayant un motif de répétition basé sur le silicium et l'oxygène (formule chimique : -[O-Si(CH$_3$)$_2$]$_n$-). La formule empirique des siloxanes est R$_2$SiO, où R est un groupe radical qui peut être organique. Ces composés peuvent être des hybrides organiques et inorganiques. Les chaînes organiques confèrent au composé des propriétés hydrophobes alors que la chaîne principale -Si-O-Si-O- est purement inorganique. Des exemples de siloxanes comprennent notamment les alkylsiloxanes, tels que les diméthylsiloxanes (de formule [SiO(CH3)2]n), les diphénylsiloxanes (de formule [SiO(C6H5)2]n), les polysiloxanes (siloxanes polymérisés, tels que les silicones), les polydiméthylsiloxanes (PDMS), etc. Le siloxane est de préférence hydrosoluble (soluble dans l'eau).

Les siloxanes peuvent être biosourcés et/ou biodégradables et/ou naturels et/ou comportant une phrase de conseil de prudence peu préoccupante et/ou acceptables sur le plan phytosanitaire. Le siloxane est de préférence essentiellement biosourcé.

Le siloxane est de préférence choisi parmi les alkylsiloxanes et une combinaison quelconque de ceux-ci ; de préférence encore choisi parmi les polydiméthylsiloxanes (PDMS) et une combinaison quelconque de ceux-ci. Avantageusement, le siloxane comprend, consiste essentiellement en ou consiste en un polydiméthylsiloxane, de préférence absorbé. Avantageusement, le siloxane a pour formule brute (C2H6Osi)$_n$. Avantageusement, le siloxane est choisi parmi les composés dont le nom de marque est le Rhodorsil®, de préférence le Rhodorsil® EP 6703 (Solvay, Belgique) et une combinaison quelconque de ceux-ci.

Par « **polymère hydrosoluble** » on entend un polymère pouvant former une solution dans l'eau. Les polymères hydrosolubles comprennent des groupes hydrophiles lui conférant, entre autres, leur solubilité dans l'eau. Ces groupes hydrophiles peuvent être :

- dans la chaîne principale : il peut alors s'agir des éléments oxygène et azote qui peuvent former des liaisons hydrogène ;
- dans les chaines latérales : il peut alors s'agir des fonctions hydroxyle (-OH), amine (-NH3), sels d'acides organiques (-COO-), etc. et des combinaisons quelconques de ceux-ci.

Les polymères hydrosolubles peuvent être :

- des polymères naturels (exemples : dextrine, caséine, dextrane, pullulane) ;
- des polymères artificiels (exemples : les éthers de cellulose) ;
- des polymères synthétiques ;
- des polyéthers : polyéthylène glycol (PEG) ;
- vinyliques : poly(alcool vinylique) (PVAL), polyacrylamide, polyvinylpyrrolidone (PVP), etc.

Les polymères hydrosolubles peuvent également être biosourcés et/ou biodégradables et/ou naturels et/ou comportant une phrase de conseil de prudence peu préoccupante et/ou acceptables sur le plan phytosanitaire.

Les polymères hydrosolubles comprennent par exemple les polymères polyélectrolytes anioniques (tels que les lignosulfonates), les polymères organo-minéraux (tels que les siloxanes), etc.

Par « **argile** » ou « **minéral argileux** » on entend une matière rocheuse naturelle à base de silicates ou d'aluminosilicates hydratés (ou silicate d'aluminium hydraté) de structure lamellaire, provenant en général de l'altération de silicates à charpente tridimensionnelle, tels que les feldspaths. Les argiles présentent des propriétés purifiantes, astringentes et antiseptiques.

Les argiles sont essentiellement naturelles et peuvent être acceptables sur le plan phytosanitaire. L'argile est de préférence choisie parmi les silicates, et une combinaison quelconque de ceux-ci. Avantageusement, l'argile comprend, consiste essentiellement en ou consiste en un silicate.

Par « **silicate** » on entend un sel combinant le dioxyde de silicium SiO2 à d'autres oxydes métalliques. Les silicates comprennent notamment les minéraux ayant une composition de silicate, les polymorphes de la silice, les phyllosilicates etc. Les « **phyllosilicates** » sont des minéraux du groupe des silicates construits par empilement de couches tétraédriques (« T ») où les tétraèdres partagent trois sommets sur quatre (les oxygènes « basaux »), le quatrième sommet (l'oxygène « apical ») étant relié à une couche octaédrique (« O ») occupée par des cations différents (Al, Mg, Fe, Ti, Li, etc.). Des exemples de phyllosilicates comprennent notamment les composés appartenant au groupe des kaolinites. Par « kaolinite » on entend une espèce minérale composée de silicate d'aluminium hydraté. Le groupe de la kaolinite comprend notamment les minéraux isostructuraux suivants :

- la dickite $Al_2Si_2O_5(OH)_4$,
- l'endellite $Al_2Si_2O_5(OH)_4 \cdot 2 H_2O$ ;
- la halloysite $Al_2Si_2O_5(OH)_4$ avec des traces de : Ti, Ca, Na, K, Fe, Cr, Mg, Ni, et/ou Cu ;
- la kaolinite $Al_2Si_2O_5(OH)_4$ ;
- la nacrite $Al_2Si_2O_5(OH)_4$ ;
- l'odinite $(Fe,Mg, Al,Fe,Ti,Mn)_{2.5}(Si,Al)_2O_5(OH)_4$.

Le silicate est de préférence choisi parmi les phyllosilicates et une combinaison quelconque de ceux-ci; de préférence encore choisi parmi les kaolinites et une combinaison quelconque de ceux-ci. Avantageusement, le silicate comprend, consiste essentiellement en ou consiste en un phyllosilicate, de préférence une kaolinite. Avantageusement, le silicate est une kaolinite sédimentaire provenant du bassin des Charentes, ayant de préférence pour formule brute $Al_2Si_2O_5(OH)_4$. Avantageusement, le siloxane est choisi parmi les composés dont le nom de marque est l'Argirec™, de préférence l'Argirec™ B22 (LEHVOSS Group, Allemagne) et une combinaison quelconque de ceux-ci.

Par « **glycérol** » ou « **glycérine** » (ces deux termes étant ici considérés synonymes et interchangeables) ou encore « **1,2,3-propanetriol** », on entend un composé chimique de formule $HOH_2C-CHOH-CH_2OH$. A température ambiante ou tempérée (10°C-40°C), il se présente sous la forme d'un liquide incolore, visqueux et inodore, très faiblement toxique sous une forme concentrée, au goût sucré. Le glycérol peut rester liquide à des températures relativement basses (inférieures à 10°C). Sa molécule possède trois hydroxyles correspondant à trois fonctions alcool responsables de sa solubilité dans l'eau et de sa nature hygroscopique.

Par « **teneur** » on entend la quantité d'un objet (tel que substance, composé, ingrédient, effet, activité, etc.) contenu dans un mélange (tel qu'une composition), en pourcentage. La teneur peut par exemple être exprimée en poids par rapport au poids total du mélange ou de la composition.

Par « **essentiellement dépourvu du composé/ingrédient** » ou « **composition essentiellement dépourvue du composé/ingrédient** » « **essentiellement exempt du composé/ingrédient** » ou « **composition essentiellement exempte du composé/ingrédient** » on entend un mélange ou une composition qui contient une teneur en ledit composé ou ingrédient inférieure à 15 % en poids par rapport au poids au poids total du mélange ou de la composition, de préférence une teneur en composé/ingrédient inférieure à 10 % en poids par rapport au poids au poids total du mélange ou de la composition, de préférence encore inférieure à 7,5 % en poids, de préférence encore inférieure à 5 % en poids, de manière préférentielle inférieure à 2,5 % en poids, de manière plus préférentielle encore inférieure 1 % en poids, mieux encore inférieure à 0,5 % en poids, mieux encore inférieure à 0,4 % en poids, mieux encore inférieure à 0,3 % en poids, mieux encore inférieure à 0,2 % en poids, mieux encore inférieure à 0,1 % en poids, mieux encore inférieure à 0,09 % en poids, mieux encore inférieure à 0,05 % en poids, mieux encore inférieure à 0,01 % en poids, mieux encore inférieure à 0,005 % en poids, mieux encore inférieure à 0,001 % en poids, par rapport au poids au poids total du mélange ou de la composition.

Par « **fermentation** », on entend un processus métabolique effectué par un microorganisme vivant, notamment une bactérie, comprenant la conversion (ou la dégradation) partielle ou totale d'un ou plusieurs substrats en au moins un métabolite ou produit de fermentation, le plus souvent par oxydoréduction. La fermentation peut être réalisée en atmosphère aérobie (en présence de dioxygène, $O_2$) ou en atmosphère anaérobie (en absence de dioxygène).

On peut distinguer plusieurs types de fermentations en fonction du ou des produit(s) de fermentation (appelé aussi métabolite) obtenu(s) par la mise en œuvre de ce processus métabolique. On parle par exemple de **fermentation alcoolique** lorsque les produits de fermentation obtenus consistent en un mélange d'au moins un alcool, tel que l'éthanol, et de gaz (le plus souvent le gaz carbonique, également appelé anhydride carbonique, ou dioxyde de carbone, de formule chimique $CO_2$). On peut parler de fermentation mixte lorsqu'un mélange plus complexe de produits de fermentation est obtenu. Ce mélange peut par exemple comprendre un ou plusieurs alcools, tels que l'éthanol, le butanol ; un ou plusieurs acides carboxyliques ou des sels de ceux-ci, tels que l'acide acétique ou l'acétate, l'acide formique ou le formate, l'acide butyrique ; de l'acide lactique ou du lactate ; un ou plusieurs gaz, tels que le dihydrogène ($H_2$), le dioxyde de carbone ($CO_2$), le monoxyde de carbone (CO) ou le dioxygène ($O_2$). La fermentation est de préférence alcoolique. La fermentation alcoolique est de préférence la fermentation de végétaux. La fermentation alcoolique est de préférence la fermentation du vin. La fermentation du vin comprend, consiste en, consiste essentiellement en ou est la transformation d'au moins une partie d'une vigne (de préférence du fruit de la vigne, c'est-à-dire du raisin), en vin ou en autre alcool. De préférence, la fermentation comprend au moins la formation de dioxyde de carbone (de formule chimique $CO_2$).

Par « **composition solide** » ou « **sous la forme solide** » ou « **à l'état solide** » on entend une composition ou un mélange qui n'est ni à l'état liquide, ni à l'état gazeux. Les compositions solides peuvent se présenter sous la forme de poudres, de granules, de comprimés, ou même d'assemblages de plus grande taille (tels que des agrégats, des pains, des aglomérats, etc.). La composition solide est de préférence essentiellement dépourvue de liquide, de préférence dépourvue de liquide. La composition solide est de préférence essentiellement dépourvue d'eau, de préférence dépourvue d'eau.

Par « **nanoparticule** » on entend un objet dont les trois dimensions sont à l'échelle nanométrique, c'est-à-dire une particule dont le diamètre nominal est inférieur à 100 nm environ (par exemple tel que défini par la norme ISO TS/27687).

Par « **poudre** » on entend un solide présent sous forme de petits morceaux, en général de taille inférieure au dixième de millimètre (100 $\mu$m).

Par « **granulat** » ou « **granule** » ou « **granulé** » on entend un solide présent sous forme de petits morceaux ou de grain, en général de taille supérieure ou égale au dixième de millimètre (100 $\mu$m), mais inférieure au dixième de centimètre (10 cm).

Par « **comprimé** » on entend une forme solide obtenue en agglomérant par compression un volume de particules (poudre ou granule). Le comprimé peut être enrobé, pelliculé, effervescent, dispersible, ou une combinaison quelconque de ceux-ci.

Par « **solution aqueuse** » on entend un mélange homogène obtenu en dissolvant au moins une substance (ou espèce chimique ou ingrédient ou composé), solide, liquide ou gazeuse, dans de l'eau. Une solution aqueuse est donc une phase liquide contenant plusieurs espèces chimiques, dont une ultra-majoritaire, l'eau ($H_2O$, le solvant), et au moins une espèce ultra-minoritaire, le soluté (c'est-à-dire la substance, l'espèce chimique, l'ingrédient ou le composé dissout(e)). Avantageusement, la solution aqueuse est un liquide, une suspension, une émulsion ou une solution vraie d'un produit, dilué(e) dans l'eau.

Par « **solution aqueuse pulvérisable** » on entend une solution aqueuse pouvant être projetée en fines gouttelettes liquides ou sous forme de poudre. Avantageusement, la solution aqueuse pulvérisable est en suspension, en émulsion ou en solution dans un milieu gazeux, de préférence dans un gaz inerte. Avantageusement, la solution aqueuse pulvérisable est présentée sous une forme de pulvérisateur, de vaporisateur, d'aérosol, ou de spray.

**EP 4 358 721 B1**

Par « **pulvérisation** » on entend la projection d'une solution aqueuse en fines gouttelettes liquides, sous forme d'aérosol, sous forme de vapeur, ou sous forme de poudre, sur un objet, de préférence une culture, de préférence une vigne.

Par « **ingrédient d'origine naturelle »** ou « **excipient d'origine naturelle** », on entend un ingrédient ou un composé ou un excipient qui provient de la nature, c'est-à-dire qu'il a été obtenu à partir d'un élément naturel (par exemple un végétal, un champignon, un minéral, un insecte, un animal).

Par « **ingrédient biosourcé** » ou « **excipient biosourcé** », on entend un ingrédient ou un composé ou un excipient qui provient d'un organisme vivant, c'est-à-dire qu'il a été obtenu à partir d'un organisme vivant (par exemple un microorganisme, une bactérie, un végétal, une algue, un champignon, une levure, un insecte, un animal), et/ou produit/sécrété par un organisme vivant et/ou issu d'un organisme vivant. Un ingrédient/composé/excipient biosourcé peut donc être obtenu à partir de la biomasse. Un ingrédient/composé/excipient biosourcé peut notamment être issu de la biomasse d'origine bactérienne, fongique, animale ou végétale. Un ingrédient/composé/excipient biosourcé peut notamment être obtenu à l'aide d'une enzyme issue d'un organisme vivant et/ou produite/sécrétée par un organisme vivant et/ou obtenue à partir d'un organisme vivant. Un ingrédient/composé/excipient biosourcé est donc obtenu par un procédé essentiellement biologique, de préférence par un procédé biologique.

Par « **ingrédient biodégradable** » ou « **excipient biodégradable** », on entend un ingrédient ou une substance ou un composé ou un excipient pouvant subir une biodégradation. La biodégradation est la décomposition de matières organiques par des organismes vivants, tels que des micro-organismes comme les bactéries, des champignons ou des algues. Un ingrédient ou une substance ou un composé ou un excipient est biodégradable lorsqu'il peut se décomposer en matières et/ou en éléments dépourvus d'effet dommageable sur le milieu naturel, sous l'action d'organismes vivants, tels que des micro-organismes comme les bactéries, des champignons ou des algues. Les matières et/ou éléments dépourvus d'effet dommageable sur le milieu naturel comprennent, consistent essentiellement en ou consiste en le dioxyde de carbone, le méthane, l'eau et la biomasse.

Par « **composé/ingrédient essentiellement biodégradable»** ou « **excipient essentiellement biodégradable** » on entend un composé ou ingrédient ou un excipient dont au moins 80 % en poids par rapport au poids total du composé ou ingrédient est biodégradable, de préférence au moins 85 % en poids, de préférence au moins 90 % en poids, de préférence encore au moins 92,5 % en poids, de préférence encore au moins 95% en poids, de manière préférentielle au moins 97,5 % en poids, de manière plus préférentielle encore au moins 99 % en poids par rapport au poids total du composé ou ingrédient est biodégradable. En d'autres termes, un composé/ingrédient/excipient essentiellement biodégradable est un composé/ingrédient/excipient dont la quantité résiduelle, non dégradée, après biodégradation, est inférieure à 20 % en poids par rapport au poids au poids total du composé/ingrédient/excipient avant biodégradation, de préférence inférieure à 15 % en poids, de préférence inférieure à 10 % en poids, de préférence encore inférieure à 7,5 % en poids, de préférence encore inférieure à 5 % en poids, de manière préférentielle inférieure à 2,5 % en poids, de manière plus préférentielle encore inférieure 1 % en poids, mieux encore inférieure à 0,5 % en poids, mieux encore inférieure à 0,4 % en poids, mieux encore inférieure à 0,3 % en poids, mieux encore inférieure à 0,2 % en poids, mieux encore inférieure à 0,1 % en poids, mieux encore inférieure à 0,09 % en poids, mieux encore inférieure à 0,05 % en poids, mieux encore inférieure à 0,01 % en poids, mieux encore inférieure à 0,005 % en poids, mieux encore inférieure à 0,001 % en poids, par rapport au poids au poids total du composé/ingrédient avant biodégradation.

Par « **composé/ingrédient/excipient essentiellement biosourcé** » on entend un composé ou ingrédient ou excipient dont au moins 80 % en poids par rapport au poids total du composé ou ingrédient ou excipient est biosourcé, de préférence dont au moins 85 % en poids, de préférence dont au moins 90 % en poids, de préférence encore dont au moins 92,5 % en poids, de préférence encore dont au moins 95% en poids, de manière préférentielle dont au moins 97,5 % en poids, de manière plus préférentielle encore dont au moins 99 % en poids, mieux encore dont au moins 99,1 % en poids, mieux encore dont au moins 99,2 % en poids, mieux encore dont au moins 99,3 % en poids, mieux encore dont au moins 99,4 % en poids, mieux encore dont au moins 99,5 % en poids, mieux encore dont au moins 99,6 % en poids, mieux encore dont au moins 99,7 % en poids, mieux encore dont au moins 99,8 % en poids, mieux encore dont au moins 99,9 % en poids, mieux encore dont au moins 99,95 % en poids, mieux encore dont au moins 99,99 % en poids par rapport au poids total du composé ou ingrédient ou excipient est biosourcé.

Par « **prévention** » ou « **prévention d'une maladie »** ou « **prévention de l'apparition d'une maladie** » on entend la diminution du risque d'apparaitre, de développer ou d'amplifier une maladie, les causes d'une maladie, les symptômes d'une maladie, les effets (ou conséquences, de préférence les effets/conséquences néfastes, délétères) d'une maladie, ou une combinaison quelconque de ceux-ci ; et/ou le fait de retarder l'apparition, le développement ou l'amplification d'une maladie, les causes d'une maladie, les symptômes d'une maladie, les effets (ou conséquences, de préférence les effets/conséquences néfastes, délétères) d'une maladie, ou une combinaison quelconque de ceux-ci.

Par « **traitement** » ou « **traitement d'une maladie »,** ou « **contrôle d'un pathogène** », ou « **contrôle d'une maladie** », on entend la diminution, l'inhibition, la stabilisation et/ou la disparition d'une maladie, des causes d'une maladie, des symptômes d'une maladie, des effets (ou conséquences, de préférence les effets/conséquences néfastes, délétères) d'une maladie, ou d'une combinaison quelconque de ceux-ci.

Par « **champignon** » ou « **fungus »** ou **« fungi** » on entend ici un organisme eucaryote appartenant au règne des Fungi (aussi appelé Mycota ou Mycètes ou fonge), au règne des Oomycota (appelés aussi pseudochampignons ; comprennent en particulier la division des Oomycetes) ou à la classe de Plasmodiophoromycetes. Les champignons constituent un large groupe diversifié, depuis des organismes unicellulaires (levures) ou pluricellulaires (moisissures) microscopiques, jusqu'aux « champignons supérieurs » dotés le plus souvent d'un pied et d'un chapeau (champignons macroscopiques). Les champignons sont notamment caractérisés par l'existence simultanée d'une paroi cellulaire périphérique et de vacuoles turgescentes dans le cytoplasme, leur corps végétatif non différencié et leur paroi peptido-polyosidique, ainsi que l'absence de chloroplastes, de chlorophylle et d'amidon. Ce sont des organismes hétérotrophes au carbone.

Par « **champignon pathogène** » on entend un champignon ou un autre organisme filamenteux appartenant à des espèces de champignons parasites qui provoquent des maladies chez des organismes vivants. La maladie peut être une maladie cryptogamique (aussi appelée maladie fongique) ou une mycose. Une maladie cryptogamique, ou maladie fongique, est une maladie causée à un végétal, notamment une plante, par un champignon ou un autre organisme filamenteux (cas des Oomycetes) parasite. Lorsque c'est un animal qui est atteint, on parle plutôt de mycose.

Le champignon pathogène est de préférence un champignon phytopathogène.

Par « **champignon phytopathogène** » on entend des espèces de champignons parasites qui provoquent des maladies cryptogamiques (dites également maladies fongiques) chez les plantes. Ces champignons appartiennent aux différents groupes du règne des eumycocètes ou « champignons vrais » : ascomycètes, basidiomycètes, chytridiomycètes, zygomycètes et deutéromycètes (champignons imparfaits). Les agents pathogènes responsables de maladies cryptogamiques comprennent aussi des protistes, tels que les plasmodiophoromycètes (dont les genres les plus importants sont *Plasmodiophora* et Spongospora), et les oomycètes (qui comprennent notamment la famille des Peronosporaceae (agents des mildious)).

Le champignon pathogène (ou phytopathogène) est de préférence choisi parmi :

- les espèces causant les maladies majeures des vignobles, telles que le mildiou de la vigne (*Plasmopara viticola*), l'oïdium de la vigne (*Uncinula necator* et/ou *Erysiphe necator*) et la pourriture de la vigne (*Botrytis cinerea*),
- les espèces causant les maladies majeures des solanacées, telles que le mildiou des solanacées (*Phytophthora parasitica* et/ou *Phytophtora infestans*), et
- les espèces causant les maladies majeures des cucurbitacées, telles que le mildiou des cucurbitacées (*Pseudoperonospora cubensis*),

ledit champignon pathogène étant de préférence le mildiou de la vigne *(Plasmopara viticola).*

De préférence encore, le champignon pathogène (ou phytopathogène) est choisi parmi les espèces appartenant à la famille des Peronosporaceae (agents des mildious)), en particulier le mildiou de la vigne *(Plasmopara viticola).*

Par « **mildiou de la vigne** » on entend un champignon (ou pseudochampignon) appartenant à l'espèce *Plasmopara viticola,* de la famille des Peronosporaceae et de la classe des Oomycetes. Le mildiou de la vigne existe sous la forme de spores libres ou de mycélium ne pouvant croître qu'à l'intérieur des tissus de la vigne qu'il parasite. *Plasmopara viticola* est un endoparasite obligatoire qui se développe essentiellement dans les tissus verts de la vigne et en particulier dans le parenchyme des feuilles. Il vit aux dépens des tissus qu'il parasite et qu'il finit par détruire. Au cours de son cycle de développement, *P. viticola* reste essentiellement sous forme diploïde. P. *viticola* se caractérise aussi par le fait que les filaments de son mycélium n'ont pas de cloisons, que la paroi est cellulosique (à la différence des Eumycètes qui contiennent de la chitine) et que les zoospores sont biflagellées.

Par « **oïdium de la vigne** » on entend un champignon appartenant à l'espèce *Erysiphe necator. Erysiphe necator* est un champignon filamenteux microscopique de la division des Ascomycètes, parasite obligatoire strictement inféodé aux Vitaceae, essentiellement le genre *Vitis.* Il est responsable de l'oïdium de la vigne (également nommé blanc au Canada). Il est également connu sous le nom *d'Uncinula necator.* L'oïdium est un ectoparasite qui se manifeste à la surface de tous les organes herbacés en croissance de la vigne, notamment sur les jeunes rameaux herbacés, sur les feuilles, sur les grappes (de raisin) et sur les sarments.

Par « **pourriture de la vigne** » ou « **pourriture grise de la vigne** » on entend un champignon haploïde appartenant à l'espèce *Botrytis cinerea,* de la famille des Sclerotiniaceae, de la division des Ascomycota. Ce champignon phytopathogène est responsable de la pourriture grise, maladie cryptogamique qui sévit sur plusieurs cultures d'intérêt agronomique majeur comme la vigne, le tournesol, la tomate, la fraise. L'infection débute par la germination des conidies en présence d'eau et de substances nutritives trouvées sur des organes abîmés comme les débris d'organes floraux et parfois sur des feuilles. La contamination se propage ensuite aux baies/fruits. Avant la véraison, l'infection des baies reste latente, sans symptômes apparents, puis à partir de la véraison, le mycélium déjà présent commence à croître.

Par « **mildiou des solanacées** » on entend un champignon (ou pseudochampignon) appartenant à l'espèce *Phytophthora parasitica* et/ou l'espèce *Phytophtora infestans,* de la famille des Peronosporaceae ou Pythiaceae et de la classe des Oomycetes. Le mildiou des solanacées se présente sous la forme de spores qui se développent sur les feuilles, se diffusant dans la culture à température moyenne (au-delà de 10°C).

Par « **mildiou des cucurbitacées** » on entend un champignon (ou pseudochampignon) appartenant à l'espèce *Pseudoperonospora cubensis,* de la famille des Peronosporaceae et de la classe des Oomycetes. Le mildiou des cucurbitacées est un parasite biotrophe obligatoire, dépendant absolument de sa plante-hôte pour sa croissance et sa survie. Il ne peut survivre en dehors de son hôte que sous forme d'oospores.

Dans le cadre de la présente invention, le terme « **pas ou peu de X »** ou « **peu ou pas de X »** doit être compris comme :

- soit l'absence de X ;
- soit une présence non détectable et/ou non significative de X.

**Composition**

Dans le cadre de la présente invention, les Inventeurs ont mis au point une nouvelle composition à base de bicarbonate de potassium. Les Inventeurs ont ainsi mis en évidence, de manière tout à fait surprenante, qu'une composition comprenant du bicarbonate de potassium, et au moins un excipient choisi parmi les tensioactifs anioniques appartenant à la famille des taurates, permet de protéger et/ou traiter efficacement les cultures, en particulier les vignes, les cucurbitacées, les solanacées, ou toute combinaison de celles-ci, de préférence les vignes. Les données montrent que, de manière inattendue, l'application de cette composition permet de protéger et/ou traiter les cultures (telles que les vignes, les cucurbitacées, les solanacées, ou toute combinaison de celles-ci, de préférence les vignes) contre les champignons phytopathogènes, notamment l'oïdium, le mildiou et la pourriture de la vigne et/ou des cucurbitacées et/ou des solanacées avec une grande efficacité. Les Inventeurs ont notamment montré qu'une telle composition présente un effet antifongique significatif permettant d'inhiber fortement la croissance du champignon responsable du mildiou de la vigne. De manière surprenante, cette nouvelle formulation présente une amélioration significative des propriétés d'adhérence, d'étalement, de résistance au lessivage et de longévité sur les feuilles de vignes, de cucurbitacées, de solanacées, ou toute combinaison de celles-ci, de préférence de vignes. Les Inventeurs ont également mis en évidence un effet protecteur durable dans le temps et résistant au lessivage. Ainsi, la fréquence d'application du traitement peut être réduite au maximum, limitant les frais et l'impact sur l'environnement. Les données montrent en outre qu'une telle composition ne présente pas de phytotoxicité pour les cultures.

La présente invention concerne donc une nouvelle composition comprenant :

- du bicarbonate de potassium, et
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante.

La présente invention concerne également une composition constituée essentiellement de, ou consistant essentiellement en, ou consistant en :

- du bicarbonate de potassium ; et
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante.

Avantageusement, le bicarbonate de potassium et/ou l'excipient est/sont essentiellement d'origine naturelle. Selon un mode de réalisation préféré, le bicarbonate de potassium et/ou l'excipient est/sont essentiellement biosourcé(s). Selon un mode de réalisation préféré, le bicarbonate de potassium et/ou l'excipient est/sont biosourcé(s). Selon un mode de réalisation, combinable avec l'un quelconque des modes réalisation présentés ici, l'excipient est essentiellement biodégradable, préférentiellement l'excipient est biodégradable. Selon un mode de réalisation préféré, le bicarbonate de potassium et/ou l'excipient est/sont essentiellement biodégradable(s). Selon un mode de réalisation, combinable avec l'un quelconque des modes réalisation présentés ici, l'excipient est essentiellement d'origine naturelle, préférentiellement l'excipient est d'origine naturelle. Selon un mode de réalisation préféré, le bicarbonate de potassium et/ou l'excipient est/sont essentiellement d'origine naturelle. Selon un mode de réalisation, combinable avec l'un quelconque des modes réalisation présentés ici, l'excipient comporte une phrase de conseil de prudence peu préoccupante. Selon un mode de réalisation préféré, le bicarbonate de potassium et/ou l'excipient comporte(nt) une phrase de conseil de prudence peu préoccupante.

Les données obtenues par les Inventeurs montrent en outre que la présence d'au moins un excipient additionnel choisi parmi les tensioactifs polymères polyélectrolytes anioniques, les tensioactifs non-ioniques, et les tensioactifs cationiques, permet d'accroître davantage l'efficacité antifongique de la composition, la durabilité de la protection et la résistance au lessivage. Avantageusement, la composition selon l'invention comprend donc en outre au moins un excipient additionnel choisi parmi les tensioactifs polymères polyélectrolytes anioniques, les tensioactifs non-ioniques, les tensioactifs cationiques, et toute combinaison de ceux-ci.

La présente invention concerne donc également une nouvelle composition comprenant, ou consistant essentiellement en, ou consistant en :

- du bicarbonate de potassium ;
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante ; et
- au moins un excipient additionnel choisi parmi les tensioactifs polymères polyélectrolytes anioniques, les tensioactifs non-ioniques, les tensioactifs cationiques, et toute combinaison de ceux-ci ;

  les tensioactifs polymères polyélectrolytes anioniques étant choisis de préférence parmi les sulfonates, et toute combinaison de ceux-ci ; les tensioactifs non-ioniques étant de préférence choisis parmi les alcools éthoxylés, et toute combinaison de ceux-ci ; les tensioactifs cationiques étant de préférence choisis parmi les polymères organo-minéraux, et toute combinaison de ceux-ci ;
  ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante.

Les données mettent en évidence que l'efficacité antifongique de la composition, la durabilité de la protection, et la résistance au lessivage, sont particulièrement élevées lorsque le tensioactif polymère polyélectrolyte anioniques comprend un sulfonate, le tensioactif non-ionique comprend un alcool éthoxylé, et/ou le tensioactif cationique comprend un polymère organo-minéral.

Avantageusement, la composition selon l'invention comprend donc en outre au moins un excipient additionnel choisi parmi les tensioactifs polymères polyélectrolytes anioniques, choisis parmi les sulfonates, et toute combinaison de ceux-ci ; les tensioactifs non-ioniques choisis parmi les alcools éthoxylés, et toute combinaison de ceux-ci ; les tensioactifs cationiques choisis parmi les polymères organo-minéraux, et toute combinaison de ceux-ci ; et toute combinaison de ceux-ci.

Ainsi, dans un mode de réalisation particulièrement préféré, la composition comprend, ou consiste essentiellement en, ou consiste en :

- du bicarbonate de potassium ;

- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante ; et

- au moins un excipient additionnel choisi parmi les tensioactifs polymères polyélectrolytes anioniques, les tensioactifs non-ioniques, les tensioactifs cationiques, et toute combinaison de ceux-ci ;

  les tensioactifs polymères polyélectrolytes anioniques étant choisis parmi les sulfonates, et toute combinaison de ceux-ci ; les tensioactifs non-ioniques étant choisis parmi les alcools éthoxylés, et toute combinaison de ceux-ci ; les tensioactifs cationiques étant choisis parmi les polymères organo-minéraux, et toute combinaison de ceux-ci ;
  ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante.

La composition peut se présenter sous une forme liquide ou sous une forme solide (telle que poudre, granules, comprimés). De manière préférée, la composition est sous une forme solide. En effet, les Inventeurs ont montré que la composition peut être utilisée efficacement pour protéger et/ou traiter les cultures sous une forme liquide ou sous une forme solide. La composition peut être appliquée sur les cultures sous forme liquide, ou sous forme solide (en particulier sous forme de poudre). Lorsque la composition est appliquée sous forme liquide, elle peut être présentée sous forme liquide directement prête à l'emploi, ou à diluer (forme concentrée). Lorsque la composition est appliquée sous forme liquide, elle peut également être présentée sous forme solide et pourra alors être diluée/dissoute/mise en solution/solubilisée dans un solvant adapté avant utilisation (par exemple extemporanément, ou pour un stockage à court, moyen ou long terme avant utilisation). La composition présente en effet une efficacité antifongique quelle que soit la forme de la composition.

Les Inventeurs ont notamment montré que la composition est particulièrement stable et adaptée à un stockage à moyen et long terme sous cette forme. Selon un mode de réalisation préféré, la composition selon l'invention se présente sous une forme solide, de préférence sous la forme d'une poudre, de comprimés, de granules, ou une combinaison quelconque de ceux-ci. De préférence encore, la composition se présente sous la forme d'une poudre ou de granules, ou une combinaison quelconque de celles-ci.

Selon un mode de réalisation avantageux de la composition (sous forme solide ou liquide, en particulier de la composition sous forme solide) :

- la teneur en bicarbonate de potassium va de 5% à 90% en poids par rapport au poids total de la composition, de préférence de 10% à 90%, de préférence de 15% à 85%, de préférence de 20% à 80%, de préférence de 40% à 70%, de préférence de 50 à 65% en poids par rapport au poids total de la composition ; et/ou
- la teneur en tensioactifs anioniques appartenant à la famille des taurates va de 0,1% à 30% en poids par rapport au poids total de la composition, de préférence de 0,5% à 20%, de préférence de 1% à 15%, de préférence de 2% à 10%, de préférence de 3% à 6%, en poids par rapport au poids total de la composition.

Selon un mode de réalisation avantageux de la composition (sous forme solide ou liquide, de préférence la composition est une composition solide, avantageusement, une poudre, des granules, des comprimés ou une combinaison quelconque de ceux-ci) :

- la teneur en bicarbonate de potassium va de 5% à 90% en poids par rapport au poids total de la composition, de préférence de 10% à 90%, de préférence de 15% à 85%, de préférence de 20% à 80%, de préférence de 25% à 75%, de préférence de 30% à 70%, de préférence de 35% à 70%, de préférence de 40% à 65%, de préférence de 45% à 65%, de préférence de 50% à 60%, en poids par rapport au poids total de la composition ; de préférence encore, la teneur en bicarbonate de potassium est d'environ 55% en poids par rapport au poids total de la composition; et/ou
- la teneur en tensioactifs anioniques appartenant à la famille des taurates va de 0,1% à 30% en poids par rapport au poids total de la composition, de préférence de 0,5% à 25%, de préférence de 1% à 20%, de préférence de 1,5% à 15%, de préférence de 2% à 10%, de préférence de 2,5% à 8%, de préférence de 2,5% à 6,5 %, de préférence de 3% à 6%, en poids par rapport au poids total de la composition.

Selon un mode de réalisation, la composition est une composition liquide, de préférence sous la forme d'une solution aqueuse, de préférence sous la forme d'une solution aqueuse pulvérisable, de préférence encore sous la forme d'un aérosol. La composition liquide peut notamment se présenter sous une forme concentrée (pouvant par exemple être diluée avant utilisation, par exemple 20 fois concentrée, ou encore 15 fois, 10 fois, 8 fois, 5 fois, 4 fois, 3 fois ou encore 2 fois concentrée) ou sous une forme prête à l'emploi.

Selon un mode de réalisation, la composition est une composition liquide obtenue par la dilution (et/ou la dissolution et/ou la mise en solution et/ou la solubilisation) de la composition sous une forme solide dans un solvant approprié, de préférence selon un facteur de dilution approprié (de préférence de » sorte à obtenir les teneurs en bicarbonate de potassium détaillées ci-après).

Les solvants adaptés/appropriés pour diluer/dissoudre/mettre en solution/solubiliser la composition liquide concentrée et/ou la composition solide, peuvent par exemple être choisis parmi les solvants aqueux, tels que l'eau, les alcools (en particulier les alcools aqueux, par exemple l'éthanol), les acides (en particulier les acides carboxyliques, par exemple l'acide acétique), et une combinaison quelconque de ceux-ci, de préférence l'eau.

Selon un mode de réalisation préféré de la composition liquide (en particulier pour la composition liquide prête à l'emploi, éventuellement après dilution d'une composition liquide concentrée ou après mise en solution d'une composition solide), la teneur en bicarbonate de potassium va de 5 à 60 grammes par litre de composition (g/L), de préférence de 8 à 55 g/L, de préférence de 10 à 50 g/L, de préférence de 15 à 45 g/L, de préférence de 20 à 40 g/L, de préférence de 25 à 35 g/L, de préférence de 28 à 33 g/L, de préférence de 30 à 35 g/L de composition. En effet, les données montrent que l'efficacité de protection et/ou de traitement des cultures, notamment l'activité antifongique, est particulièrement élevé lorsque la concentration en bicarbonate de potassium va de 5 à 60 g/L, dans la composition liquide appliquée sur les cultures. L'homme du métier sait déterminer les facteurs de dilution appropriés afin de parvenir à une composition liquide ayant de telles teneurs en bicarbonate de potassium, à partir d'une composition liquide concentrée ou d'une composition solide.

Selon un mode de réalisation de la composition sous forme liquide (de préférence sous la forme d'une composition aqueuse), la teneur en bicarbonate de potassium va de 0,1% à 35% en poids par rapport au poids total de la composition, de préférence de 0,5% à 25%, de préférence de 1% à 20%, de préférence de 5% à 15%, en poids par rapport au poids total de la composition ; de préférence encore, la teneur en bicarbonate de potassium est d'environ 10% en poids par rapport au poids total de la composition.

Le bicarbonate de potassium peut provenir de toute source ou avoir toute origine et/ou avoir été obtenu par n'importe quel procédé adapté, connu de l'homme du métier. La composition est également efficace lorsque le bicarbonate de potassium est obtenu à partir d'une fermentation alcoolique, telle que la fermentation du vin. En effet, les Inventeurs ont montré que du bicarbonate de potassium pouvait être efficacement obtenu à partir d'une fermentation alcoolique, telle que la fermentation du vin, en particulier à partir du dioxyde de carbone dégagé par la fermentation alcoolique. Outre son efficacité, ce procédé de production du bicarbonate de potassium mis au point par les Inventeurs est particulièrement intéressant sur le plan écologique. En effet, la production d'une matière ayant un important intérêt économique et industriel comme le bicarbonate de potassium, permet notamment de valoriser les gaz produits lors de la fermentation alcoolique, tout en limitant la libération du dioxyde de carbone, un gaz à effet de serre détrimentaire pour la couche d'ozone.

Selon un mode de réalisation, le bicarbonate de potassium de la composition est obtenu à partir d'une fermentation alcoolique, de préférence une fermentation de végétaux, de préférence une fermentation du vin, le bicarbonate de potassium étant de préférence obtenu par un procédé comprenant les étapes suivantes (ou consistant essentiellement en, ou consistant en, les étapes suivantes) :

a) captage du dioxyde de carbone dégagé par la fermentation alcoolique ;
b) barbotage du dioxyde de carbone capté lors de l'étape a) dans une solution de carbonate de potassium pour obtenir des cristaux de bicarbonate de potassium, de préférence dans des conditions de saturation de la solution;
c) optionnellement, extraction des cristaux de bicarbonate de potassium obtenus à l'étape b).

Selon un mode de réalisation préféré de la composition, au moins tensioactif anionique appartenant à la famille des taurates est choisi parmi les N-méthyltaurates ; de préférence parmi les N-méthyltaurates de sodium, les N-méthyltaurates d'ammonium, les N-méthyltaurates de calcium, les N-méthyltaurates des métaux alcalins, les N-méthyltaurates de métaux alcalino-terreux, et toute combinaison de ceux-ci ; de préférence encore parmi les N-méthyltaurates de sodium.

Avantageusement, le tensioactif anionique appartenant à la famille des taurates est hydrosoluble.

Les données obtenues par les Inventeurs montrent en outre que la présence d'au moins un excipient additionnel choisi parmi les tensioactifs polymères polyélectrolytes anioniques, les tensioactifs non-ioniques, les tensioactifs cationiques, et les argiles, permet d'accroître davantage l'efficacité antifongique de la composition, la durabilité de la protection et la résistance au lessivage. Avantageusement, la composition selon l'invention comprend donc en outre au moins un excipient additionnel choisi parmi les tensioactifs polymères polyélectrolytes anioniques, les tensioactifs non-ioniques, les tensioactifs cationiques, les argiles, et une combinaison quelconque de ceux-ci.

Les données mettent en évidence que la durabilité de la protection et la résistance au lessivage sont particulièrement élevées lorsque la composition comprend en outre un excipient additionnel choisi parmi les argiles. La présente invention concerne donc une composition telle que définie ci-dessus, comprenant en outre au moins un excipient additionnel choisi parmi les argiles.

La présente invention concerne donc une composition telle que définie ci-dessus, comprenant, ou consistant essentiellement en, ou consistant en :

- du bicarbonate de potassium ;
- au moins un excipient choisi parmi les tensioactifs anioniques appartenant à la famille des taurates ; et
- au moins un excipient additionnel choisi parmi les tensioactifs polymères polyélectrolytes anioniques, les tensioactifs non-ioniques, les tensioactifs cationiques, et les argiles;

ledit excipient étant de préférence un excipient acceptable sur le plan phytosanitaire, et/ou de préférence un excipient essentiellement biosourcé, et/ou un excipient essentiellement biodégradable, et/ou un excipient essentiellement d'origine naturelle, et/ou comportant de préférence une phrase de conseil de prudence peu préoccupante.

Ledit excipient additionnel est de préférence hydrosoluble.

Avantageusement, la composition comprend au moins un tensioactif polymère polyélectrolyte anionique, de préférence choisi parmi les sulfonates, et une combinaison quelconque de ceux-ci ; le sulfonate étant de préférence choisi parmi les lignosulfonates ; de préférence choisi parmi les lignosulfonates de sodium, les lignosulfonates d'ammonium, les lignosulfonates de calcium, et toute combinaison de ceux-ci ; de préférence encore parmi les lignosulfonates de sodium et une combinaison quelconque de ceux-ci. En effet, l'efficacité antifongique de la composition est particulièrement élevée lorsque celle-ci comprend un tel tensioactif anionique.

Selon un mode de réalisation de la composition comprenant au moins un tensioactif polymère polyélectrolyte anionique, celui-ci est de préférence choisi parmi les sulfonates (tels que les lignosulfonates) et une combinaison quelconque de ceux-ci. Ainsi, selon ce mode de réalisation dans lequel la composition comprend au moins un tensioactif polymère polyélectrolyte anionique, le tensioactif polymère polyélectrolyte anionique est avantageusement choisi parmi les sulfonates (tels que les lignosulfonates) et une combinaison quelconque de ceux-ci.

Avantageusement, la composition comprend au moins un tensioactif non-ionique, de préférence choisi parmi les alcools éthoxylés, et une combinaison quelconque de ceux-ci ; l'alcool éthoxylé étant de préférence choisi parmi les alcools éthoxylés secondaires ; de préférence encore choisi parmi les alcools secondaires éthoxylés en C8-C18 et une combinaison quelconque de ceux-ci. En effet, l'efficacité antifongique de la composition est particulièrement élevée lorsque celle-ci comprend un tel tensioactif non-ionique.

Selon un mode de réalisation de la composition comprenant au moins un tensioactif non-ionique, celui-ci est de préférence choisi parmi les alcools éthoxylés (tels que les alcools éthoxylés secondaires) et une combinaison quelconque de ceux-ci. Ainsi, selon ce mode de réalisation dans lequel la composition comprend au moins un tensioactif non-ionique, le tensioactif non-ionique est avantageusement choisi les alcools éthoxylés (tels que les alcools éthoxylés secondaires) et une combinaison quelconque de ceux-ci.

Avantageusement, la composition comprend au moins un tensioactif cationique, de préférence choisi parmi les polymères organo-minéraux, et une combinaison quelconque de ceux-ci ; le polymère organo-minéral étant de préférence choisi parmi les siloxanes ; de préférence choisi parmi les alkylsiloxanes ; de préférence encore choisi parmi les polydiméthylsiloxanes, et une combinaison quelconque de ceux-ci. En effet, l'efficacité antifongique de la composition est particulièrement élevée lorsque celle-ci comprend un tel tensioactif cationique.

Selon un mode de réalisation de la composition comprenant au moins un tensioactif cationique, celui-ci est de préférence choisi parmi les polymères organo-minéraux (tels que les siloxanes) et une combinaison quelconque de ceux-ci. Ainsi, selon ce mode de réalisation dans lequel la composition comprend au moins un tensioactif cationique, le tensioactif cationique est avantageusement choisi parmi les polymères organo-minéraux (tels que les siloxanes) et une combinaison quelconque de ceux-ci.

Avantageusement, la composition comprend au moins une argile, de préférence choisie parmi les silicates, et une combinaison quelconque de ceux-ci ; l'argile étant de préférence choisi parmi les phyllosilicates, de préférence encore choisi parmi les kaolinites, et une combinaison quelconque de celles-ci. En effet, l'efficacité antifongique de la composition est particulièrement élevée lorsque celle-ci comprend une telle argile.

Selon un mode de réalisation de la composition comprenant au moins une argile, celle-ci est de préférence choisi parmi les silicates (tels que les phyllosilicates) et une combinaison quelconque de ceux-ci. Ainsi, selon ce mode de réalisation dans lequel la composition comprend au moins une argile, l'argile est avantageusement choisie parmi les silicates (tels que les phyllosilicates) et une combinaison quelconque de ceux-ci.

Selon un mode de réalisation préférentiel, l'excipient additionnel de la composition comprend au moins un tensioactif polymère polyélectrolyte anionique, au moins un tensioactif non-ionique, au moins un tensioactif cationique, et au moins une argile ; le tensioactif polymère polyélectrolyte anionique, le tensioactif non-ionique, le tensioactif cationique, et l'argile étant tels que définis ci-dessus. En effet, l'efficacité antifongique de la composition est particulièrement élevée lorsque celle-ci comprend un tel mélange d'excipients additionnels.

Selon un mode de réalisation, la composition comprend en outre au moins un ingrédient choisi dans le groupe constitué par :

- un solvant, de préférence un solvant (essentiellement) biosourcé. Le solvant est de préférence choisi parmi les solvants aqueux, de préférence encore choisis parmi l'eau, les alcools aqueux (par exemple l'éthanol), les acides carboxyliques (par exemple l'acide acétique) et une combinaison quelconque de ceux-ci ;
- un conservateur (par exemple choisi parmi l'alcool benzylique, l'acide déshydroacétique et une combinaison quelconque de ceux-ci), de préférence un conservateur (essentiellement) biosourcé ;
- un antioxydant (par exemple choisi parmi les chitosanes, le tocophérol (vitamine E) et une combinaison quelconque de ceux-ci), de préférence un antioxydant (essentiellement) biosourcé ;
- un colorant, de préférence un colorant (essentiellement) biosourcé ; et
- une combinaison quelconque de ceux-ci.

Avantageusement, l'ingrédient choisi parmi le solvant, le conservateur, l'antioxydant, le colorant et une combinaison quelconque de ceux-ci est essentiellement biodégradable, de préférence ledit ingrédient est biodégradable. Avantageusement, l'ingrédient choisi parmi le solvant, le conservateur, l'antioxydant, le colorant et une combinaison quelconque de ceux-ci est essentiellement d'origine naturelle, de préférence ledit ingrédient est d'origine naturelle.

Selon un mode de réalisation, la composition est une composition pouvant se présenter sous la forme liquide (concentrée ou non), ou la forme solide (concentrée ou non), de préférence sous une forme solide, dans laquelle l'excipient additionnel comprend, ou consiste essentiellement en, ou consiste en, au moins un tensioactif polymère polyélectrolyte anionique, dans laquelle la teneur en tensioactif polymère polyélectrolyte anionique va de 0,1% à 40% en poids par rapport au poids total de la composition, de préférence de 0,5% à 35%, de préférence de 1% à 30%, de préférence de 2% à 25%, de préférence de 2,5% à 20%, de préférence de 5% à 15%, de préférence de 7% à 13%, de préférence de 9% à 11%, de préférence environ 10%, en poids par rapport au poids total de la composition. La composition est avantageusement sous forme solide.

Alternativement ou en combinaison, la composition est une composition pouvant se présenter sous la forme liquide (concentrée ou non), ou la forme solide (concentrée ou non) , de préférence sous une forme solide, dans laquelle l'excipient additionnel comprend, ou consiste essentiellement en, ou consiste en, au moins un tensioactif non-ionique, dans laquelle la teneur en tensioactif non-ionique va de 0,01% à 40% en poids par rapport au poids total de la composition, de préférence de 0,05% à 30%, de préférence de 0,1% à 20%, de préférence de 0,5% à 15%, de préférence de 1% à 10%, de préférence de 1% à 9%, de préférence de 2% à 8%, de préférence de 2,5% à 7,5%, en poids par rapport au poids total de la composition. La composition est avantageusement sous forme solide.

Alternativement ou en combinaison, la composition est une composition pouvant se présenter sous la forme liquide (concentrée ou non), ou la forme solide (concentrée ou non) , de préférence sous une forme solide, dans laquelle l'excipient additionnel comprend, ou consiste essentiellement en, ou consiste en, au moins un tensioactif cationique, dans laquelle la teneur en tensioactif cationique va de 0,001% à 30% en poids par rapport au poids total de la composition, de préférence de 0,01% à 20%, de préférence de 0,05% à 10%, de préférence de 0,1% à 5%, de préférence de 0,2% à 4%, de préférence de 0,3% à 3%, de préférence de 0,4% à 2%, de préférence de 0,5% à 1,5%, de préférence environ 1%, en poids par rapport au poids total de la composition. La composition est avantageusement sous forme solide.

Alternativement ou en combinaison, la composition est une composition pouvant se présenter sous la forme liquide (concentrée ou non), ou la forme solide (concentrée ou non) , de préférence sous une forme solide, dans laquelle l'excipient additionnel comprend, ou consiste essentiellement en, ou consiste en, au moins une argile, dans laquelle la teneur en argile va de 0,5% à 60% en poids par rapport au poids total de la composition, de préférence de 5% à 50%, de préférence de 10% à 40%, de préférence de 15% à 35%, de préférence de 20% à 30%, de préférence de 21% à 29%, de préférence de 22% à 28%, en poids par rapport au poids total de la composition. La composition est avantageusement sous forme solide.

Ainsi, selon un mode de réalisation, la composition (solide ou liquide, de préférence solide) est caractérisée en ce que :

    i. la teneur en tensioactif polymère polyélectrolyte anionique va de 0,1% à 40% en poids par rapport au poids total de la composition, de préférence de 0,5% à 30%, de préférence de 1% à 20%, de préférence de 2% à 18%, de préférence de 5% à 15%, en poids par rapport au poids total de la composition ; ou

    ii. la teneur en tensioactif non-ionique va de 0,01% à 40% en poids par rapport au poids total de la composition, de préférence de 0,05% à 30%, de préférence de 0,1% à 20%, de préférence de 0,5% à 15%, de préférence de 1% à 10%, en poids par rapport au poids total de la composition ; ou

    iii. la teneur en tensioactif cationique va de 0,001% à 30% en poids par rapport au poids total de la composition, de préférence de 0,01% à 20%, de préférence de 0,1% à 10%, de préférence de 0,3% à 5%, de préférence de 0,5% à 2,5%, en poids par rapport au poids total de la composition ; ou

    iv. la teneur en argile va de 0,5% à 60% en poids par rapport au poids total de la composition, de préférence de 5% à 50%, de préférence de 10% à 40%, de préférence de 15% à 35%, de préférence de 20% à 30%, en poids par rapport au poids total de la composition ; ou

    v. la teneur en excipient additionnel est une combinaison quelconque d'au moins deux caractéristiques choisies parmi i à iv.

Les Inventeurs ont montré, de manière surprenante, qu'une composition comprenant du bicarbonate de potassium, au moins un excipient choisi parmi les tensioactifs anioniques appartenant à la famille des taurates, et au moins un excipient additionnel choisi parmi les tensioactifs polymères polyélectrolytes anioniques, les tensioactifs non-ioniques, les tensioactifs cationiques, les argiles, et une combinaison quelconque de ceux-ci, permet d'inhiber fortement la croissance de champignons phytopathogènes, notamment l'oïdium, le mildiou et la pourriture de la vigne et/ou des cucurbitacées et/ou des solanacées avec une grande efficacité. Ainsi, selon un mode de réalisation préféré, la composition (notamment la composition solide) comprend, ou consiste essentiellement en, ou consiste en :

- du bicarbonate de potassium, de préférence en une teneur allant de 5% à 90% en poids par rapport au poids total de la composition, de préférence de 10% à 90%, de préférence de 15% à 85%, de préférence de 20% à 80%, de préférence de 25% à 75%, de préférence de 30% à 70%, de préférence de 35% à 70%, de préférence de 40% à 65%, de préférence de 45% à 65%, de préférence de 50% à 60%, en poids par rapport au poids total de la composition ; de préférence encore, la teneur en bicarbonate de potassium est d'environ 55% en poids par rapport au poids total de la composition;
- au moins un tensioactif anionique appartenant à la famille des taurates, de préférence en une teneur allant de 0,1% à 30% en poids par rapport au poids total de la composition, de préférence de 0,5% à 25%, de préférence de 1% à 20%, de préférence de 1,5% à 15%, de préférence de 2% à 10%, de préférence de 2,5% à 8%, de préférence de 2,5% à 6,5 %, de préférence de 3% à 6%, en poids par rapport au poids total de la composition ;
- optionnellement, au moins un tensioactif polymère polyélectrolyte anionique, de préférence en une teneur allant de 0,1% à 40% en poids par rapport au poids total de la composition, de préférence de 0,5% à 35%, de préférence de 1% à 30%, de préférence de 2% à 25%, de préférence de 2,5% à 20%, de préférence de 5% à 15%, de préférence de 7% à 13%, de préférence de 9% à 11%, de préférence environ 10%, en poids par rapport au poids total de la composition ;
- optionnellement, au moins un tensioactif non-ionique, de préférence en une teneur allant de 0,01% à 40% en poids par rapport au poids total de la composition, de préférence de 0,05% à 30%, de préférence de 0,1% à 20%, de préférence de 0,5% à 15%, de préférence de 1% à 10%, de préférence de 1% à 9%, de préférence de 2% à 8%, de préférence de 2,5% à 7,5%, en poids par rapport au poids total de la composition ;
- optionnellement, au moins un tensioactif cationique, de préférence en une teneur allant de 0,001% à 30% en poids par rapport au poids total de la composition, de préférence de 0,01% à 20%, de préférence de 0,05% à 10%, de préférence de 0,1% à 5%, de préférence de 0,2% à 4%, de préférence de 0,3% à 3%, de préférence de 0,4% à 2%, de préférence de 0,5% à 1,5%, de préférence environ 1%, en poids par rapport au poids total de la composition ;
- optionnellement, au moins une argile, de préférence en une teneur allant de 0,5% à 60% en poids par rapport au poids total de la composition, de préférence de 5% à 50%, de préférence de 10% à 40%, de préférence de 15% à 35%, de préférence de 20% à 30%, de préférence de 21% à 29%, de préférence de 22% à 28%, en poids par rapport au poids total de la composition ; et
- optionnellement, au moins un solvant (de préférence essentiellement biosourcé), de préférence de l'eau.

Selon un mode de réalisation particulièrement préféré, la composition (notamment la composition solide) comprend, ou consiste essentiellement en, ou consiste en :

- du bicarbonate de potassium, de préférence en une teneur allant de 5% à 90% en poids par rapport au poids total de la composition, de préférence de 10% à 90%, de préférence de 15% à 85%, de préférence de 20% à 80%, de préférence de 25% à 75%, de préférence de 30% à 70%, de préférence de 35% à 70%, de préférence de 40% à 65%, de préférence de 45% à 65%, de préférence de 50% à 60%, en poids par rapport au poids total de la composition ; de préférence encore, la teneur en bicarbonate de potassium est d'environ 55% en poids par rapport au poids total de la composition;
- au moins un tensioactif anionique appartenant à la famille des taurates, de préférence en une teneur allant de 0,1% à 30% en poids par rapport au poids total de la composition, de préférence de 0,5% à 25%, de préférence de 1% à 20%, de préférence de 1,5% à 15%, de préférence de 2% à 10%, de préférence de 2,5% à 8%, de préférence de 2,5% à 6,5 %, de préférence de 3% à 6%, en poids par rapport au poids total de la composition ;
- au moins un tensioactif polymère polyélectrolyte anionique, de préférence en une teneur allant de 0,1% à 40% en poids par rapport au poids total de la composition, de préférence de 0,5% à 35%, de préférence de 1% à 30%, de préférence de 2% à 25%, de préférence de 2,5% à 20%, de préférence de 5% à 15%, de préférence de 7% à 13%, de préférence de 9% à 11%, de préférence environ 10%, en poids par rapport au poids total de la composition ;
- au moins un tensioactif non-ionique, de préférence en une teneur allant de 0,01% à 40% en poids par rapport au poids total de la composition, de préférence de 0,05% à 30%, de préférence de 0,1% à 20%, de préférence de 0,5% à 15%, de préférence de 1% à 10%, de préférence de 1% à 9%, de préférence de 2% à 8%, de préférence de 2,5% à 7,5%, en poids par rapport au poids total de la composition ;
- au moins un tensioactif cationique, de préférence en une teneur allant de 0,001% à 30% en poids par rapport au poids total de la composition, de préférence de 0,01% à 20%, de préférence de 0,05% à 10%, de préférence de 0,1% à 5%, de préférence de 0,2% à 4%, de préférence de 0,3% à 3%, de préférence de 0,4% à 2%, de préférence de 0,5% à 1,5%, de préférence environ 1%, en poids par rapport au poids total de la composition ; et
- au moins une argile, de préférence en une teneur allant de 0,5% à 60% en poids par rapport au poids total de la composition, de préférence de 5% à 50%, de préférence de 10% à 40%, de préférence de 15% à 35%, de préférence de 20% à 30%, de préférence de 21% à 29%, de préférence de 22% à 28%, en poids par rapport au poids total de la composition ;
- et optionnellement, au moins un solvant (de préférence essentiellement biosourcé), de préférence de l'eau.

Selon un mode de réalisation particulièrement avantageux, les différents ingrédients listés ci-dessus (le bicarbonate de potassium, le tensioactif anionique appartenant à la famille des taurates, le tensioactif polymère polyélectrolyte anionique, le tensioactif non-ionique, le tensioactif cationique, l'argile, le solvant) sont essentiellement biodégradables, de préférence ils sont biodégradables. Avantageusement, les différents ingrédients listés ci-dessus (le bicarbonate de potassium, le tensioactif anionique appartenant à la famille des taurates, le tensioactif polymère polyélectrolyte anionique, le tensioactif non-ionique, le tensioactif cationique, l'argile, le solvant) sont essentiellement d'origine naturelle, de préférence ils sont d'origine naturelle.

La composition selon l'invention (sous forme solide ou liquide) peut en outre comprendre un excipient additionnel. L'excipient additionnel peut par exemple être du glycérol. La composition selon l'invention est de préférence essentiellement dépourvue de glycérol, de préférence encore dépourvue de glycérol, de préférence encore ne contient pas de glycérol. Les données montrent en effet que l'effet antifongique de la composition dépourvue de glycérol est supérieur à celui d'une composition comprenant du glycérol.

Avantageusement, la composition est caractérisée en ce qu'elle est adaptée pour une utilisation phytosanitaire, de préférence pour une utilisation antifongique, de préférence pour une utilisation antifongique dans le domaine agricole, de préférence encore pour une utilisation antifongique dans le domaine viticole. Avantageusement, la composition est caractérisée en ce qu'elle a un effet/une activité phytosanitaire, de préférence un effet/une activité antifongique, de préférence un effet/une activité antifongique dans le domaine agricole, de préférence encore un effet/une activité antifongique dans le domaine viticole.

Selon un mode de réalisation, la composition est caractérisée en ce qu'elle est une composition phytosanitaire, de préférence une composition antifongique.

Avantageusement, la composition est caractérisée en ce qu'elle comprend moins de 25% d'ingrédients d'origine non naturelle, de préférence moins de 20%, de préférence moins de 15%, de préférence moins de 10%, de préférence moins de 9%, de préférence moins de 8%, de préférence moins de 7%, de préférence moins de 6%, de préférence moins de 5%, de préférence moins de 4%, de préférence moins de 3%, de préférence moins de 2%, de préférence moins de 1%, de préférence moins de 0,5%, de préférence moins de 0,1% d'ingrédients d'origine non naturelle ; de préférence encore, la composition est essentiellement dépourvue d'ingrédients d'origine non naturelle; de préférence encore, la composition est essentiellement composée d'ingrédients d'origine naturelle, lesdits ingrédients d'origine naturelle étant de préférence biodégradables et/ou comportant une phrase de conseil de prudence peu préoccupante et/ou biosourcés.

Avantageusement, la composition est caractérisée en ce qu'elle comprend au moins 80% d'ingrédients biosourcés, de préférence au moins 85%, de préférence au moins 90%, de préférence au moins 91%, de préférence au moins 92%, de préférence au moins 93%, de préférence au moins 94%, de préférence au moins 95%, de préférence au moins 96%, de préférence au moins 97%, de préférence au moins 98%, de préférence au moins 99%, de préférence au moins 99,5%, de préférence au moins 99,9% d'ingrédients biosourcés; de préférence encore, la composition est essentiellement composée d'ingrédients biosourcés, lesdits ingrédients biosourcés étant de préférence d'origine naturelle; de préférence encore, la composition est essentiellement dépourvue d'ingrédients non biosourcés.

Avantageusement, la composition est caractérisée en ce qu'elle comprend au moins 80% d'ingrédients biodégradables, de préférence au moins 85%, de préférence au moins 90%, de préférence au moins 91%, de préférence au moins 92%, de préférence au moins 93%, de préférence au moins 94%, de préférence au moins 95%, de préférence au moins 96%, de préférence au moins 97%, de préférence au moins 98%, de préférence au moins 99%, de préférence au moins 99,5%, de préférence au moins 99,9% d'ingrédients biodégradables; de préférence encore, la composition est essentiellement composée d'ingrédients biodégradables, lesdits ingrédients biodégradables étant de préférence d'origine naturelle; de préférence encore, la composition est essentiellement dépourvue d'ingrédients non biodégradables et/ou la composition est essentiellement dépourvue d'ingrédients non biosourcés.

Selon un mode de réalisation préféré, la composition est caractérisée en ce qu'elle est essentiellement composée d'ingrédients biodégradables et/ou naturels et/ou comportant une phrase de conseil de prudence peu préoccupante et/ou biosourcés, lesdits ingrédients étant de préférence d'origine naturelle.

Avantageusement, la composition est obtenue par un procédé comprenant le mélange des différents ingrédients.

La présente invention concerne également un kit comprenant :

- du bicarbonate de potassium dans un premier récipient,
- au moins un excipient choisi parmi les tensioactifs anioniques appartenant à la famille des taurates dans un second récipient ; et
- optionnellement, dans un troisième récipient, au moins un excipient additionnel choisi parmi les tensioactifs polymères polyélectrolytes anioniques, les tensioactifs non-ioniques, les tensioactifs cationiques, et une combinaison quelconque de ceux-ci,

le bicarbonate de potassium, l'excipient et l'excipient additionnel étant tels que définis ci-dessus en relation avec la composition.

La présente invention concerne également un kit comprenant :

- du bicarbonate de potassium dans un premier récipient,
- au moins un excipient choisi parmi les tensioactifs anioniques appartenant à la famille des taurates dans un second récipient ; et
- optionnellement, dans un troisième récipient, au moins un excipient additionnel choisi parmi les tensioactifs polymères polyélectrolytes anioniques, les tensioactifs non-ioniques, les tensioactifs cationiques, les argiles, et une combinaison quelconque de ceux-ci,

le bicarbonate de potassium, l'excipient et l'excipient additionnel étant tels que définis ci-dessus en relation avec la composition.

La présente invention concerne également un kit comprenant :

- du bicarbonate de potassium dans un premier récipient,
- au moins un excipient choisi parmi les tensioactifs anioniques appartenant à la famille des taurates dans un second récipient ; et
- dans un troisième récipient, au moins un excipient additionnel choisi parmi les tensioactifs polymères polyélectrolytes anioniques, les tensioactifs non-ioniques, les tensioactifs cationiques, et une combinaison quelconque de ceux-ci,
- optionnellement, dans un quatrième récipient, au moins un excipient supplémentaire choisi parmi les argiles,

le bicarbonate de potassium, l'excipient, l'excipient additionnel, et l'excipient supplémentaire étant tels que définis ci-dessus en relation avec la composition.

Avantageusement, le bicarbonate de potassium et l'au moins un excipient choisi parmi les tensioactifs anioniques appartenant à la famille des taurates sont dans le même récipient (premier récipient = second récipient). Alternativement, le bicarbonate de potassium et l'au moins un excipient additionnel sont dans le même récipient (premier récipient = troisième récipient). Alternativement, l'au moins un excipient choisi parmi les tensioactifs anioniques appartenant à la famille des taurates et l'au moins un excipient additionnel sont dans le même récipient (second récipient = troisième récipient).

Avantageusement, le kit comprend une notice (ou un guide) d'utilisation.

La présente invention concerne également un kit comprenant :

- la composition telle que définie ci-dessus (par exemple sous forme liquide ou solide), dans un premier récipient ; et
- au moins un ingrédient additionnel dans un second récipient, ledit ingrédient étant choisi dans le groupe constitué par :

  • un solvant, de préférence un solvant (essentiellement) biosourcé. Le solvant est de préférence choisi parmi les solvants aqueux, de préférence encore choisis parmi l'eau, les alcools aqueux (par exemple l'éthanol), les acides carboxyliques (par exemple l'acide acétique) et une combinaison quelconque de ceux-ci ;
  • un conservateur (par exemple choisi parmi l'alcool benzylique, l'acide déhydroacétique et une combinaison quelconque de ceux-ci), de préférence un conservateur (essentiellement) biosourcé ;
  • un antioxydant (par exemple choisi parmi les chitosanes, le tocophérol (vitamine E) et une combinaison quelconque de ceux-ci), de préférence un conservateur (essentiellement) biosourcé ;
  • un colorant, de préférence un colorant (essentiellement) biosourcé ; et
  • une combinaison quelconque de ceux-ci.

Avantageusement, l'ingrédient choisi parmi le solvant, le conservateur, l'antioxydant, le colorant, et une combinaison quelconque de ceux-ci est essentiellement biodégradable, de préférence ledit ingrédient est biodégradable. Avantageusement, l'ingrédient choisi parmi le solvant, le conservateur, l'antioxydant, le colorant et une combinaison quelconque de ceux-ci est essentiellement d'origine naturelle, de préférence ledit ingrédient est d'origine naturelle.

Avantageusement, l'ingrédient additionnel est un solvant. Cette configuration permet notamment de préparer une composition liquide prête à l'emploi, par exemple en diluant la composition du premier récipient, se présentant sous forme liquide concentrée ou sous forme solide.

**Utilisation**

Les Inventeurs ont montré qu'une composition comprenant du bicarbonate de potassium, et au moins un excipient choisi parmi les tensioactifs anioniques appartenant à la famille des taurates (ledit excipient étant de préférence un excipient acceptable sur le plan phytosanitaire, et/ou de préférence un excipient essentiellement biosourcé, et/ou de préférence un excipient d'origine nturelle, et/ou comportant de préférence une phrase de conseil de prudence peu préoccupante), permet de protéger et/ou traiter efficacement les cultures, en particulier les vignes, les cucurbitacées et les solanacées. Les Inventeurs ont notamment mis en évidence, de manière surprenante, qu'une telle composition possède un effet antifongique significatif permettant notamment d'inhiber fortement la croissance de champignons phytopathogènes. Ainsi, les données dans les Exemples ci-après montrent que, de manière inattendue, l'application de cette composition permet de protéger et/ou traiter les cultures (telles que les vignes, les cucurbitacées et les solanacées) contre les champignons phytopathogènes, notamment l'oïdium, le mildiou et la pourriture de la vigne et/ou des cucurbitacées et/ou des solanacées avec une grande efficacité. Les Inventeurs ont également montré que, de manière surprenante, cette nouvelle formulation présente une amélioration significative des propriétés d'adhérence, d'étalement, de résistance au lessivage et de longévité sur les feuilles de vignes, de cucurbitacées et de solanacées. Les Inventeurs ont également mis en évidence un effet protecteur durable dans le temps et résistant au lessivage. Ainsi, la fréquence d'application du traitement peut être réduite au maximum, limitant les frais et l'impact sur l'environnement. Les données montrent en outre qu'une telle composition ne présente pas de phytotoxicité pour les cultures.

La présente invention concerne donc l'utilisation d'une composition comprenant, ou constituée essentiellement de, ou consistant essentiellement en, ou consistant en :

- du bicarbonate de potassium ; et
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé ;

pour traiter et/ou protéger les cultures, de préférence les vignes, les cucurbitacées, les solanacées (de préférence les pommes de terre), et toute combinaison de celles-ci, de préférence encore les vignes.

La présente invention concerne en outre l'utilisation d'une composition comprenant, ou consistant essentiellement en, ou consistant en :

- du bicarbonate de potassium ;
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ; et
- au moins un excipient additionnel choisi parmi les tensioactifs polymères polyélectrolytes anioniques, les tensioactifs non-ioniques, les tensioactifs cationiques, et toute combinaison de ceux-ci ;

pour traiter et/ou protéger les cultures, de préférence les vignes, les cucurbitacées, les solanacées (de préférence les pommes de terre), et toute combinaison de celles-ci, de préférence encore les vignes ; les tensioactifs polymères polyélectrolytes anioniques étant choisis de préférence parmi les sulfonates, et toute combinaison de ceux-ci ; les tensioactifs non-ioniques étant de préférence choisis parmi les alcools éthoxylés, et toute combinaison de ceux-ci ; les tensioactifs cationiques étant de préférence choisis parmi les polymères organo-minéraux, et toute combinaison de ceux-ci ;

ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante.

La présente invention concerne également l'utilisation d'une composition comprenant, ou consistant essentiellement en, ou consistant en :

- du bicarbonate de potassium ;

- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ; et

- au moins un excipient additionnel choisi parmi les tensioactifs polymères polyélectrolytes anioniques, les tensioactifs non-ioniques, les tensioactifs cationiques, et toute combinaison de ceux-ci ;

pour traiter et/ou protéger les cultures, de préférence les vignes, les cucurbitacées, les solanacées (de préférence les pommes de terre), et toute combinaison de celles-ci, de préférence encore les vignes ; les tensioactifs polymères polyélectrolytes anioniques étant choisis parmi les sulfonates, et toute combinaison de ceux-ci ; les tensioactifs non-ioniques étant choisis parmi les alcools éthoxylés, et toute combinaison de ceux-ci ; les tensioactifs cationiques étant choisis parmi les polymères organo-minéraux, et toute combinaison de ceux-ci ;

ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante.

La présente invention concerne en outre l'utilisation d'une composition comprenant, ou consistant essentiellement en, ou consistant en :

- du bicarbonate de potassium ;
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ; et
- au moins un excipient additionnel choisi parmi les tensioactifs polymères polyélectrolytes anioniques, les tensioactifs non-ioniques, les tensioactifs cationiques, les argiles, et toute combinaison de ceux-ci ;

pour traiter et/ou protéger les cultures, de préférence les vignes, les cucurbitacées, les solanacées (de préférence les pommes de terre), et toute combinaison de celles-ci, de préférence encore les vignes ; les tensioactifs polymères polyélectrolytes anioniques étant choisis de préférence parmi les sulfonates, et toute combinaison de ceux-ci ; les tensioactifs non-ioniques étant de préférence choisis parmi les alcools éthoxylés, et toute combinaison de ceux-ci ; les tensioactifs cationiques étant de préférence choisis parmi les polymères organo-minéraux, et toute combinaison de ceux-ci, les argiles étant choisies de préférence parmi les silicates, et toute combinaison de ceux-ci ;

ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante.

La présente invention concerne en particulier l'utilisation d'une composition telle que définie ci-dessus (notamment dans les sections « Définitions » et « Composition » ci-dessus) pour traiter et/ou protéger les cultures, de préférence les vignes, les cucurbitacées, les solanacées (de préférence les pommes de terre), et toute combinaison de celles-ci, de préférence encore les vignes.

La composition peut être utilisée sous une forme liquide ou sous une forme solide (telle que poudre, granules, comprimés, ou une combinaison quelconque de ceux-ci). En effet, les Inventeurs ont montré que la composition peut être utilisée efficacement pour protéger et/ou traiter les cultures sous une forme liquide ou sous une forme solide. La composition peut être appliquée sur les cultures sous forme liquide, ou sous forme solide (en particulier sous forme de poudre). Lorsque la composition est appliquée sous forme liquide, elle peut être présentée sous forme liquide directement prête à l'emploi, ou à diluer (pour une composition sous forme concentrée). Elle peut également être présentée sous forme solide et pourra alors être diluée dans un solvant adapté avant utilisation (par exemple extemporanément, ou pour un stockage à court, moyen ou long terme avant utilisation). La composition liquide peut notamment se présenter sous une forme concentrée (pouvant par exemple être diluée avant utilisation, par exemple 20 fois concentrée, ou encore 15 fois, 10 fois, 8 fois, 5 fois, 4 fois, 3 fois ou encore 2 fois concentrée) ou sous une forme prête à l'emploi. La composition présente en effet une efficacité antifongique quelle que soit la forme de la composition.

Lorsque la composition est utilisée sous forme liquide (en particulier pour la composition liquide prête à l'emploi, éventuellement après dilution d'une composition liquide concentrée ou après mise en solution d'une composition solide), la teneur en bicarbonate de potassium va de 5 à 60 grammes par litre de composition (g/L), de préférence de 8 à 55 g/L, de préférence de 10 à 50 g/L, de préférence de 15 à 45 g/L, de préférence de 20 à 40 g/L, de préférence de 25 à 35 g/L, de préférence de 28 à 33 g/L, de préférence de 30 à 35 g/L de composition appliquée. En effet, les données montrent que l'efficacité de protection et/ou de traitement des cultures, notamment l'activité antifongique, est particulièrement élevé lorsque la concentration en bicarbonate de potassium va de 5 à 60 g/L, dans la composition liquide appliquée sur les cultures.

Selon un mode de réalisation, la composition est utilisée sous la forme d'une solution aqueuse, de préférence sous la forme d'une solution aqueuse pulvérisable, de préférence encore sous la forme d'un aérosol. Avantageusement, la composition est appliquée sur les cultures par pulvérisation et/ou vaporisation et/ou projection. Ainsi, la composition peut être pulvérisée et/ou vaporisée et/ou projetée sur les cultures.

Selon un mode de réalisation, l'utilisation est caractérisée en ce que la composition est appliquée sur les cultures avant ou après récolte desdites cultures, de préférence par pulvérisation et/ou vaporisation et/ou projection. Ainsi, l'utilisation de la composition comprend, ou consiste en, ou consiste essentiellement en, l'application de la composition sur les cultures, avant ou après récolte desdites cultures.

Selon un mode de réalisation, la composition comprend en outre au moins un excipient additionnel choisi parmi les tensioactifs polymères polyélectrolytes anioniques, les tensioactifs non-ioniques, les tensioactifs cationiques, les argiles, et une combinaison quelconque de ceux-ci ; ledit excipient additionnel étant de préférence hydrosoluble (ledit excipient additionnel étant de préférence tel que défini ci-dessus (notamment dans les sections « Définitions » et « Composition » ci-dessus).

Avantageusement, l'utilisation est une utilisation phytosanitaire.

Selon un mode de réalisation, l'utilisation de la composition comprend, ou consiste en, ou consiste essentiellement, en la protection des cultures (en particulier des vignes, des cucurbitacées, des solanacées (de préférence les pommes de terre), et toute combinaison de celles-ci, de préférence encore des vignes) contre les champignons pathogènes et/ou maladies fongiques.

Selon un mode de réalisation, l'utilisation de la composition comprend, ou consiste en, ou consiste essentiellement en, le traitement des cultures (en particulier des vignes, des cucurbitacées, des solanacées (de préférence les pommes de terre), et toute combinaison de celles-ci, de préférence encore des vignes) contre les champignons pathogènes et/ou maladies fongiques.

Selon un mode de réalisation, l'utilisation de la composition comprend, ou consiste en, ou consiste essentiellement en, la protection et/ou le traitement des cultures (en particulier des vignes, des cucurbitacées, des solanacées (de préférence les pommes de terre), et toute combinaison de celles-ci, de préférence encore des vignes) contre les champignons pathogènes et/ou maladies fongiques.

Alternativement ou en combinaison, l'utilisation de la composition comprend, ou consiste en, ou consiste essentiellement en, le contrôle des champignons pathogènes et/ou maladies fongiques sur les cultures (en particulier des vignes, des cucurbitacées, des solanacées (de préférence les pommes de terre), et toute combinaison de celles-ci, de préférence encore des vignes).

Selon un mode de réalisation, l'utilisation est pour traiter et/ou protéger les cultures (en particulier des vignes, des cucurbitacées, des solanacées (de préférence les pommes de terre), et toute combinaison de celles-ci, de préférence encore des vignes) et/ou contrôler le développement des champignons pathogènes et/ou maladies fongiques sur les cultures (en particulier les vignes, des cucurbitacées, des solanacées (de préférence les pommes de terre), et toute combinaison de celles-ci, de préférence encore des vignes).

Selon un mode de réalisation, le champignon pathogène est choisi parmi les champignons phytopathogènes, en particulier parmi le mildiou de la vigne *(Plasmopara viticola),* l'oïdium de la vigne *(Uncinula necator* et/ou *Erysiphe necator),* la pourriture de la vigne (*Botrytis cinerea),* le mildiou des solanacées (*Phytophthora parasitica* et/ou *Phytophtora infestans*), le mildiou des cucurbitacées (*Pseudoperonospora cubensis*) et une combinaison quelconque de ceux-ci, de préférence le mildiou de la vigne *(Plasmopara viticola).*

La présente invention concerne également l'utilisation d'un kit tel que défini ci-dessus pour traiter et/ou protéger les cultures, de préférence les vignes, les cucurbitacées, les solanacées (de préférence les pommes de terre), et toute combinaison de celles-ci ; de préférence encore les vignes. La présente invention concerne également l'utilisation d'une composition obtenue (ou susceptible d'être obtenue, ou directement obtenue) au moyen du kit tel que défini ci-dessus pour traiter et/ou protéger les cultures, de préférence les vignes, les cucurbitacées, les solanacées (de préférence les pommes de terre), et toute combinaison de celles-ci ; de préférence encore les vignes. Avantageusement, l'utilisation d'un kit et d'une composition obtenue (ou susceptible d'être obtenue, ou directement obtenue) au moyen du kit est telle que définie ci-dessus en relation avec la composition.

**Méthode**

La présente invention concerne une méthode de protection et/ou de traitement des cultures, comprenant l'application d'une composition telle que définie ci-dessus, ou d'une composition préparée à partir du kit tel que défini ci-dessus (en particulier d'une composition obtenue, ou susceptible d'être obtenue, ou directement obtenue au moyen du kit), sur les cultures à protéger et/ou traiter, dans laquelle les cultures sont de préférence des vignes, des cucurbitacées, des solanacées (de préférence les pommes de terre), et toute combinaison de celles-ci ; de préférence encore des vignes.

La présente invention concerne donc une méthode de protection et/ou de traitement des cultures, comprenant l'application (sur les cultures à traiter ou à proximité desdites cultures) d'une composition comprenant, ou constituée essentiellement de, ou consistant essentiellement en, ou consistant en :

- du bicarbonate de potassium ; et
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ;

les cultures comprenant de préférence les vignes, les cucurbitacées, les solanacées (de préférence les pommes de terre), et toute combinaison de celles-ci ; de préférence encore les vignes.

La présente invention concerne en outre une méthode de protection et/ou de traitement des cultures, comprenant l'application (sur les cultures à traiter ou à proximité desdites cultures) d'une composition comprenant, ou consistant essentiellement en, ou consistant en :

- du bicarbonate de potassium ;
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ; et
- au moins un excipient additionnel choisi parmi les tensioactifs polymères polyélectrolytes anioniques, les tensioactifs non-ioniques, les tensioactifs cationiques, et toute combinaison de ceux-ci ;

les tensioactifs polymères polyélectrolytes anioniques étant choisis de préférence parmi les sulfonates, et toute combinaison de ceux-ci ; les tensioactifs non-ioniques étant de préférence choisis parmi les alcools éthoxylés, et toute combinaison de ceux-ci ; les tensioactifs cationiques étant de préférence choisis parmi les polymères organo-minéraux, et toute combinaison de ceux-ci ;
ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ;
les cultures comprenant de préférence les vignes, les cucurbitacées, les solanacées (de préférence les pommes de terre), et toute combinaison de celles-ci ; de préférence encore les vignes.

La présente invention concerne également une méthode de protection et/ou de traitement des cultures, comprenant l'application (sur les cultures à traiter ou à proximité desdites cultures) d'une composition comprenant, ou consistant essentiellement en, ou consistant en :

- du bicarbonate de potassium ;

- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ; et

- au moins un excipient additionnel choisi parmi les tensioactifs polymères polyélectrolytes anioniques, les tensioactifs non-ioniques, les tensioactifs cationiques, et toute combinaison de ceux-ci ;

les tensioactifs polymères polyélectrolytes anioniques étant choisis parmi les sulfonates, et toute combinaison de ceux-ci ; les tensioactifs non-ioniques étant choisis parmi les alcools éthoxylés, et toute combinaison de ceux-ci ; les tensioactifs cationiques étant choisis parmi les polymères organo-minéraux, et toute combinaison de ceux-ci ;
ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ;
les cultures comprenant de préférence les vignes, les cucurbitacées, les solanacées (de préférence les pommes de terre), et toute combinaison de celles-ci ; de préférence encore les vignes.

La présente invention concerne en outre une méthode de protection et/ou de traitement des cultures, comprenant l'application (sur les cultures à traiter ou à proximité desdites cultures) d'une composition comprenant, ou consistant essentiellement en, ou consistant en :

- du bicarbonate de potassium ;
- au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ; et

- au moins un excipient additionnel choisi parmi les tensioactifs polymères polyélectrolytes anioniques, les tensioactifs non-ioniques, les tensioactifs cationiques, les argiles, et toute combinaison de ceux-ci ;

les tensioactifs polymères polyélectrolytes anioniques étant choisis de préférence parmi les sulfonates, et toute combinaison de ceux-ci ; les tensioactifs non-ioniques étant de préférence choisis parmi les alcools éthoxylés, et toute combinaison de ceux-ci ; les tensioactifs cationiques étant de préférence choisis parmi les polymères organo-minéraux, et toute combinaison de ceux-ci, les argiles étant choisies de préférence parmi les silicates, et toute combinaison de ceux-ci ;
ledit excipient additionnel étant de préférence hydrosoluble ; ledit excipient additionnel étant de préférence un excipient acceptable sur le plan phytosanitaire, et/ou de préférence un excipient essentiellement biosourcé, et/ou un excipient d'origine naturelle, et/ou comportant de préférence une phrase de conseil de prudence peu préoccupante ;
les cultures comprenant de préférence les vignes, les cucurbitacées, les solanacées (de préférence les pommes de terre), et toute combinaison de celles-ci ; de préférence encore les vignes.

La présente invention concerne en particulier une méthode pour traiter et/ou protéger les cultures, de préférence les vignes, les cucurbitacées, les solanacées (de préférence les pommes de terre), et toute combinaison de celles-ci ; de préférence encore les vignes, comprenant l'application d'une composition telle que définie ci-dessus (notamment dans les sections « Définitions » et « Composition » ci-dessus).

Les Inventeurs ont montré que la composition peut être utilisée efficacement pour protéger et/ou traiter les cultures sous une forme liquide ou sous une forme solide. La composition peut donc être appliquée sur les cultures sous forme liquide, ou sous forme solide (en particulier sous forme de poudre). Lorsque la composition est appliquée sous forme liquide, elle peut être présentée sous forme liquide directement prête à l'emploi, ou à diluer (forme concentrée). Elle peut également être présentée sous forme solide et pourra alors être diluée dans un solvant adapté avant application (par exemple extemporanément, ou pour un stockage à court, moyen ou long terme avant utilisation). La composition liquide peut notamment se présenter sous une forme concentré (pouvant par exemple être diluée avant utilisation, par exemple 20 fois concentrée, ou encore 15 fois, 10 fois, 8 fois, 5 fois, 4 fois, 3 fois ou encore 2 fois concentrée) ou sous une forme prête à l'emploi. La composition présente en effet une efficacité antifongique quelle que soit la forme de la composition.

Lorsque la composition est utilisée sous forme liquide (en particulier pour la composition liquide prête à l'emploi, éventuellement après dilution d'une composition liquide concentrée ou après mise en solution d'une composition solide), la teneur en bicarbonate de potassium va de 5 à 60 grammes par litre de composition (g/L), de préférence de 8 à 55 g/L, de préférence de 10 à 50 g/L, de préférence de 15 à 45 g/L, de préférence de 20 à 40 g/L, de préférence de 25 à 35 g/L, de préférence de 28 à 33 g/L, de préférence de 30 à 35 g/L de composition appliquée. En effet, les données montrent que l'efficacité de protection et/ou de traitement des cultures, notamment l'activité antifongique, est particulièrement élevé lorsque la concentration en bicarbonate de potassium va de 5 à 60 g/L, dans la composition liquide appliquée sur les cultures.

Selon un mode de réalisation, la composition est appliquée sous la forme d'une solution aqueuse, de préférence sous la forme d'une solution aqueuse pulvérisable, de préférence encore sous la forme d'un aérosol. Avantageusement, la composition est appliquée sur les cultures par pulvérisation et/ou vaporisation et/ou projection. Ainsi, la composition peut être pulvérisée et/ou vaporisée et/ou projetée sur les cultures. Dans ce cas, la méthode comprend une étape de pulvérisation et/ou vaporisation et/ou projection de la composition sur les cultures.

Selon un mode de réalisation, la méthode est caractérisée en ce que la composition est appliquée sur les cultures avant ou après récolte desdites cultures, de préférence par pulvérisation et/ou vaporisation et/ou projection. Ainsi, la méthode comprend, ou consiste en, ou consiste essentiellement en une étape d'application de la composition sur les cultures, avant ou après récolte desdites cultures.

Avantageusement, la méthode est une méthode phytosanitaire. La méthode peut donc être une méthode de traitement et/ou protection et/ou contrôle phytosanitaire.

Selon un mode de réalisation, la méthode comprend, ou consiste en, ou consiste essentiellement en, la protection des cultures (en particulier des vignes, des cucurbitacées, des solanacées (de préférence les pommes de terre), et toute combinaison de celles-ci ; de préférence encore des vignes) contre les champignons pathogènes et/ou maladies fongiques.

Selon un mode de réalisation, la méthode comprend, ou consiste en, ou consiste essentiellement en le traitement des cultures (en particulier des vignes, des cucurbitacées, des solanacées (de préférence les pommes de terre), et toute combinaison de celles-ci ; de préférence encore des vignes) contre les champignons pathogènes et/ou maladies fongiques.

Selon un mode de réalisation, la méthode comprend, ou consiste en, ou consiste essentiellement en, la protection et/ou le traitement des cultures (en particulier des vignes, des cucurbitacées, des solanacées (de préférence les pommes de terre), et toute combinaison de celles-ci ; de préférence encore des vignes) contre les champignons pathogènes et/ou maladies fongiques.

Alternativement ou en combinaison, la méthode comprend, ou consiste en, ou consiste essentiellement en le contrôle des champignons pathogènes et/ou maladies fongiques sur les cultures (en particulier les vignes, les cucurbitacées, les solanacées (de préférence les pommes de terre), et toute combinaison de celles-ci ; de préférence encore les vignes).

Selon un mode de réalisation, la méthode est pour traiter et/ou protéger les cultures (en particulier les vignes, les cucurbitacées, les solanacées (de préférence les pommes de terre), et toute combinaison de celles-ci ; de préférence encore les vignes) et/ou contrôler le développement des champignons pathogènes et/ou maladies fongiques sur les cultures (en particulier les vignes, les cucurbitacées, les solanacées (de préférence les pommes de terre), et toute combinaison de celles-ci ; de préférence encore les vignes).

Selon un mode de réalisation, le champignon pathogène est choisi parmi les champignons phytopathogènes, en particulier parmi le mildiou de la vigne (*Plasmopara viticola*), l'oïdium de la vigne (*Uncinula necator* et/ou *Erysiphe necator*), la pourriture de la vigne (*Botrytis cinerea*), le mildiou des solanacées (*Phytophthora parasitica* et/ou *Phytophtora infestans*), le mildiou des cucurbitacées (*Pseudoperonospora cubensis*) et une combinaison quelconque de ceux-ci, de préférence le mildiou de la vigne (*Plasmopara viticola*).

La présente invention concerne en particulier une méthode pour protéger les cultures des champignons pathogènes et/ou maladies fongiques, pour traiter les cultures contre les champignons pathogènes et/ou maladies fongiques, pour contrôler les champignons pathogènes et/ou maladies fongiques sur les cultures, et pour une combinaison quelconque de ceux-ci, comprenant l'application d'une composition telle que définie ci-dessus ; dans laquelle les cultures sont de préférence des vignes, des cucurbitacées, des solanacées (de préférence les pommes de terre), et toute combinaison de celles-ci ; de préférence encore des vignes.

La présente invention concerne également une méthode de protection et/ou de traitement des cultures, comprenant les étapes suivantes :

a) préparation d'une composition telle que définie ci-dessus, comprenant par exemple la dilution de la composition concentrée ou de la composition solide telle que définie ci-dessus avec un solvant approprié, et/ou la mise en œuvre du kit tel que défini ci-dessus) ; et

b) l'application de la composition selon l'étape a) sur les cultures à traiter.

Avantageusement, à l'étape b), la composition de l'étape a) est appliquée extemporanément.

## DESCRIPTION DES FIGURES

Figure 1 : Courbes d'inhibition de croissance des souches A : PV221 ; B : PV1538-1 ; C : PV413-1 de *P. viticola*, en fonction de différentes concentrations de chacune des 5 compositions testées (Produits 1 à 5 de l'exemple 2).

Figure 2 : Courbes d'inhibition de la croissance des souches PV221 ; PV1538-1 ; PV413-1 de P. *viticola* en fonction de différentes concentrations de chacune des compositions 1 à 5 (Produits 1 à 5 de l'exemple 2, respectivement représentés sur les panneaux A à E).

Figure 3 : Valeurs de CI50 et CMI obtenues pour chaque composition (Produits 1 à 5 de l'exemple 2) et chaque souche de mildiou (*P. viticola*).

Figure 4 : Valeurs de CI50 et CMI moyennes obtenues pour chaque composition (Produits 1 à 5 de l'exemple 2).

Figure 5 : Courbes d'inhibition de croissance des souches PV221 ; PV1538-1 ; et PV413-1 de *P. viticola,* en fonction de différentes concentrations de chacune des 6 compositions testées (Produits 1 à 6 de l'exemple 3).

Figure 6 : Courbes d'inhibition de la croissance des souches PV221 ; PV1538-1 ; PV413-1 de *P. viticola* en fonction de différentes concentrations de chacune des compositions 1 à 6 (Produits 1 à 6 de l'exemple 3).

Figure 7 : Valeurs de CI50 et CMI obtenues pour chaque composition (Produits 1 à 6 de l'exemple 3) et chaque souche de mildiou (*P. viticola*).

Figure 8 : Valeurs de CI50 et CMI moyennes obtenues pour chaque composition (Produits 1 à 6 de l'exemple 3).

Figure 9 : Courbes d'inhibition de croissance du mildiou observée sur les plants de vignes traités avec les trois doses (D1, D2 et D3) des 4 produits (Produits 1 à 4 de l'exemple 4). au cours du temps : juste après le premier traitement (J0-T1), 7 jours après le premier traitement (J7-T1), juste après le deuxième traitement (J0-T2) et 7 jours après le deuxième traitement (J7-T2).

Figure 10 : Courbes d'inhibition de croissance du mildiou observée sur les plants de vignes traités avec la concentration moyenne (D2) des 4 produits au cours du temps de l'expérience.

Figure 11 : Aire sous la courbe de progression de l'inhibition de la croissance du mildiou (AUDPC) obtenue au cours de l'essai. Les données des courbes d'inhibition de croissance de la figure 10 ? ont été transformées en une valeur unique. Les valeurs sont des moyennes ± SD de l'AUDPC obtenu.

Figure 12 : Graphes montrant le pourcentage moyen d'inhibition de la croissance du champignon par les produits 1 à 4, par rapport à la condition témoin (pulvérisée avec de l'eau stérile), après lessivage. **A)** Lessivage fin (Pluie : 25 mm pendant 4 heures). **B)** Lessivage fort (Orage : 20 mm en 20 minutes).

**EXEMPLES**

**EXEMPLE 1 : Mise au point des formulations**

Dans le cadre de sa démarche environnementale globale, Château Montrose s'est engagé à pratiquer une viticulture verte reposant sur les principes de l'agriculture biologique. Le mildiou de la vigne est une des maladies les plus problématique de la région bordelaise car située en front océanique (climat humide). Pour combattre contre cette maladie en lutte biologique, seul le cuivre est réellement efficace. En outre, l'agriculture biologique n'autorise pour lutter contre le mildiou de la vigne (*Plasmopara viticola*) que l'usage du cuivre. Or ce dernier contamine et pollue progressivement les sols viticoles année après année, traitement après traitement. En outre, le cuivre pouvait être utilisé pour un maximum de 6 kg/ha/an jusqu'en 2018, et, depuis 2019, pour 4 kg/ha/an. Le statut du cuivre et son utilisation étant revu tous les 5 ans au niveau européen, il a semblé stratégique à Château Montrose d'anticiper une viticulture sans recours à ce métal.

Dans le cadre de son activité R&D dirigée par Vincent Decup, Château Montrose a cherché une solution permettant à terme le remplacement total ou partiel du cuivre. Il a souhaité développer une formule alternative sur la base d'un sous-produit issu de sa fermentation alcoolique, le bicarbonate de potassium. Cette matière est déjà connue pour ses effets limitant le développement de l'oïdium (*Erysiphe necator* ou *Uncinula necator*), du mildiou de la vigne (*Plasmopara viticola*) et de la pourriture grise (*Botrytis cinerea*) en viticulture. Toutefois, les solutions aqueuses de bicarbonate de potassium présentent une faible adhérence et un faible pouvoir d'étalement sur les pieds de vigne traités (en particulier sur les feuilles de vigne) lorsque qu'aucun excipient n'est utilisé. En outre, ces solutions sont facilement lessivées par les intempéries (en particulier par l'eau de pluie) lors de son passage en plein champ traité. Il serait donc avantageux de disposer de nouvelles compositions de bicarbonate ayant une activité antifongique optimisée, présentant une meilleure adhérence, un meilleur étalement, une résistance au lessivage et une longévité augmentée sur les feuilles de vignes, de cucurbitacées, et de solanacées, tout en étant adaptée à une utilisation en agriculture biologique, notamment en viticulture biologique.

Château Montrose a donc dans un premier temps testé l'effet de cette molécule sur le mildiou, l'oïdium et la pourriture de la vigne, à la fois pour valider son efficacité et vérifier son innocuité. L'effet du bicarbonate de potassium sur ces phytopathogènes a été significatif et à des concentrations acceptables pour le végétal en termes de phytotoxicité. Château Montrose a ensuite décidé de formuler cette matière active afin d'améliorer/optimiser l'efficacité du produit. Lors de ce travail, il s'agissait de trouver des excipients/adjuvants s'ajoutant au bicarbonate de potassium, qui soient capables d'améliorer à la fois l'étalement du produit sur la feuille, son adhérence, et d'éviter son lessivage par l'eau de pluie lors de son passage en plein champ. Seuls des composés acceptables sur le plan phytosanitaire et 100% biosourcés (issus du vivant) ont été testés pour la constitution de la formule.

La formule générale des compositions (sous forme solide ou liquide) testées est indiquée dans le tableau 1.

*Tableau 1 : Composition phytosanitaire antifongique testée (les quantités sont indiquées en % en poids par rapport au poids total de composition).*

| Ingrédient | % en poids / poids total |
|---|---|
| Bicarbonate de potassium KHCO$_3$ | 5-90% |
| Tensioactif anionique appartenant à la famille des taurates | 0,1-30% |
| Tensioactif polymère polyélectrolyte anionique | 0,1-40% |
| Tensioactif non-ionique | 0,01-40% |
| Tensioactif cationique | 0,001-30% |
| Argile | 0,5-60% |
| Solvant (aqueux, par exemple eau) | 0-90% |
| Total | 100% |

**1.1. Principe actif : bicarbonate de potassium**

Château Montrose a mis au point un procédé de production du bicarbonate de potassium particulièrement intéressant sur le plan écologique, tout en étant très efficace. Château Montrose a ainsi montré que du bicarbonate de potassium d'une grande pureté peut être obtenu à partir d'une fermentation alcoolique, telle que la fermentation du vin. Pendant la fermentation alcoolique, telle que la transformation du raisin en vin, il y a un dégagement de dioxyde de carbone. Dans le procédé mis au point, ce dernier est capté par un système de canalisation puis est acheminé vers des colonnes à l'extérieur du chai dans lesquelles se trouve une solution de carbonate de potassium. En barbotant dans cette solution, le dioxyde de carbone se fixe au carbonate pour devenir du bicarbonate qui cristallise à saturation du milieu. La poudre ainsi formée est extraite dans les colonnes dans des bags de 500 kg à 1 T.

Grâce à ce procédé, Château Montrose a notamment été en mesure de produire plus de 2 tonnes de bicarbonate de potassium en 2018.

Le bicarbonate de potassium utilisé dans les compositions selon l'invention peut être obtenu/produit par n'importe quel procédé approprié. Toutefois, le bicarbonate de potassium biosourcé est préféré, en particulier celui obtenu par la fermentation alcoolique (tel que décrit ci-dessus).

Ainsi, ce procédé présente le triple avantage de valoriser les gaz produits lors de la fermentation du vin, de produire un composé important sur les plans industriels et économiques, et de limiter la libération du dioxyde de carbone, un gaz à effet de serre détrimentaire pour la couche d'ozone.

### 1.2 Mise au point des compositions sous forme solide

#### 1.2.1. Concentration en matière active (bicarbonate de potassium)

Des tests ont été menés afin de déterminer la concentration optimale en bicarbonate de potassium dans une composition solide (telle qu'une poudre). Les tests ont révélé que la concentration optimale en bicarbonate de potassium va de 50% à 62% (environ).

#### 1.2.2. Choix des excipients

Les données montrent que les tensioactifs anioniques appartenant à la famille des taurates (notamment les N-méthyltaurates), les tensioactifs polymères polyélectrolytes anioniques (notamment les sulfonates), les tensioactifs non-ioniques (notamment les alcools éthoxylés), les tensioactifs cationiques (notamment les polymères organo-minéraux), et les argiles (notamment les silicates), sont particulièrement adaptés. En effet, la compatibilité de ces excipients avec le bicarbonate de potassium est optimale (données non montrées).

#### 1.2.3. Optimisation des compositions

Les résultats les plus favorables sont observés avec les compositions optimisées décrites dans le tableau 2 ci-dessous.

*Tableau 2 : Compositions optimisées (les quantités sont indiquées en % en poids par rapport au poids total de composition sous la forme solide).*

| Identifiant composition | 20B14GR01 | 20F16GR01 | 20F17GR01 | 20F26WG01 | 20F29WG01 | 20G08WG01 | 20G09WG01 |
|---|---|---|---|---|---|---|---|
| Composé | % (en poids) | % (en poids) | % (en poids) | % (en poids) | % (en poids) | % (en poids) | % (en poids) |
| Ufoxane 3A (polymère polyélectrolyte anionique lignosulfonate) | 10 | 10 | 10 | 10 | 10 | 10 | 10 |
| Tergitol 15-S-12 (tensioactif non-ionique alcool éthoxylé) | 7,5 | 5 | 5 | 2,5 | 2,5 | 4 | 2,5 |
| Adinol OT-72 (tensioactif anionique taurate) | 6 | 6 | 6 | 6 | 3 | 3 | 3 |

(suite)

| Identifiant composition | 20B14GR 01 | 20F16GR 01 | 20F17GR 01 | 20F26WG 01 | 20F29WG 01 | 20G08WG 01 | 20G09WG 01 |
|---|---|---|---|---|---|---|---|
| Rhodorsil EP6703 (ten-sioactif catio-nique PDMS) | 1 | 1 | 1 | 1 | 1 | 1 | 1 |
| Argirec B22 (argile kaolinite) | 25,5 | 28 | 25,5 | 25,5 | 23,5 | 22 | 21,5 |
| Bicarbonate de potassium (KHCO3) | 50 | 50 | 52,5 | 55 | 60 | 60 | 62 |
| Total | 100 | 100 | 100 | 100 | 100 | 100 | 100 |
| Numéro de produit correspondant | Produit 2 dans l'exemple 2 ci-dessous | Produit 1 dans l'exemple 3 ci-dessous | Produit 2 dans l'exemple 3 ci-dessous | Produit 3 dans l'exemple 3 ci-dessous | Produit 4 dans l'exemple 3 ci-dessous | Produit 5 dans l'exemple 3 ci-dessous | Produit 6 dans l'exemple 3 ci-dessous |

**EXEMPLE 2 : Supériorité de l'activité antifongique de compositions selon l'invention**

Compositions testées :

Produit 1 :     20A20SL01
Produit 2 :     20B14GR01
Produit 3 :     20B17GR01
Produit 4 :     20B18GR01
Produit 5 :     20B14GR01 + adjuvant (glycérine en solution à 5% pour 10% de bicarbonate de potassium).

Les produits 2 et 5 sont des compositions selon l'invention, dont la composition solide est donnée dans le tableau 2 ci-dessus et rappelée dans le tableau 3 ci-dessous (la composition du produit 5 est la même que celle du produit 2, hormis la présence additionnelle d'un adjuvant).

Les produits 1, 3 et 4 sont des produits comparatifs. Leur composition est indiquée dans le tableau 3 ci-dessous.

*Tableau 3 : Compositions testées dans l'exemple 2 (les quantités sont indiquées en % en poids par rapport au poids total de composition solide ou liquide).*

| Identifiant composition | Produit 1 : 20A20SL01 | Produit 2 : 20B14GR01 | Produit 3 : 20B17GR01 | Produit 4 : 20B18GR01 |
|---|---|---|---|---|
| Composé | % (en poids) | **% (en poids)** | % (en poids) | % (en poids) |
| Ufoxane 3A (polymère polyélectrolyte anionique lignosulfonate) | 0 | **10** | 10 | 10 |
| Tergitol 15-S-12 (tensioactif non-ionique alcool éthoxylé) | 1,5 | **7,5** | 0 | 5 |
| Adinol OT-72 (tensioactif anionique taurate) | 0 | **6** | 7,5 | 0 |
| Rhodorsil EP6703 (tensioactif cationique PDMS) | 0 | **1** | 1 | 1 |
| Argirec B22 (argile kaolinite) | 0 | **25,5** | 31,5 | 31,5 |

(suite)

| Identifiant composition | Produit 1 : 20A20SL01 | Produit 2 : 20B14GR01 | Produit 3 : 20B17GR01 | Produit 4 : 20B18GR01 |
|---|---|---|---|---|
| Bicarbonate de potassium (KHCO3) | 10 | **50** | 50 | 50 |
| Glycérine (glycérol) | 5 | **0** | 0 | 0 |
| Supragil MNS 90 | 0 | **0** | 0 | 7,5 |
| Eau | 83,5 | **0** | 0 | 0 |
| Total | 100 | **100** | 100 | 100 |
| | Composition comparative | **Composition selon l'invention** | Composition selon l'invention | Composition comparative |

### 2. 1. Objectif

L'objectif de cet essai était d'évaluer l'efficacité des cinq formulations à base de bicarbonate de potassium (Produits 1-5), contre les phytopathogènes, notamment le Mildiou de la vigne et définir les concentrations minimales inhibitrices.

### 2.2. Matériels et méthodes

#### 2.2.1. Matériel végétal

La production s'effectue en serre, à partir de boutures foliaires réalisées à partir de sarments placés dans des godets de terreau cultivés en serre, avec une photopériode de 16 heures. Le temps minimal pour obtenir des plants comportant 4 à 5 feuilles bien développées est d'environ 4 semaines.

Les troisièmes et quatrièmes feuilles à partir de l'apex de plants âgés de 2 mois ont été utilisées pour les différents tests. Les expériences au laboratoire ont été réalisées sur des disques de feuilles de 18 mm de diamètre.

#### 2.2.2. Matériel Fongique

Le mildiou est un agent pathogène obligatoire strict, c'est-à-dire qu'il ne peut se multiplier en absence de leur plante hôte.

Le laboratoire possède une collection de souches mono-sporange issues de collectes sur le terrain, conservée à - 20°C. Les souches utilisées dans ces essais sont les souches référencées sous les identifiants PV221, PV413-1, et PV1538-1. Les tests sont réalisés sur des disques de feuilles de 18 mm de diamètre placés dans la boîte de Petri, face supérieure en contact avec du papier Whatman.

#### 2.2.3. Méthodes : Tests d'efficacité in vitro

Les différentes concentrations de produits sont appliquées sur les disques de feuilles à l'aide d'un aérographe juste avant l'inoculation des agents pathogènes (extemporanément). Les disques sont ensuite séchés à l'air libre durant une heure.

Des contrôles sont réalisés en appliquant la même quantité d'eau distillée stérile sur des disques de feuilles.

L'inoculation s'effectue grâce à une suspension sporanges préparée entre 5 000 et 10 000 sporanges /ml à raison de 3 gouttes de 15 $\mu$l par disque de feuilles.

L'efficacité du traitement est déterminée par une évaluation visuelle du développement de l'agent pathogène après 7 jours à 22°C.

Les résultats sont présentés comme le pourcentage moyen d'inhibition de la croissance du champignon par rapport à la modalité témoin, pulvérisée avec de l'eau stérile, obtenu par le calcul suivant :

$$\% \text{ inhibition} = 100 \times 1 - (\% \text{ croissance "traités"} / \% \text{ croissance "témoins"})$$

La valeur correspondant à la dose inhibant à 50 % la croissance du champignon (CI50) et la concentration minimale inhibitrice (CMI) sont déterminées à l'aide des représentations graphiques du pourcentage d'inhibition en fonction de la concentration du produit, permettant ainsi de fixer une dose applicable au champ.

Pour chaque essai réalisé, deux expériences indépendantes sont menées.

### 2.3. Résultats

Les tests ont été menés pour les souches PV221, PV413-1 et PV1538-1, à raison de 1 boite de 8 disques de feuilles traitées par modalité et 6 concentrations différentes pour chaque formulation testée (0 g/L, 0,35 g/L, 0,65 g/L, 1,25 g/L, 2,5 g/L, 5 g/L et 10 g/L).

### 2.3.1. Activité antifongique

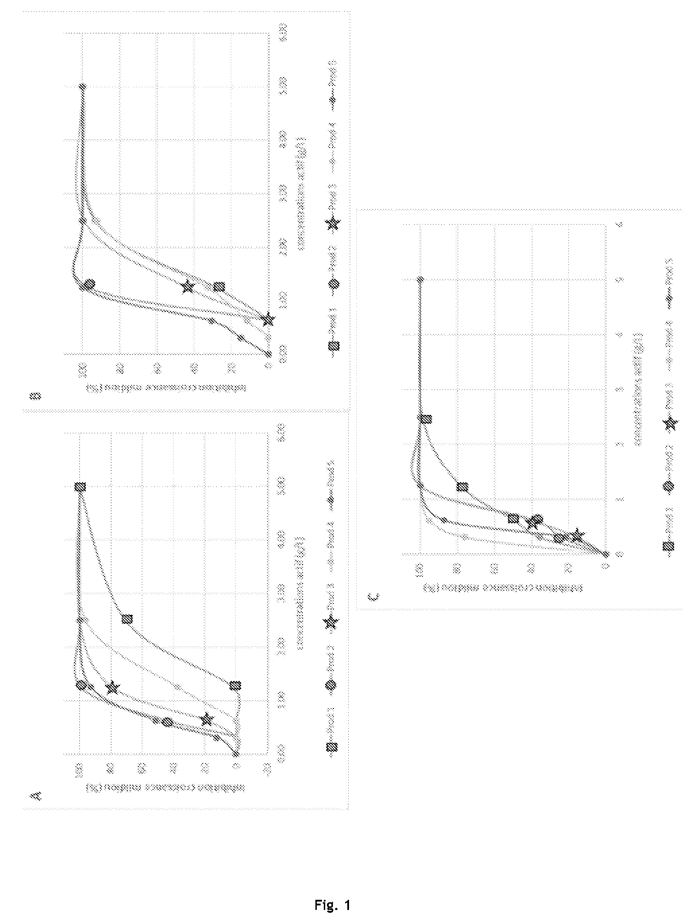

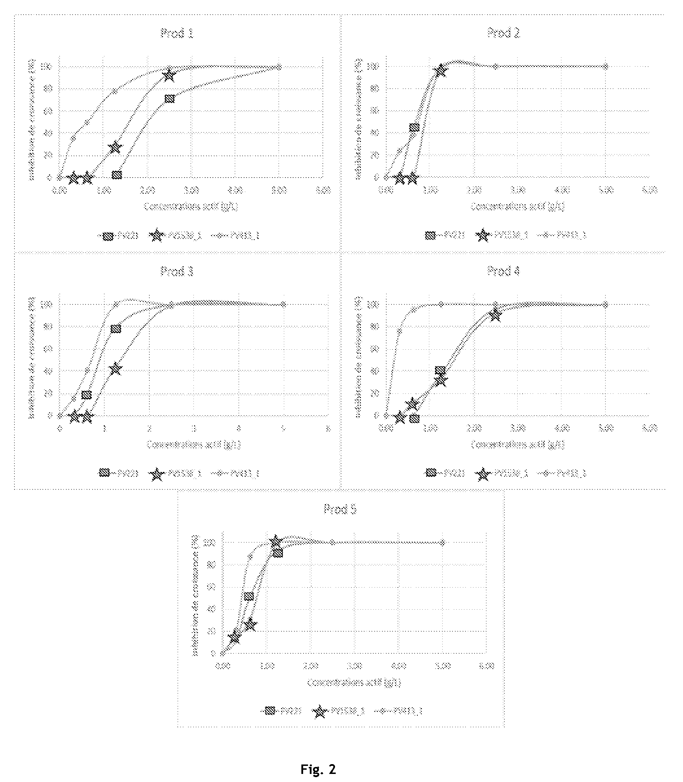

Les résultats sont présentés dans les Figures 1 et 2. Les données montrent que les cinq produits testés sont capables d'inhiber la croissance des différentes souches de mildiou testées. Les données montrent que l'efficacité du produit peut varier fonction de la souche testée mais également de la composition testée.

Ainsi, dans les conditions testées, les produits 2 et 5 présentent une meilleure efficacité sur les souches PV221 et PV 1538-1 que les produits 1 et 4, le produit 3 ayant une efficacité intermédiaire. Le produit 4 semble plus efficace que les autres sur la souche PV 413-1 (Figure 1).

La Figure 2 montre l'efficacité de chacun des produits. De manière importante, les produits 2 et 5 sont particulièrement actifs dans les conditions testées et présentent une efficacité homogène, quelle que soit la souche.

De plus, les résultats obtenus montrent un effet souche important. En effet, bien que les efficacités des 5 formulations semblent être plus homogènes avec les souches PV-221 et PV1538-1 elles se détachent de celles de la souche PV413-1.

Les produits 2 et 5 présentent des efficacités similaires et particulièrement élevées quelle que soit la souche testée, alors que le produit 1 semble moins efficace contre la souche PV-221, et le produit 3 moins efficace contre la souche PV1538-1, dans les conditions testées.

### 2.3.2. Calculs des CI50 et CMI

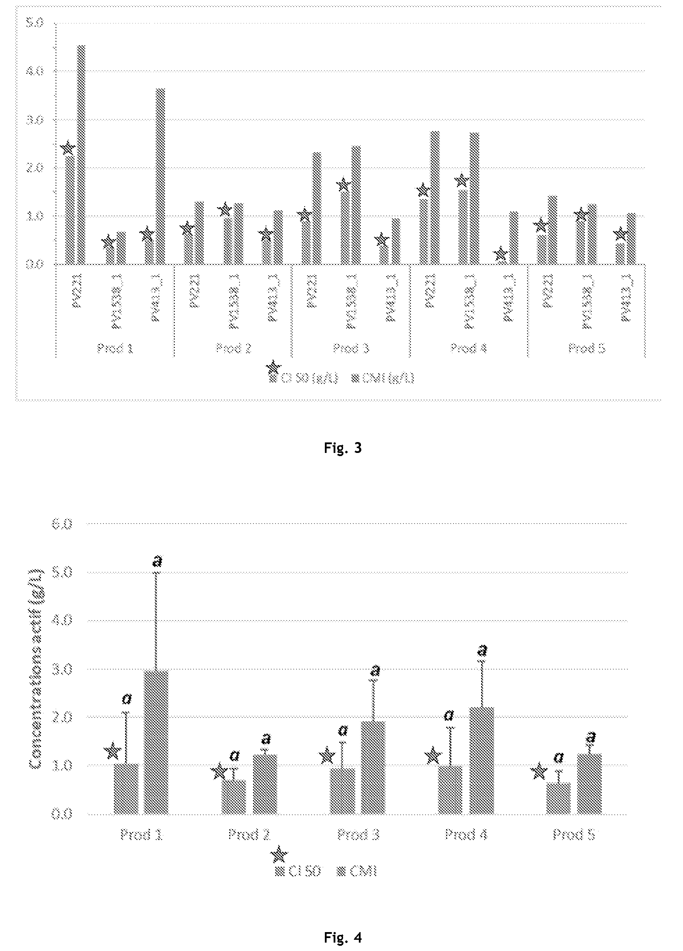

En fonction des équations des courbes obtenues (Figures 1 et 2), il est alors possible de déterminer les valeurs de CI50 (valeurs de x pour lesquelles une valeur de 50 ou de 100 est obtenue en y). Les valeurs de CI50 et CMI obtenues sont montrées sur la Figure 3 et le tableau 4 ci-dessous.

Tableau 4 : Valeurs de CI50 et CMI obtenues pour chaque composition testée et chaque souche de mildiou

| | Produit 1 | | | Produit 2 | | | Produit 3 | | | Produit 4 | | | Produit 5 | | |
|---|---|---|---|---|---|---|---|---|---|---|---|---|---|---|---|
| Souche | PV221 | PV1538-1 | PV 413-1 | PV221 | PV1538-1 | PV 413-1 | PV221 | PV1538-1 | PV 413-1 | PV221 | PV1538-1 | PV 413-1 | PV221 | PV1538-1 | PV 413-1 |
| CI 50 (g/L) | 2.24 | 0.35 | 0.52 | 0.64 | 0.95 | 0.52 | 0.89 | 1.50 | 0.40 | 1.35 | 1.54 | 0.06 | 0.60 | 0.89 | 0.44 |
| CMI (g/L) | 4.55 | 0.68 | 3.66 | 1.30 | 1.27 | 1.12 | 2.33 | 2.47 | 0.95 | 2.78 | 2.72 | 1.09 | 1.43 | 1.24 | 1.07 |

Les valeurs de CI50 calculées pour les différentes compositions fluctuent entre 0,06 g/L (produit 4, PV413-1) et 2,24 g/L (produit 1, PV221) soit d'un facteur 37 alors que les CMI varient de 0,68 g/L (produit 1, PV1538-1) et 4,55 g/L (produit 1, PV221) soit presque d'un facteur 7 (Figure 3 et tableau 4).

Les valeurs de CI50 et CMI moyennes (en g/L) obtenues pour les 5 compositions sont représentées en Figure 4 et dans le tableau 5 ci-dessous.

*Tableau 5 : Valeurs de CI50 et CMI moyennes obtenues pour les 5 compositions.*

| | Produit 1 | | Produit 2 | | Produit 3 | | Produit 4 | | Produit 5 | |
|---|---|---|---|---|---|---|---|---|---|---|
| **CI 50** | 1,04 | ± 1,05 | 0,70 | ± 0,22 | 0,93 | ± 0,55 | 3,98 | ± 0,81 | 0,65 | ± 0,23 |
| **CMI** | 2,96 | ± 2,03 | 1,23 | ± 0,10 | 1,92 | ± 0,84 | 2,20 | ± 0,96 | 1,25 | ± 0,18 |

*2.3.3. Comparaisons avec une solution aqueuse de bicarbonate de potassium*

Les valeurs de CI50 et CMI moyennes sont calculées pour des formulations aqueuses de bicarbonate de potassium sans aucun excipient (formulation eau + KHCO3), en suivant la méthode décrite dans les sections 2.2.3 et 2.3.1 ci-dessus. Une formulation aqueuse de bicarbonate de sodium sans aucun autre excipient (formulation eau + NaHCO3) est également utilisée comme contrôle.

Les résultats obtenus sont présentés dans le tableau 6 ci-dessous.

*Tableau 6 : Valeurs de CI50 et CMI moyennes obtenues les solutions aqueuses de bicarbonate de potassium et de bicarbonate de sodium*

| | NaHCO3 | KHCO3 |
|---|---|---|
| CI50 | 1,85 g/L | 1 g/L |
| CMI | 10 g/L | 5,6 g/L |

Les données montrent que les valeurs de CI50 (dose inhibant à 50 % la croissance du champignon) et les valeurs de CMI (concentration minimale inhibitrice) obtenues avec les produits 2 et 5 (compositions selon l'invention) sont significativement inférieures à celles obtenues avec la solution aqueuse de bicarbonate de potassium ou de bicarbonate de sodium. Cela met en évidence l'efficacité supérieure des compositions selon l'invention vis-à-vis de l'actif non formulé (solution aqueuse de bicarbonate de potassium ou de bicarbonate de sodium), contre le mildiou.

Les valeurs de CI50 obtenues avec les produits comparatifs 1, 3 et 4 ne présentent pas de différences significatives avec celles obtenues pour la solution aqueuse de bicarbonate de potassium, dans les conditions testées. En revanche, ces produits présentent des valeurs de CMI significativement inférieures à celle de la solution aqueuse de bicarbonate de sodium.

Ainsi, les valeurs de CMI de chacun des produits testés (1-5) par rapport à l'actif non formulé (solution aqueuse de bicarbonate de potassium ou de bicarbonate de sodium), révèlent une amélioration significative de l'efficacité antifongique de chacun des produits testés (1,23 g/L à 2,96 g/L par rapport à 5,6 g/L respectivement).

Dans l'ensemble, ces données montrent que les différents produits testés présentent un effet antifongique permettant d'inhiber la croissance du champignon responsable du mildiou de la vigne. Ainsi, les données montrent que les produits 1 à 5 présentent un effet antifongique significatif et satisfaisant. En particulier, les meilleurs résultats ont été obtenus avec les produits 2 et 5, dans les conditions testées. Les compositions des produits 2 et 5 permettent donc d'améliorer significativement l'efficacité du bicarbonate de potassium. L'ajout de l'adjuvant dans la formulation du produit 5 n'apporte aucune modification notable dans l'efficacité du produit 2, dans les conditions testées.

Les propriétés d'adhérence, d'étalement, de résistance au lessivage et de longévité sont testées sur les feuilles de vignes pour chacun des produits 1-5 et sont comparées avec celles d'une solution aqueuse de bicarbonate de potassium.

Les produits 1-5, et en particulier les produits 2 et 5, présentent une meilleure adhérence, un meilleur étalement, une résistance augmentée au lessivage et une plus grande longévité sur les feuilles de vignes, comparativement à la solution aqueuse de bicarbonate de potassium.

**EXEMPLE 3 : Supériorité de l'activité antifongique de compositions selon l'invention**

Compositions testées :

| Produit 1 : | 20F16GR01 |
|---|---|
| Produit 2 : | 20F17GR01 |
| Produit 3 : | 20F26WG01 |
| Produit 4 : | 20F29WG01 |
| Produit 5 : | 20G08WG01 |
| Produit 6 : | 20G09WG01 |

Les produits 1 à 6 sont des compositions selon l'invention, dont la composition solide est donnée dans le tableau 2 ci-dessus.

### 3.1. Objectif

L'objectif de cet essai était d'évaluer l'efficacité de six compositions additionnelles selon l'invention, à base de bicarbonate de potassium (Produits 1-6), contre les phytopathogènes, notamment le Mildiou de la vigne et définir les concentrations minimales inhibitrices.

### 3.2. Matériels et méthodes

#### 3.2.1. Matériel végétal

Le matériel végétal est comme dans l'exemple 2 (vignes) et est préparé comme dans l'exemple 2 (paragraphe 2.2.1 ci-dessus).

#### 3.2.2. Matériel Fongique

Le matériel fongique est comme dans l'exemple 2 (mildiou) et est préparé comme dans l'exemple 2 (paragraphe 2.2.2 ci-dessus).

#### 3.2.3 - Méthodes : Tests d'efficacité in vitro

Les différentes concentrations de produits sont appliquées sur les disques de feuilles à l'aide d'un aérographe juste avant l'inoculation des agents pathogènes (extemporanément). Les disques sont ensuite séchés à l'air libre durant une heure.

Des contrôles sont réalisés en appliquant la même quantité d'eau distillée stérile sur des disques de feuilles.

L'inoculation s'effectue grâce à une suspension sporanges préparée entre 40 000 et 50 000 sporanges /ml à raison de 3 gouttes de 15 $\mu$l par disque de feuilles.

L'efficacité du traitement est déterminée par une évaluation visuelle du développement de l'agent pathogène après 7 jours à 22°C.

Les résultats sont présentés comme le pourcentage moyen d'inhibition de la croissance du champignon par rapport à la modalité témoin, pulvérisée avec de l'eau stérile, obtenu par le calcul suivant :

$$\% \text{ inhibition} = 100 \times 1 - (\% \text{ croissance "traités" } / \% \text{ croissance "témoins"})$$

La valeur correspondant à la dose inhibant à 50 % la croissance du champignon (CI50) et la concentration minimale inhibitrice (CMI) sont déterminées comme dans l'exemple 2 (paragraphe 2.2.3 ci-dessus).

Pour chaque essai réalisé, deux expériences indépendantes sont menées.

### 3.3. Résultats

Les tests ont été menés pour les souches PV221, PV413-1 et PV1538-1, à raison de 1 boite de 8 disques de feuilles traitées par modalité et 6 concentrations différentes pour chaque formulation testée (0 g/L, 0,35 g/L, 0,65 g/L, 1,25 g/L, 2,5 g/L, 5 g/L et 10 g/L).

*3.3.1. Activité antifongique*

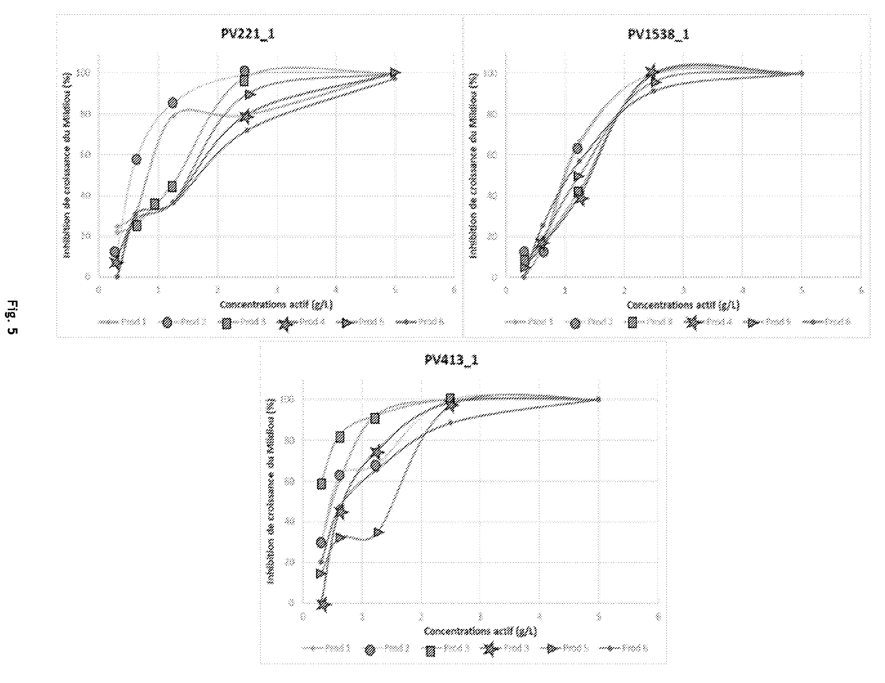

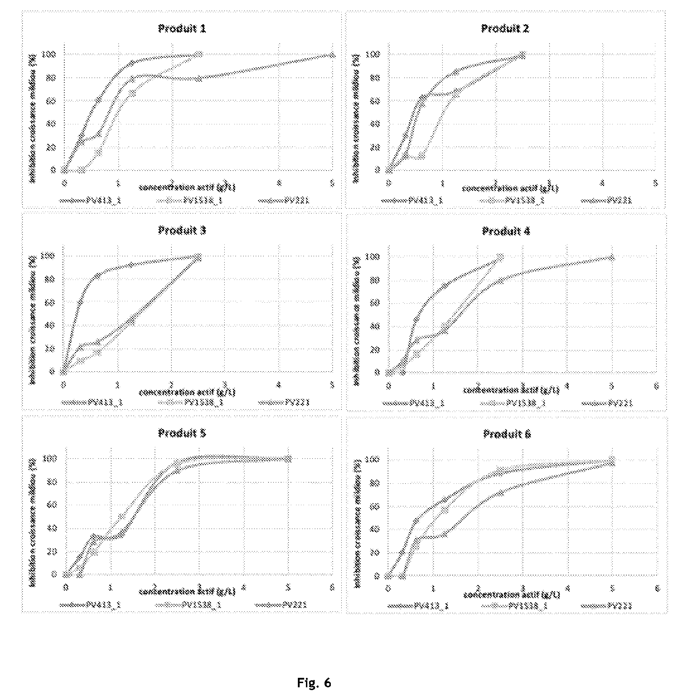

Les résultats sont présentés dans les Figures 5 et 6. Les données montrent que les six produits testés sont capables d'inhiber la croissance des différentes souches de mildiou testées. Les données montrent que l'efficacité du produit peut varier fonction de la souche testée pour les souches PV413-1 et PV221, mais également de la composition testée (Figure 5).

Les différentes compositions présentent en revanche des résultats d'efficacité assez similaires vis-à-vis de la souche PV1538-1.

Pour la souche PV413-1, les produits 1 et 3 présentent une meilleure efficacité que les autres produits, dans les conditions testées.

Pour la souche PV1538-1, les produits 1 et 3 présentent une meilleure efficacité que les autres produits.

Pour la souche PV221, les produits 1 et 2 présentent une meilleure efficacité que les autres produits.

Les produits 1, 3 et 4 semblent être moins efficaces contre les souches PV221 et PV1538-1 que contre la souche PV413-1 (Figure 6). Le produit 2 semble être le plus efficace pour la souche PV221 et le produit 5 pour la souche PV1538-1. Le produit 6 semble être efficace sur les souches PV413-1 et PV1538-1, dans les conditions testées.

De plus, les résultats obtenus montrent un effet souche important.

Les données révèlent que toutes les compositions testées sont efficaces contre la souche PV413-1, isolée à partir de variétés de vigne résistante. Cela est particulièrement intéressant, la lutte contre ce type de pathogène étant sensiblement plus difficile.

*3.3.2. Calculs des CI50 et CMI*

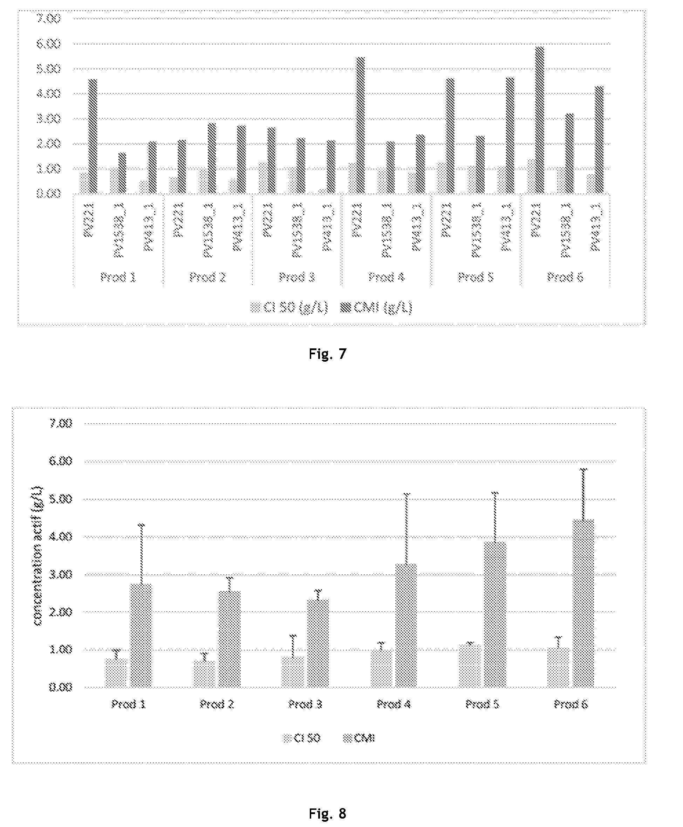

Les valeurs de CI50 (valeurs de x pour lesquelles une valeur de 50 ou de 100 est obtenue en y) et CMI sont déterminées à partir des équations des courbes obtenues (Figures 5 et 6). Les valeurs de CI50 et CMI obtenues sont montrées sur la Figure 7 et les tableaux 7 et 8 ci-dessous.

*Tableau 7 : Valeurs de CI50 et CMI obtenues pour les compositions testées (produits 1-3) et chaque souche de mildiou*

|  | Produit 1 | | | Produit 2 | | | Produit 3 | | |
|---|---|---|---|---|---|---|---|---|---|
| Souche | *PV221* | *PV1538-1* | *PV 413-1* | *PV221* | *PV1538-1* | *PV 413-1* | *PV221* | *PV1538-1* | *PV 413-1* |
| **CI 50 (g/L)** | 0,79 | 0,96 | 0,49 | 0,63 | 0,93 | 0,54 | 1,23 | 1,02 | 0,15 |
| **CMI (g/L)** | 4,54 | 1,61 | 2,04 | 2,13 | 2,80 | 2,71 | 2,61 | 2,21 | 2,11 |

*Tableau 8 : Valeurs de CI50 et CMI obtenues pour les compositions testées (produits 4-6) et chaque souche de mildiou*

|  | Produit 4 | | | Produit 5 | | | Produit 6 | | |
|---|---|---|---|---|---|---|---|---|---|
| Souche | *PV221* | *PV1538-1* | *PV 413-1* | *PV221* | *PV1538-1* | *PV 413-1* | *PV221* | *PV1538-1* | *PV 413-1* |
| **CI 50 (g/L)** | 1,21 | 0,90 | 0,80 | 1,22 | 1,08 | 1,05 | 1,35 | 1,03 | 0,76 |
| **CMI (g/L)** | 5,43 | 2,04 | 2,32 | 4,59 | 2,29 | 4,62 | 5,86 | 3,19 | 4,28 |

Les valeurs de CI50 des différentes formulations fluctuent entre 0,15 g/L (produit 3, PV413-1) et 1,35 g/L (produit 6, PV221) alors que les CMI varient de 1,61 g/L (produit 1, PV1538-1) et 5,86 g/L (produit 6, PV221) soit d'un facteur 3 environ (Figure 7, Tableaux 7 et 8), dans les conditions testées.

Les valeurs de CI50 et CMI moyennes (en g/L) obtenues pour les 6 compositions sont représentées en Figure 8 et dans le tableau 9 ci-dessous.

*Tableau 9 : Valeurs de CI50 et CMI moyennes obtenues pour les 6 compositions.*

|  | Produit 1 | | Produit 2 | | Produit 3 | | Produit 4 | | Produit 5 | | Produit 6 | |
|---|---|---|---|---|---|---|---|---|---|---|---|---|
| **CI 50** | 0,75 | ± 0,24 | 0,70 | ± 0,20 | 0,80 | ± 0,58 | 0,97 | ± 0,22 | 1,12 | ± 0,09 | 1,05 | ± 0,29 |
| **CMI** | 2,73 | ± 1,58 | 2,55 | ± 0,37 | 2,31 | ± 0,27 | 3,26 | ± 1,88 | 3,83 | ± 1,34 | 4,44 | ± 1,34 |

*3.3.3. Comparaisons avec une solution aqueuse de bicarbonate de potassium*

Les valeurs de CI50 et CMI moyennes calculées pour les compositions selon l'invention sont comparées à celles calculées pour des formulations aqueuses de bicarbonate de potassium sans aucun excipient (formulation eau + KHCO3) et des formulations aqueuses de bicarbonate de sodium sans aucun autre excipient (formulation eau + NaHCO3) et présentées dans le tableau 6 ci-dessus (paragraphe 2.3.3).

Les comparaisons révèlent que les valeurs de CI50 (dose inhibant à 50 % la croissance du champignon) et les valeurs de CMI (concentration minimale inhibitrice) obtenues avec les produits 1 à 3 (compositions selon l'invention) sont significativement inférieures à celles obtenues avec la solution aqueuse de bicarbonate de potassium ou de bicarbonate de sodium.

Les valeurs de CI50 obtenues avec les produits 4 à 6 sont comparables à celles obtenues pour la solution aqueuse de bicarbonate de potassium, dans les conditions testées. En revanche, ces produits présentent des valeurs de CMI significativement inférieures à celle de la solution aqueuse de bicarbonate de sodium.

Ces résultats mettent en évidence l'efficacité supérieure des compositions selon l'invention vis-à-vis de l'actif non formulé (solution aqueuse de bicarbonate de potassium ou de bicarbonate de sodium), contre le mildiou.

Ainsi, les valeurs de CMI de chacun des produits testés (1-6) par rapport à l'actif non formulé (solution aqueuse de bicarbonate de potassium ou de bicarbonate de sodium), révèlent une amélioration significative de l'efficacité antifongique de chacun des produits testés (2,31 g/L à 4,44 g/L par rapport à 5,6 g/L respectivement).

Les produits 1 à 3 se révèlent les plus efficaces dans les conditions testées (CI50 de 0,7 g/L à 0,8 g/L par rapport à 1 g/L respectivement).

Dans l'ensemble, ces données montrent que les différents produits testés présentent un effet antifongique permettant d'inhiber la croissance du champignon responsable du mildiou de la vigne. Ainsi, les données montrent que les produits 1 à 6 présentent un effet antifongique significatif et satisfaisant. En particulier, les meilleurs résultats ont été obtenus avec les produits 1 à 3, dans les conditions testées. Les compositions selon l'invention permettent donc d'améliorer significativement l'efficacité du bicarbonate de potassium.

Les propriétés d'adhérence, d'étalement, de résistance au lessivage et de longévité sont testées sur les feuilles de vignes pour chacun des produits 1-6 et sont comparées avec celles d'une solution aqueuse de bicarbonate de potassium.

Les produits 1-6 présentent une meilleure adhérence, un meilleur étalement, une résistance augmentée au lessivage et une plus grande longévité sur les feuilles de vignes, comparativement à la solution aqueuse de bicarbonate de potassium.

**EXEMPLE 4 : Supériorité de l'activité antifongique de compositions selon l'invention sur l'agent responsable du Mildiou de la vigne *(Plasmopara viticola)* en conditions semi-contrôlées en serre**

Compositions testées :

| | |
|---|---|
| Produit 1 : | 20F17GR01 |
| Produit 2 : | 20F26WG01 |
| Produit 3 : | 20F29WG01 |
| Produit 4 : | 20B14GR01 |

Les produits 1 à 4 sont des compositions selon l'invention, dont la composition solide est donnée dans le tableau 2 ci-dessus.

*4.1. Objectifs*

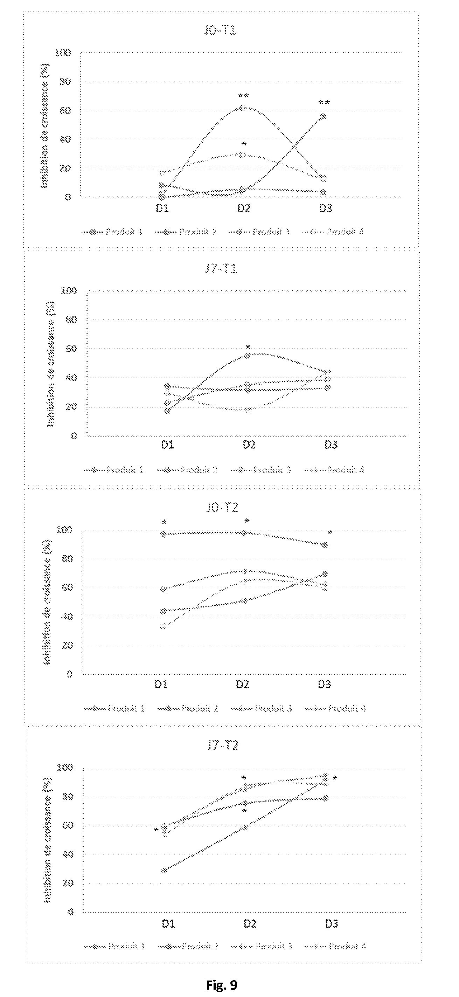

Les objectifs de cet essai étaient d'évaluer l'efficacité de 4 compositions additionnelles selon l'invention, à base de bicarbonate de potassium (Produits 1-4 dans les figures 9 à 12), contre les phytopathogènes, notamment le Mildiou de la vigne. Plus précisément, les objectifs étaient de définir la dose optimale à appliquer au vignoble, ainsi que les stratégies d'applications en fonction des caractéristiques des produits (phytotoxicité, rémanence, tenue au lessivage).

*4.2. Matériels et méthodes*

*4.2.1. Matériel végétal*

Le matériel végétal est comme dans l'exemple 2 (vignes). Il s'agit de boutures foliaires de cépage Cabernet-Sauvignon ayant au minimum 4 feuilles étalées (plants âgés de 1 à 2 mois).

Le matériel végétal est préparé comme dans l'exemple 2 (paragraphe 2.2.1 ci-dessus).

*4.2.2. Matériel Fongique*

Le matériel fongique est comme dans l'exemple 2 (mildiou de la vigne, *Plasmopara viticola*) et est préparé comme dans l'exemple 2 (paragraphe 2.2.2 ci-dessus).

*4.2.3 - Méthodes : Tests d'efficacité in vitro*

Les méthodes sont comme dans l'exemple 2 (paragraphe 2.2.3 ci-dessus).

### 4.3. Résultats

*4.3.1. Effet Doses sur plants de vigne*

Dans cet essai, 5 plants par condition testée sont utilisés, afin d'assurer les 4 prélèvements de feuilles prévus pour les tests *in vitro* d'efficacité fongicide qui se feront au laboratoire.

Deux applications consécutives sont réalisées à 10 jours d'intervalle sur la totalité des boutures (premier traitement : T1 ; second traitement : T2).

Trois doses sont testées pour chaque formulation : 1 à 1.2 x CMI obtenue au laboratoire, 2.5 à 3 x CMI et 5 à 6 x CMI, en fonction des formulations.

Pour évaluer l'efficacité fongicide des différents produits testés, 5 feuilles (3ème ou 4éme feuille depuis l'apex) de chaque plant sont prélevées à raison de 1 feuille par plant juste après T1 et T2 puis 7 jours après chaque traitement. Au laboratoire, 3 boites de Pétri contenant 6 disques de feuilles de 20 mm de diamètre sont préparées pour chaque modalité de traitement. L'inoculation s'effectue grâce à une suspension de sporanges préparée entre 5000 et 10 000 sporanges /ml à raison de 3 gouttes de 15 µl par disque de feuilles.

Les évaluations de la croissance des agents pathogènes sont réalisées après 7 jours d'incubation à 22°C.

Les résultats sont présentés comme le pourcentage moyen d'inhibition de la croissance du champignon par rapport à la modalité témoin, pulvérisée avec de l'eau stérile, obtenu par le calcul suivant :

$$\% \text{ inhibition} = 100 \times 1 - (\% \text{ croissance ''traités''} / \% \text{ croissance ''témoins''})$$

<u>Résultats :</u>

*Tableau 10: Rappel des caractéristiques des différents produits testés dans ces essais :*

| | Identification | Référence | Lot | % MA | CI50 (g MA/L) | | CMI (g MA/L) | |
|---|---|---|---|---|---|---|---|---|
| **Produit 1** | 20-F17-GR01 | 19-121-F-WG-02 | lot 21C18WG01 | 52.50% | 0.7 | +/- 0.20 | 2.55 | +/- 0.37 |
| **Produit 2** | 20-F26-WG01 | 19-121-F-WG-03 | lot 21C18WG02 | 55% | 0.8 | +/- 0.58 | 2.31 | +/- 0.27 |
| **Produit 3** | 20-F29-WG01 | 19-121-F-WG-04 | lot 21C19WG01 | 60% | 0.97 | +/- 0.22 | 3.26 | +/- 1.88 |
| **Produit 4** | 20-B14-GR01 | 19-121-F-WG-07 | lot 21 C22WG01 | 50% | 0.7 | +/- 0.22 | 1.23 | +/- 0.1 |

*Tableau 11: CMI réelles (g MA/L) des différentes doses des 4 produits préparées pour les essais : facteur CM*

| | dose 1 (g PF/L) | dose 2 (g PF/L) | dose 3 (g PF/L) |
|---|---|---|---|
| Produit 1 | 1.05 | 2.625 | 5.25 |
| Produit 2 | 1.1 | 2.75 | 5.5 |

(suite)

|  | dose 1 (g PF/L) | dose 2 (g PF/L) | dose 3 (g PF/L) |
|---|---|---|---|
| Produit 3 | 1.2 | 3 | 6 |
| Produit 4 | 1 | 2.5 | 5 |

La figure 9 montre que, juste après le premier traitement (J0-T1), les meilleurs résultats sont obtenus avec la dose moyenne (D2) du produit 3 et la dose forte (D3) du produit 2 avec une protection d'environ 60 %. Des résultats intermédiaires sont obtenus avec la dose moyenne (D2) du produit 4 (30 %).

Sept jours après le traitement 1, la dose moyenne (D2) du produit 1 donne une excellente protection (55 %). Les autres doses et les autres produits apportent également une protection significative (entre 17 et 44 %).

Juste après le traitement 2, les trois doses (D1, D2 et D3) du produit 2 donnent des résultats de protection excellents (entre 89 et 97 %), et les niveaux de protection obtenus avec les autres doses des autres produits apportent une protection significative comprise entre 32 et 70 %.

Sept jours après le deuxième traitement, toutes les doses des 4 produits apportent une protection significativement importante (entre 50 et 95 %). La protection apportée par la première dose du produit 1 est plus faible (28 %) mais reste significative.

### 4.3.2. Phytotoxicité

Des essais de phytotoxicité ont été réalisés. Dans ces essais, 5 plants par condition sont utilisés.

Deux applications consécutives sont réalisées à 10 jours d'intervalle sur la totalité des boutures.

Trois doses sont utilisées pour chaque formulation : 2 x CMI obtenue au laboratoire, 5 x CMI et 10 x CMI.

Des notations de phytotoxicité sont faites juste avant le premier traitement (T1) pour servir de référence puis juste avant le deuxième traitement (T2) et 7 jours après les deux traitements (T1 et T2) sur chaque niveau de feuilles du plant depuis l'apex.

**Résultats :**

*Tableau 12 : Evaluation de la phytotoxicité des différentes doses des 4 produits testés :*

|  |  | Phytotoxicité (%) | | | |
|---|---|---|---|---|---|
|  |  | J0 T1 | J+7 T1 | J+10 | J+7 T2 |
| **Produit 1** | [ ] min | 0 | 5.30 | 5.30 | 36.38 |
|  | [ ] moy | 0 | 10.98 | 7.89 | 57.06 |
|  | [ ] max | 0 | 30.05 | 32.55 | 77.38 |
| **Produit 2** | [ ] min | 0 | 0.00 | 0.00 | 3.00 |
|  | [ ] moy | 0 | 1.01 | 0.81 | 2.71 |
|  | [ ] max | 0 | 5.00 | 3.55 | 5.00 |
| **Produit 3** | [ ] min | 0 | 0.00 | 0.00 | 3.00 |
|  | [ ] moy | 0 | 0.00 | 0.00 | 3.00 |
|  | [ ] max | 0 | 5.00 | 5.00 | 10.00 |
| **Produit 4** | [ ] min | 0 | 0.00 | 0.00 | 3.00 |
|  | [ ] moy | 0 | 0.00 | 0.00 | 3.00 |
|  | [ ] max | 0 | 1.99 | 2.06 | 11.23 |

Les données du Tableau 12 montrent que le Produit 1 induit une phytotoxicité modérée qui augmente avec la dose.

La phytotoxicité observée pour le Produit 2 est significativement plus faible. Aucune réaction phytotoxique n'est observée pour les doses faibles et pour la dose intermédiaire des produits 3 et 4.

*4.3.3. Rémanence des produits (en absence de lessivage)*

L'objectif de cet essai était d'évaluer la persistance de l'efficacité des produits formulés sur la plante après traitement. Dans ce dispositif, 10 plants par condition sont utilisés.

Une seule dose est retenue, entre 6 et 12 g/l de produit 4 : la dose optimale déterminée après les essais décrits ci-dessus (paragraphes 4.3.1 et 4.3.2), qui pourra être choisie pour être utilisée au vignoble.

Cet essai est réalisé en conditions semi-contrôlées en serre. Comme pour l'essai 1, 5 feuilles (3ème ou 4éme feuille depuis l'apex) de chaque modalité sont prélevées juste après le traitement (extemporanément) puis 3, 7 et 10 jours après le traitement et ramenées au laboratoire pour évaluer l'efficacité de protection contre le mildiou. Comme pour un test d'efficacité *in vitro* classique, 3 boites de 6 à 8 disques de feuilles de 20 mm de diamètre sont préparées pour chaque modalité de traitement. L'inoculation des disques de feuilles est faite à raison de 3 gouttes de 15 $\mu$l par disque avec une suspension de sporanges.

Les évaluations de la croissance des agents pathogènes sont réalisées après 7 jours d'incubation à 22°C.

Les résultats sont présentés comme le pourcentage moyen d'inhibition de la croissance du champignon par rapport à la modalité témoin, pulvérisée avec de l'eau stérile, obtenu par le calcul suivant :

$$\% \text{ inhibition} = 100 \times 1 - (\% \text{ croissance ''traités''} / \% \text{ croissance ''témoins''}).$$

**Résultats :**

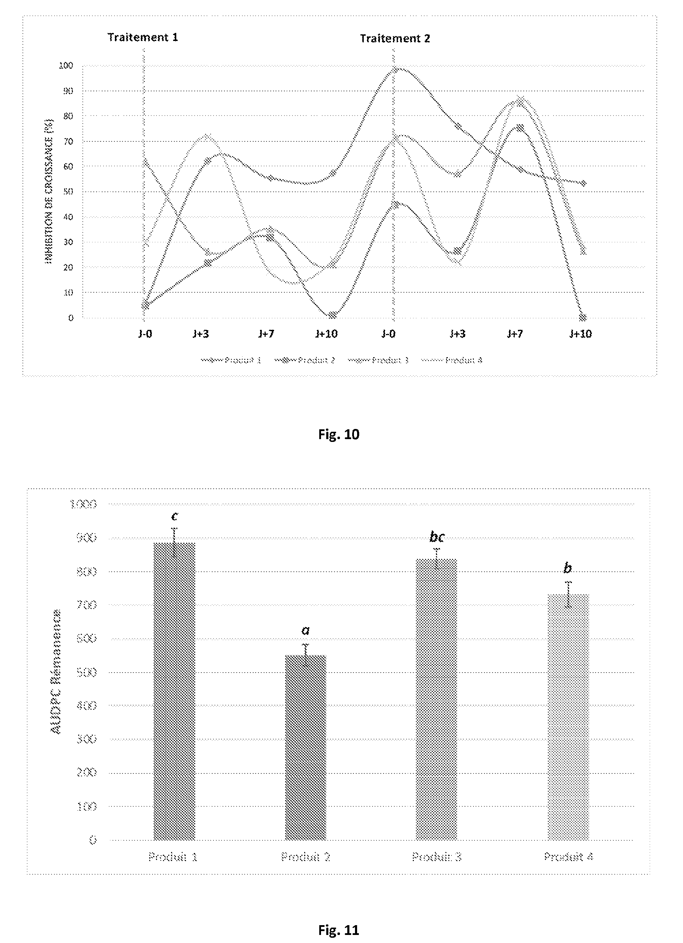

Les figures 10 et 11 montrent que les produits 1 et 3 donnent les meilleurs résultats de rémanence, à la dose moyenne utilisée. Les produits 2 et 4 offrent également une bonne rémanence.

*4.3.4. Résistance au lessivage*

L'objectif de cet essai était d'évaluer la résistance des produits formulés au lessivage. Dans cet essai, 10 plants sont utilisés par condition testée.

La dose utilisée est la dose optimale, entre 6 et 12 g/l de produit 4, déterminée après les essais décrits ci-dessus (paragraphes 4.3.1 et 4.3.2), qui pourra être choisie pour être utilisée au vignoble.

Les plants traités sont disposés sur la plateforme d'essai équipée d'un système d'irrigation d'arrosage oscillant. Des pluies cumulées de 25 mm ou un orage de 20 mm sont simulées. Ces conditions suffisent à entraîner les produits de traitements, et donc à rendre caducs les effets d'un traitement, même s'il a été réalisé quelques heures auparavant.

Comme pour les essais précédents, après séchage, 5 feuilles (3ème ou 4éme feuille depuis l'apex) de chaque plant sont prélevées et ramenées au laboratoire pour évaluer l'efficacité de protection contre le mildiou. Trois boites de 6 à 8 disques de feuilles de 20 mm de diamètre sont préparées pour chaque condition de traitement. L'inoculation des disques de feuilles est faite à raison de 3 gouttes de 15 $\mu$l par disque avec une suspension de sporanges.

Les évaluations de la croissance des agents pathogènes sont réalisées après 7 jours d'incubation à 22°C.

Les résultats sont présentés comme le pourcentage moyen d'inhibition de la croissance du champignon par rapport à la modalité témoin, pulvérisée avec de l'eau stérile, obtenu par le calcul suivant :

$$\% \text{ inhibition} = 100 \times 1 - (\% \text{ croissance ''traités''} / \% \text{ croissance ''témoins''}).$$

**Résultats :**

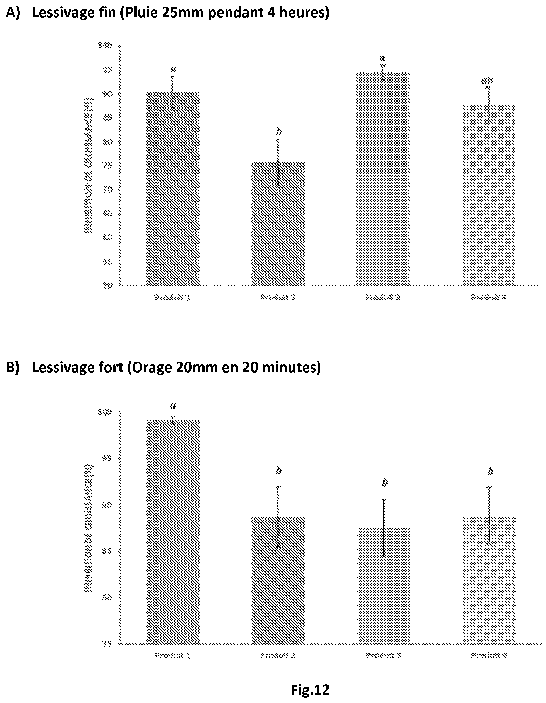

Les données obtenues sont présentées dans la figure 12. Elles révèlent que quel que soit le lessivage, les produits 1, 3 et 4 présentent les meilleurs résultats dans l'ensemble (entre 90 et 95 % de protection). L'activité antifongique de ces produits restent très élevée même après un fort lessivage (entre 85 et 90 % de protection). L'efficacité du produit 2 reste très bonne (75 % de protection après le lessivage fin mais presque 90 % de protection après le lessivage fort).

BILAN DE L'EXEMPLE 4 :

Les résultats confirment que les 4 compositions selon l'invention, testées dans cet exemple, sont toutes efficaces pour prévenir et traiter le mildiou sur les plants de vignes. La protection apportée par ces produits est stable et durable dans le temps. En outre, ces produits offrent tous une excellente résistance au lessivage, augmentant encore la durée de protection. Enfin, les données montrent que les 4 produits testés présentent une phytotoxicité acceptable. Dans leur ensemble, les données indiquent que le produit 3 est le plus intéressant, en termes d'efficacité, de phytotoxicité et de durée de protection.

**EXEMPLE 5 : Supériorité de l'activité antifongique de compositions selon l'invention sur l'agent responsable du Mildiou des solanacées (*Phytophtora infestans*) en conditions semi-contrôlées en serre**

Composition testée :

Le produit 3 de l'exemple 4 selon l'invention (20F29WG01), dont la composition solide est donnée dans le tableau 2 ci-dessus, a été utilisé lors de ces tests à différentes concentrations (0 kg/100 L, 0,3 kg/100 L, 0,6 kg/100 L, 0,9 kg/100 L et 1,2 kg/100 L).

### *5.1. Objectifs*

Les objectifs de cet essai étaient d'évaluer l'efficacité du produit 3 selon l'invention, à base de bicarbonate de potassium, contre les phytopathogènes, notamment le Mildiou des solanacées (*Phytophtora infestans)*. Plus précisément, les objectifs étaient de définir la dose optimale à appliquer aux plantes pour obtenir une bonne efficacité du produit avec une toxicité moindre.

### *5.2. Matériels et méthodes*

#### *5.2.1. Matériel végétal*

La production s'effectue en serre, à partir de jeunes plants de *Solanum tuberosum* (pomme de terre). Un tubercule par pot de 3L est cultivé sous serre. Les plants sont cultivés pendant 3 à 4 mois. Les tests sont effectués sur des plants ayant développé leur 6ème, 7ème ou 8ème feuille. Toutes les feuilles des plants sont infestées avec le pathogène pour étudier l'effet du produit 3.

#### *5.2.2. Matériel fongique*

Le mildiou est un agent pathogène obligatoire strict, c'est-à-dire qu'il ne peut se multiplier en absence de leur plante hôte.
Les souches utilisées dans ces essais sont des souches de *Phytophtora infestans.* Les tests sont réalisés en inoculant toutes les feuilles de chaque plant test. Il s'agit d'une infestation dite artificielle.

#### *5.2.3. Méthodes : Tests d'efficacité in vitro*

Différentes concentrations du produit sont appliquées sur les feuilles des plants à l'aide d'une lance avec buse à jet projeté (pression 3 bar) juste avant l'inoculation des agents pathogènes (extemporanément).
Des contrôles sont réalisés en appliquant la même quantité d'eau distillée stérile sur les feuilles des plants.
L'inoculation est réalisée dans des conditions standard appropriées à la souche à inoculer.
L'efficacité du traitement est déterminée par une évaluation visuelle du développement de l'agent pathogène après 7 jours à 18°C.
Les résultats sont présentés comme le pourcentage moyen d'infestation du champignon par rapport à un plant non inoculé.

### *5.3. Résultats*

#### *5.3.1. Effet Doses sur plants de pomme de terre*

Dans cet essai, 5 plants par condition testée sont utilisés.
Deux applications consécutives sont réalisées à 7 jours d'intervalle sur la totalité des feuilles (premier traitement correspondant au troisième traitement reçu par les plants : T3 ; second traitement correspondant au quatrième traitement reçu par les plants : T4).
Quatre doses sont testées pour le produit 3 : dose 0.3 kg/100 L correspondant à 2.5 x CMI obtenue au laboratoire, dose 0.6 kg/100 L correspondant à 5 x CMI, dose 0.9 kg/100 L correspondant à 7.5 x CMI et dose 1.2 kg/100 L correspondant à 10 x CMI.
Pour évaluer l'efficacité fongicide des différentes concentrations testées, l'inoculation est réalisée dans des conditions standard appropriées à la souche à inoculer.

L'inoculation a lieu 1 jour après l'application de la formulation selon l'invention, ou de l'eau distillée pour la condition témoin.

Les évaluations de la croissance des agents pathogènes sont réalisées après 7 jours d'incubation à 18°C.

Les résultats sont présentés comme le pourcentage moyen d'intensité de l'infestation parasitaire du champignon, par comparaison de l'infestation du champignon entre un plant inoculé et un plant non inoculé. L'observation de l'infestation du champignon se fait par visuellement.

**Résultats :**

*Tableau 13 : Taux d'infestation par le pathogène pour les différentes doses du produit 3 au bout de minimum 5 jours et 12 jours après traitement (T4) et inoculation des cultures*

| Doses utilisées | % infestation 5 jours après inoculation | % infestation 12 jours après inoculation |
|---|---|---|
| Témoin | 18,1 | 21,3 |
| Dose 0.3 kg/100 L | 20,6 | 20,0 |
| Dose 0.6 kg/100 L | 20 | 16,3 |
| Dose 0.9 kg/100 L | 10,6 | 13,8 |
| Dose 1.2 kg/100 L | 15 | 11,9 |

Les résultats montrent qu'après traitement (T4), inoculation et cultures des plants dans des conditions favorables à la croissance du pathogène, l'intensité de l'infestation parasitaire s'accroît à 18,1% après 5 jours d'inoculation puis 21,3% après 12 jours (Témoin).

Au bout de 5 jours après inoculation, les deux modalités Produit 3 pour les doses 0.9 kg/100 L et 1.2 kg/100 L sont relativement moins infestées que le témoin.

Au bout de 12 jours après inoculation, les réductions d'infestations sont significatives. La modalité de la dose 1.2 kg/100 L présente une intensité d'infestation parasitaire de 11,9% ; celle de la dose 0.9 kg/100 L présente une intensité d'infestation parasitaire de 13.8%. En comparaison, le témoin présente une intensité d'infestation parasitaire de 21,3%.

*5.3.2. Phytotoxicité*

Dans ce dispositif, deux applications consécutives sont réalisées à 7 jours d'intervalles (premier traitement : T1, deuxième traitement : T2), pour les quatre doses testées (0.3 kg/100 L, 0.6 kg/100 L, 0.9 kg/100 L, 1.2 kg/100 L), ainsi qu'une application d'eau distillée correspondant au témoin. Les résultats de phytotoxicité sont obtenus par observation des feuilles.

Des observations de phytotoxicité sont aussi effectuées après application du produit et inoculation du pathogènes. Ces applications (produit + pathogènes correspondant au T3 et T4 de la partie 5.3.1) sont effectuées 7 jours et 14 jours après les deux applications précédentes (T1 et T2).

L'observation vise en particulier à vérifier si les feuilles présentent des traces de nécrose en périphérie des feuilles et/ou un palissement.

**Résultats :**

Après les deux premières applications (T1 et T2), la culture ne présente aucun symptôme de phytotoxicité.

Après la troisième application (T3), de faibles symptômes apparaissent : nécroses en périphérie des feuilles et palissement de la culture.

Après la troisième application (T4), le produit induit des effets plus marqués sur la culture, mais la phytotoxicité reste très acceptable. Il est à noter que des plants élevés sous serre sont beaucoup plus sensibles que ceux des champs.

BILAN EXEMPLE 5 :

Le produit 3, pour les différentes doses testées, n'induit pas, ou que très peu, de phytotoxicité sur les plans de pomme de terre, et ce, pour quatre applications à 7 jours d'intervalles les unes des autres.

Enfin, les résultats confirment que le produit 3 possède une bonne efficacité pour prévenir et traiter le mildiou sur les plants de pomme de terre. Dans l'ensemble, les doses 0.9 kg/100 L et 1.2 kg/100 L apportent une meilleure protection, sur le plan de l'efficacité, avec une faible toxicité.

*Discussion*

Les données montrent que les produits 2 et 5 de l'exemple 2 ci-dessus, les produits 1 à 6 de l'exemple 3, les produits 1 à 4 de l'exemple 4 et le produit 3 de l'exemple 5 ci-dessus possèdent un effet antifongique et permettent de prévenir, traiter et contrôler le développement du champignon responsable du mildiou de la vigne, des cucurbitacées et solanacées lorsqu'ils sont appliqués sur les feuilles.

Ces produits sont particulièrement avantageux car ils comprennent uniquement des matières/ingrédients biosourcées et acceptables sur le plan phytosanitaire. De plus, ces ingrédients sont biodégradables. En outre, leur efficacité antifongique est particulièrement élevée.

Ces 12 compositions ont donc été sélectionnées pour leur efficacité particulièrement prononcée pour traiter/-contrôler l'oïdium de la vigne (*Erysiphe necator* ou *Uncinula necator*)*,* le mildiou de la vigne (*Plasmopara viticola*), la pourriture grise de la vigne (*Botrytis cinerea*), le mildiou des solanacées (*Phytophthora parasitica* et/ou *Phytophtora infestans*) et le mildiou des cucurbitacées (*Pseudoperonospora cubensis*). Ces compositions sont particulièrement efficaces pour prévenir et traiter le mildiou de la vigne, des cucurbitacées et des solanacées. Les compositions des produits 2 et 5 de l'exemple 2 (20B14GR01 avec ou sans adjuvant) et du produit 3 des exemples 4 et 5, sont celles en particulier qui se sont montrées les plus performantes et les plus régulières face aux inoculations de différentes souches de mildiou.

La composition selon l'invention est innovante car :

- Elle fait usage du bicarbonate de potassium contre le mildiou de la vigne, des cucurbitacées et des solanacées, qui pourrait être une alternative à l'usage du cuivre, qui contamine et pollue progressivement les sols viticoles et agricoles année après année, traitement après traitement.
- Elle utilise une matière active, le bicarbonate de potassium, qui peut être 100% biosourcée et peut notamment provenir d'un sous-produit de la fermentation alcoolique, le dioxyde de carbone - (carbonate de potassium + CO2 = bicarbonate de potassium), et qui est biodégradable. Ceci permet notamment de valoriser les gaz produits lors de la fermentation alcoolique et de limiter la libération du dioxyde de carbone, un gaz à effet de serre détrimentaire pour la couche d'ozone.
- Elle associe de manière inédite le bicarbonate de potassium et au moins un excipient pouvant être essentiellement biosourcé et/ou biodégradable (en particulier un tensioactif tensioactifs anioniques appartenant à la famille des taurates, biosourcé et/ou biodégradable ; et au moins un tensioactif additionnel choisi parmi les tensioactifs polymères polyélectrolytes anioniques, les tensioactifs non-ioniques, les tensioactifs cationiques, et toute combinaison de ceux-ci ; et optionnellement au moins un excipient supplémentaire choisi parmi les argiles).
- Les excipients utilisés, notamment les tensioactifs anioniques appartenant à la famille des taurates, améliorent l'étalement et la fixation de la matière active sur la feuille et/ou la plante. En retardant l'évaporation de l'eau, ils améliorent la qualité du film de contact formé sur la feuille par les autres coformulants. Enfin, ils améliorent la tenue au froid de la formulation.
- Le tensioactif polymère polyélectrolyte anionique (notamment les lignosulfonates) est un agent dispersant ayant également des propriétés de conservateur. Cet excipient améliore donc l'étalement de la matière active sur la feuille et prolonge la conservation de la composition.
- Le tensioactif non ionique (notamment les alcools éthoxylés, tels que le Tergitol®) permet de créer un film fixateur et protecteur de la matière active sur la feuille après application. En particulier, les alcools éthoxylés (tels que le Tergitol®) sont des tensioactifs mouillants (ils vont abaisser la tension de surface pour favoriser la mouillabilité de la poudre ou du granulé dans l'eau et du liquide sur la feuille lors de l'application).
- En outre, le tensioactif cationique (tels que les siloxanes) est un agent humectant ayant des propriétés antimousses : il va retenir l'eau et retarder son évaporation, pour améliorer la qualité du film de contact formé sur la feuille lors du séchage.
- L'argile (notamment les silicates) présente des propriétés purifiantes, astringentes et antiseptiques. Elle vient ainsi compléter et renforcer l'activité antifongique du bicarbonate de potassium, tout en prolongeant la durée de vie du produit.
- La formule est 100% naturelle, biosourcée, avec un impact sur l'environnement extrêmement faible.
- Le produit final peut se présenter sous forme liquide, de poudre, de granulés et/ou de comprimés, de préférence sous une forme solide. Or aucun produit commercialisé auprès des professionnels des filières viticoles ou agricoles à l'heure actuelle n'est sous forme de granulés ou de comprimés.

## Revendications

1. Composition comprenant :

   - du bicarbonate de potassium ;
   - au moins un excipient choisi parmi les tensioactifs anioniques appartenant à la famille des taurates, ledit excipient étant de préférence un excipient acceptable sur le plan phytosanitaire, et/ou de préférence un excipient essentiellement biosourcé ; et
   - au moins un excipient additionnel choisi parmi les tensioactifs polymères polyélectrolytes anioniques, les tensioactifs non-ioniques, les tensioactifs cationiques, et toute combinaison de ceux-ci ;
   les tensioactifs polymères polyélectrolytes anioniques étant choisis parmi les sulfonates, et toute combinaison de ceux-ci ; les tensioactifs non-ioniques étant choisis parmi les alcools éthoxylés, et toute combinaison de ceux-ci ; les tensioactifs cationiques étant choisis parmi les polymères organo-minéraux, et toute combinaison de ceux-ci ; ledit excipient additionnel étant de préférence hydrosoluble ; ledit excipient additionnel étant de préférence un excipient acceptable sur le plan phytosanitaire, et/ou de préférence un excipient essentiellement biosourcé.

2. Composition selon la revendication 1, **caractérisée en ce qu'**elle se présente sous une forme solide, de préférence sous la forme d'une poudre, de granules, ou une combinaison quelconque de ceux-ci.

3. Composition selon l'une quelconque des revendications précédentes, dans laquelle :

   - la teneur en bicarbonate de potassium va de 5% à 90% en poids par rapport au poids total de la composition, de préférence de 10% à 90%, de préférence de 15% à 85%, de préférence de 20% à 80%, de préférence de 40% à 70%, de préférence de 50 à 65% en poids par rapport au poids total de la composition ; et/ou
   - la teneur en tensioactifs anioniques appartenant à la famille des taurates va de 0,1% à 30% en poids par rapport au poids total de la composition, de préférence de 0,5% à 20%, de préférence de 1% à 15%, de préférence de 2% à 10%, de préférence de 3% à 6%, en poids par rapport au poids total de la composition.

4. Composition selon l'une quelconque des revendications précédentes, dans laquelle le bicarbonate de potassium est obtenu à partir d'une fermentation alcoolique, de préférence une fermentation du vin, le bicarbonate de potassium étant de préférence obtenu par un procédé comprenant les étapes suivantes :

   a) captage du dioxyde de carbone dégagé par la fermentation alcoolique ;
   b) barbotage du dioxyde de carbone capté lors de l'étape a) dans une solution de carbonate de potassium pour obtenir des cristaux de bicarbonate de potassium, de préférence dans des conditions de saturation de la solution;
   c) optionnellement, extraction des cristaux de bicarbonate de potassium obtenus à l'étape b).

5. Composition selon l'une quelconque des revendications précédentes, dans laquelle au moins un tensioactif anionique appartenant à la famille des taurates est choisi parmi les N-méthyltaurates ; de préférence parmi les N-méthyltaurates de sodium, les N-méthyltaurates d'ammonium, les N-méthyltaurates de calcium, les N-méthyltaurates des métaux alcalins, les N-méthyltaurates de métaux alcalino-terreux, et toute combinaison de ceux-ci ; de préférence encore parmi les N-méthyltaurates de sodium.

6. Composition selon l'une quelconque des revendications précédentes, comprenant en outre au moins un excipient additionnel choisi parmi les argiles, et une combinaison quelconque de celles-ci ; ledit excipient additionnel étant de préférence hydrosoluble ;
   dans laquelle l'argile est de préférence choisie parmi les silicates et une combinaison quelconque de ceux-ci, de préférence encore choisie parmi les phyllosilicates, de préférence encore choisie parmi les kaolinites.

7. Composition selon l'une quelconque des revendications précédentes, comprenant :

   a) au moins un tensioactif polymère polyélectrolyte anionique, choisi parmi les sulfonates, et une combinaison quelconque de ceux-ci ; le sulfonate étant de préférence choisi parmi les lignosulfonates ; de préférence choisi parmi les lignosulfonates de sodium, les lignosulfonates d'ammonium, les lignosulfonates de calcium, et toute combinaison de ceux-ci ; de préférence encore parmi les lignosulfonates de sodium ; ou
   b) au moins un tensioactif non-ionique, choisi parmi les alcools éthoxylés, et une combinaison quelconque de ceux-ci ; l'alcool éthoxylé étant de préférence choisi parmi les alcools éthoxylés secondaires ; de préférence encore choisi parmi les alcools secondaires éthoxylés en $C_8$-$C_{18}$; ou

c) au moins un tensioactif cationique, choisi parmi les polymères organo-minéraux, et une combinaison quelconque de ceux-ci ; le polymère organo-minéral étant de préférence choisi parmi les siloxanes ; de préférence choisi parmi les alkylsiloxanes ; de préférence encore choisi parmi les polydiméthylsiloxanes ; ou
d) toute combinaison de a) - c).

8. Composition selon l'une quelconque des revendications précédentes, dans laquelle :

i. la teneur en tensioactif polymère polyélectrolyte anionique va de 0,1% à 40% en poids par rapport au poids total de la composition, de préférence de 0,5% à 30%, de préférence de 1% à 20%, de préférence de 2% à 18%, de préférence de 5% à 15%, en poids par rapport au poids total de la composition ; ou
ii. la teneur en tensioactif non-ionique va de 0,01% à 40% en poids par rapport au poids total de la composition, de préférence de 0,05% à 30%, de préférence de 0,1% à 20%, de préférence de 0,5% à 15%, de préférence de 1% à 10%, en poids par rapport au poids total de la composition ; ou
iii. la teneur en tensioactif cationique va de 0,001% à 30% en poids par rapport au poids total de la composition, de préférence de 0,01% à 20%, de préférence de 0,1% à 10%, de préférence de 0,3% à 5%, de préférence de 0,5% à 2,5%, en poids par rapport au poids total de la composition ; ou
iv. la teneur en argile va de 0,5% à 60% en poids par rapport au poids total de la composition, de préférence de 5% à 50%, de préférence de 10% à 40%, de préférence de 15% à 35%, de préférence de 20% à 30%, en poids par rapport au poids total de la composition ; ou
v. la teneur en excipient additionnel est une combinaison quelconque d'au moins deux caractéristiques choisies parmi i à iv.

9. Composition selon l'une quelconque des revendications précédentes, comprenant :

- du bicarbonate de potassium, de préférence en une teneur allant de 5% à 90% en poids par rapport au poids total de la composition, de préférence de 15% à 85%, de préférence de 20% à 80%, de préférence de 40% à 70%, de préférence de 50 à 65% en poids par rapport au poids total de la composition ;
- au moins un tensioactif anionique appartenant à la famille des taurates, de préférence choisi parmi les N-méthyltaurates (tels que les N-méthyltaurates de sodium) ; de préférence en une teneur allant de 0,1% à 30% en poids par rapport au poids total de la composition, de préférence de 0,5% à 20%, de préférence de 3% à 6%, en poids par rapport au poids total de la composition ;
- au moins un tensioactif polymère polyélectrolyte anionique, de préférence choisi parmi les lignosulfonates (tels que les lignosulfonates de sodium) ; de préférence en une teneur allant de 0,1% à 40% en poids par rapport au poids total de la composition, de préférence de 1% à 20%, de préférence de 5% à 15%, en poids par rapport au poids total de la composition ;
- au moins un tensioactif non-ionique, de préférence choisi parmi les alcools éthoxylés (tels que les alcools secondaires éthoxylés en C8-C18) ; de préférence en une teneur allant de 0,01% à 40% en poids par rapport au poids total de la composition, de préférence de 0,1% à 20%, de préférence de 1% à 10%, en poids par rapport au poids total de la composition ;
- au moins un tensioactif cationique, de préférence choisi parmi les polymères organo-minéraux, de préférence choisi parmi les siloxanes (tels que les polydiméthylsiloxanes) ; de préférence en une teneur allant de 0,001% à 30% en poids par rapport au poids total de la composition, de préférence de 0,1% à 10%, de préférence de 0,5% à 2,5%, en poids par rapport au poids total de la composition ;
- au moins une argile, de préférence choisie parmi les silicates (tels que les kaolinites) ; de préférence en une teneur allant de 0,5% à 60% en poids par rapport au poids total de la composition, de préférence de 10% à 40%, de préférence de 20% à 30%, en poids par rapport au poids total de la composition ; et
- optionnellement un solvant, de préférence un solvant aqueux, par exemple de l'eau.

10. Composition selon l'une quelconque des revendications précédentes, **caractérisée en ce qu'**elle est :

i. une composition phytosanitaire, de préférence une composition antifongique ; ou
ii. essentiellement composée d'ingrédients biosourcés, lesdits ingrédients étant de préférence biodégradables et/ou d'origine naturelle ; ou
iii. toute combinaison de i. - ii.

11. Utilisation d'une composition selon l'une quelconque des revendications précédentes, pour traiter et/ou protéger les cultures, de préférence les vignes, les cucurbitacées, les solanacées (de préférence les pommes de terre), et toute combinaison de celles-ci ; de préférence encore les vignes ; l'utilisation étant de préférence choisie parmi les utilisations pour :

- protéger les cultures des champignons pathogènes et/ou maladies fongiques,
- traiter les cultures contre les champignons pathogènes et/ou maladies fongiques,
- contrôler les champignons pathogènes et/ou maladies fongiques sur les cultures, ou
- l'une quelconque de leurs combinaisons.

12. Méthode de protection et/ou de traitement des cultures, comprenant l'application d'une composition selon l'une quelconque des revendications 1 à 10 sur les cultures à protéger et/ou traiter ; dans laquelle les cultures sont de préférence des vignes, des cucurbitacées, des solanacées (de préférence des pommes de terre), et toute combinaison de celles-ci ; de préférence encore des vignes ;
la méthode étant de préférence choisie parmi les méthodes pour :

- protéger les cultures des champignons pathogènes et/ou maladies fongiques,
- traiter les cultures contre les champignons pathogènes et/ou maladies fongiques,
- contrôler les champignons pathogènes et/ou maladies fongiques sur les cultures, et
- l'une quelconque de leurs combinaisons.

13. Utilisation selon la revendication 11, ou méthode selon la revendication 12, dans laquelle le champignon pathogène est choisi parmi le mildiou de la vigne *(Plasmopara viticola)*, l'oïdium de la vigne *(Uncinula necator* et/ou *Erysiphe necator)*, et la pourriture de la vigne *(Botrytis cinerea)*, de préférence le mildiou de la vigne *(Plasmopara viticola)*.

14. Utilisation d'une composition comprenant du bicarbonate de potassium et moins un excipient choisi parmi les tensioactifs anioniques appartenant à la famille des taurates, pour traiter et/ou protéger les cultures, de préférence les vignes, les cucurbitacées, les solanacées (de préférence les pommes de terre), et toute combinaison de celles-ci ; de préférence encore les vignes ;

ledit excipient étant de préférence un excipient acceptable sur le plan phytosanitaire, et/ou de préférence un excipient essentiellement biosourcé ;
l'utilisation étant de préférence choisie parmi les utilisations pour :

- protéger les cultures des champignons pathogènes et/ou maladies fongiques,
- traiter les cultures contre les champignons pathogènes et/ou maladies fongiques,
- contrôler les champignons pathogènes et/ou maladies fongiques sur les cultures, ou
- l'une quelconque de leurs combinaisons.

.

15. Méthode de protection et/ou de traitement des cultures, comprenant l'application d'une composition sur les cultures à protéger et/ou traiter ;

la composition comprenant du bicarbonate de potassium et moins un excipient choisi parmi les tensioactifs anioniques appartenant à la famille des taurates ; ledit excipient étant de préférence un excipient acceptable sur le plan phytosanitaire, et/ou de préférence un excipient essentiellement biosourcé ;
dans laquelle les cultures sont de préférence des vignes, des cucurbitacées, des solanacées (de préférence des pommes de terre), et toute combinaison de celles-ci ; de préférence encore des vignes ;
la méthode étant de préférence choisie parmi les méthodes pour :

- protéger les cultures des champignons pathogènes et/ou maladies fongiques,
- traiter les cultures contre les champignons pathogènes et/ou maladies fongiques,
- contrôler les champignons pathogènes et/ou maladies fongiques sur les cultures, et
- l'une quelconque de leurs combinaisons.

16. Utilisation selon la revendication 14, ou méthode selon la revendication 15, dans laquelle le champignon pathogène est choisi parmi le mildiou de la vigne *(Plasmopara viticola)*, l'oïdium de la vigne *(Uncinula necator* et/ou *Erysiphe necator)*, la pourriture de la vigne *(Botrytis cinerea)*, le mildiou des solanacées *(Phytophthora parasitica* et/ou *Phytophtora infestans)* et le mildiou des cucurbitacées (*Pseudoperonospora cubensis*), de préférence le mildiou de la vigne *(Plasmopara viticola)*.

**Patentansprüche**

1. Zusammensetzung, umfassend:

   - Kaliumbicarbonat;
   - mindestens einen Hilfsstoff, ausgewählt aus den anionischen Tensiden aus der Familie der Taurate, wobei der Hilfsstoff vorzugsweise ein phytosanitär akzeptabler Hilfsstoff und/oder vorzugsweise ein im Wesentlichen biobasierter Hilfsstoff ist; und
   - mindestens einen weiteren Hilfsstoff, ausgewählt aus den anionischen Polymer-Polyelektrolyt-Tensiden, den nichtionischen Tensiden, den kationischen Tensiden und jeder Kombination davon;
   wobei die anionischen Polymer-Polyelektrolyt-Tenside aus den Sulfonaten und jeder Kombination davon ausgewählt sind; wobei die nichtionischen Tenside aus den ethoxylierten Alkoholen und jeder Kombination davon ausgewählt sind; wobei die kationischen Tenside aus den organisch-mineralischen Polymeren und jeder Kombination davon ausgewählt sind;
   wobei der zusätzliche Hilfsstoff vorzugsweise wasserlöslich ist; wobei der zusätzliche Hilfsstoff vorzugsweise ein phytosanitär akzeptabler Hilfsstoff und/oder vorzugsweise ein im Wesentlichen biobasierter Hilfsstoff ist.

2. Zusammensetzung nach Anspruch 1, **dadurch gekennzeichnet, dass** sie in fester Form, vorzugsweise in Form eines Pulvers, von Granulat oder einer beliebigen Kombination davon vorliegt.

3. Zusammensetzung nach einem der vorstehenden Ansprüche, wobei:

   - der Gehalt an Kaliumbicarbonat 5 bis 90 Gew.-%, bezogen auf das Gesamtgewicht der Zusammensetzung, vorzugsweise 10 bis 90 Gew.-%, vorzugsweise 15 bis 85 Gew.-%, vorzugsweise 20 bis 80 Gew.-%, vorzugsweise 40 bis 70 Gew.-%, vorzugsweise 50 bis 65 Gew.-%, bezogen auf das Gesamtgewicht der Zusammensetzung, beträgt; und/oder
   - der Gehalt an anionischen Tensiden aus der Familie der Taurate 0,1 bis 30 Gew.-%, bezogen auf das Gesamtgewicht der Zusammensetzung, vorzugsweise 0,5 bis 20 Gew.-%, vorzugsweise 1 bis 15 Gew.-%, vorzugsweise 2 bis 10 Gew.-%, vorzugsweise 3 bis 6 Gew.-%, bezogen auf das Gesamtgewicht der Zusammensetzung, beträgt.

4. Zusammensetzung nach einem der vorstehenden Ansprüche, wobei das Kaliumbicarbonat aus einer alkoholischen Gärung, vorzugsweise einer Weingärung, gewonnen wird, wobei das Kaliumbicarbonat vorzugsweise durch ein Verfahren gewonnen wird, das die folgenden Schritte umfasst:

   a) Auffangen des bei der alkoholischen Gärung freigesetzten Kohlendioxids;
   b) Einleiten des in Schritt a) aufgefangenen Kohlendioxids in eine Kaliumcarbonatlösung, um Kaliumbicarbonatkristalle zu erhalten, vorzugsweise unter Bedingungen der Sättigung der Lösung;
   c) optional Extrahieren der in Schritt b) erhaltenen Kaliumbicarbonatkristalle.

5. Zusammensetzung nach einem der vorstehenden Ansprüche, wobei mindestens ein anionisches Tensid aus der Familie der Taurate aus den N-Methyltauraten; vorzugsweise aus den Natrium-N-Methyltauraten, den Ammonium-N-Methyltauraten, den Calcium-N-Methyltauraten, den Alkalimetall-N-Methyltauraten, den Erdalkalimetall-N-Methyltauraten und jeder Kombination davon; noch bevorzugter aus den Natrium-N-Methyltauraten ausgewählt ist.

6. Zusammensetzung nach einem der vorstehenden Ansprüche, die ferner mindestens einen weiteren Hilfsstoff umfasst, der aus den Tonen und einer beliebigen Kombination davon ausgewählt ist; wobei der weitere Hilfsstoff vorzugsweise wasserlöslich ist;
   wobei der Ton vorzugsweis aus den Silikaten und einer beliebigen Kombination davon ausgewählt ist; noch bevorzugter aus den Phyllosilikaten ausgewählt ist, noch bevorzugter aus den Kaoliniten ausgewählt ist.

7. Zusammensetzung nach einem der vorstehenden Ansprüche, umfassend:

   a) mindestens ein anionisches Polymer-Polyelektrolyt-Tensid, ausgewählt aus den Sulfonaten und einer beliebigen Kombination davon; wobei das Sulfonat vorzugsweise aus den Lignosulfonaten ausgewählt ist; vorzugsweise aus den Natriumlignosulfonaten, den Ammoniumlignosulfonaten, den Calciumlignosulfonaten und jeder Kombination davon; noch bevorzugter aus den Natriumlignosulfonaten ausgewählt ist; oder
   b) mindestens ein nichtionisches Tensid, ausgewählt aus den ethoxylierten Alkoholen und einer beliebigen

EP 4 358 721 B1

Kombination davon; wobei der ethoxylierte Alkohol vorzugsweise aus den sekundären ethoxylierten Alkoholen ausgewählt ist; noch bevorzugter aus den sekundären ethoxylierten $C_8$-$C_{18}$-Alkoholen ausgewählt ist, oder

c) mindestens ein kationisches Tensid, ausgewählt aus den organisch-mineralischen Polymeren und einer beliebigen Kombination davon; wobei das organischmineralische Polymer vorzugsweise aus den Siloxanen ausgewählt ist; vorzugsweise aus den Alkylsiloxanen; noch bevorzugter aus den Polydimethylsiloxanen ausgewählt ist; oder

d) jede Kombination von a) - c).

**8.** Zusammensetzung nach einem der vorstehenden Ansprüche, wobei:

i. der Gehalt an anionischem Polymer-Polyelektrolyt-Tensid 0,1 bis 40 Gew.-%, bezogen auf das Gesamtgewicht der Zusammensetzung, vorzugsweise 0,5 bis 30 Gew.-%, vorzugsweise 1 bis 20 Gew.-%, vorzugsweise 2 bis 18 Gew.-%, vorzugsweise 5 bis 15 Gew.-%, bezogen auf das Gesamtgewicht der Zusammensetzung, beträgt; oder

ii. der Gehalt an nichtionischem Tensid 0,01 bis 40 Gew.-%, bezogen auf das Gesamtgewicht der Zusammensetzung, vorzugsweise 0,05 bis 30 Gew.-%, vorzugsweise 0,1 bis 20 Gew.-%, vorzugsweise 0,5 bis 15 Gew.-%, vorzugsweise 1 bis 10 Gew.-%, bezogen auf das Gesamtgewicht der Zusammensetzung, beträgt; oder

iii. der Gehalt an kationischem Tensid 0,001 bis 30 Gew.-%, bezogen auf das Gesamtgewicht der Zusammensetzung, vorzugsweise 0,01 bis 20 Gew.-%, vorzugsweise 0,1 bis 10 Gew.-%, vorzugsweise 0,3 bis 5 Gew.-%, vorzugsweise 0,5 bis 2,5 Gew.-%, bezogen auf das Gesamtgewicht der Zusammensetzung, beträgt; oder

iv. der Gehalt an Ton 0,5 bis 60 Gew.-%, bezogen auf das Gesamtgewicht der Zusammensetzung, vorzugsweise 5 bis 50 Gew.-%, vorzugsweise 10 bis 40 Gew.-%, vorzugsweise 15 bis 35 Gew.-%, vorzugsweise 20 bis 30 Gew.-%, bezogen auf das Gesamtgewicht der Zusammensetzung, beträgt; oder

v. der Gehalt an weiterem Hilfsstoff eine beliebige Kombination aus mindestens zwei Merkmalen, ausgewählt aus i bis iv, ist.

**9.** Zusammensetzung nach einem der vorstehenden Ansprüche, umfassend:

- Kaliumbicarbonat, vorzugsweise in einem Gehalt von 5 bis 90 Gew.-%, bezogen auf das Gesamtgewicht der Zusammensetzung, vorzugsweise von 15 bis 85 Gew.-%, vorzugsweise von 20 bis 80 Gew.-%, vorzugsweise von 40 bis 70 Gew.-%, vorzugsweise von 50 bis 65 Gew.-%, bezogen auf das Gesamtgewicht der Zusammensetzung;

- mindestens ein anionisches Tensid aus der Familie der Taurate, vorzugsweise ausgewählt aus den N-Methyltauraten (wie etwa den Natrium-N-Methyltauraten); vorzugsweise in einem Gehalt von 0,1 bis 30 Gew.-%, bezogen auf das Gesamtgewicht der Zusammensetzung, vorzugsweise von 0,5 bis 20 Gew.-%, vorzugsweise von 3 bis 6 Gew.-%, bezogen auf das Gesamtgewicht der Zusammensetzung;

- mindestens ein anionisches Polymer-Polyelektrolyt-Tensid, vorzugsweise ausgewählt aus den Lignosulfonaten (wie etwa den Natriumlignosulfonaten); vorzugsweise in einem Gehalt von 0,1 bis 40 Gew.-%, bezogen auf das Gesamtgewicht der Zusammensetzung, vorzugsweise von 1 bis 20 Gew.-%; vorzugsweise von 5 bis 15 Gew.-%, bezogen auf das Gesamtgewicht der Zusammensetzung;

- mindestens ein nichtionisches Tensid, vorzugsweise ausgewählt aus den ethoxylierten Alkoholen (wie etwa den sekundären ethoxylierten $C_8$-$C_{18}$-Alkoholen) ; vorzugsweise in einem Gehalt von 0,01 bis 40 Gew.-%, bezogen auf das Gesamtgewicht der Zusammensetzung, vorzugsweise von 0,1 bis 20 Gew.-%, vorzugsweise von 1 bis 10 Gew.-%, bezogen auf das Gesamtgewicht der Zusammensetzung;

- mindestens ein kationisches Tensid, vorzugsweise ausgewählt aus den organisch-mineralischen Polymeren, vorzugsweise ausgewählt aus den Siloxanen (wie etwa den Polydimethylsiloxanen); vorzugsweise in einem Gehalt von 0,001 bis 30 Gew.-%, bezogen auf das Gesamtgewicht der Zusammensetzung, vorzugsweise von 0,1 bis 10 Gew.-%, vorzugsweise von 0,5 bis 2,5 Gew.-%, bezogen auf das Gesamtgewicht der Zusammensetzung;

- mindestens einen Ton, vorzugsweise ausgewählt aus den Silikaten (wie etwa den Kaoliniten); vorzugsweise in einem Gehalt von 0,5 bis 60 Gew.-%, bezogen auf das Gesamtgewicht der Zusammensetzung, vorzugsweise von 10 bis 40 Gew.-%, vorzugsweise von 20 bis 30 Gew.-%, bezogen auf das Gesamtgewicht der Zusammensetzung; und

- optional ein Lösungsmittel, vorzugsweise ein wässriges Lösungsmittel, beispielsweise Wasser.

**10.** Zusammensetzung nach einem der vorstehenden Ansprüche, **dadurch gekennzeichnet, dass** sie:

i. eine phytosanitäre Zusammensetzung, vorzugsweise eine antimykotische Zusammensetzung ist; oder
ii. im Wesentlichen aus biobasierten Inhaltsstoffen besteht, wobei die Inhaltsstoffe vorzugsweise biologisch abbaubar und/oder natürlichen Ursprungs sind; oder

iii. jede Kombination von i.-ii. ist.

11. Verwendung einer Zusammensetzung nach einem der vorstehenden Ansprüche zur Behandlung und/oder zum Schutz von Kulturen, vorzugsweise Weinreben, Kürbisgewächsen, Nachtschattengewächsen (vorzugsweise Kartoffeln) und jeder Kombination davon; noch bevorzugter Weinreben; wobei die Verwendung vorzugsweise aus den Verwendungen ausgewählt ist, um:

- die Kulturen vor pathogenen Pilzen und/oder Pilzkrankheiten zu schützen,
- die Kulturen gegen pathogene Pilze und/oder Pilzkrankheiten zu behandeln,
- die pathogenen Pilze und/oder Pilzkrankheiten auf den Kulturen zu kontrollieren, oder
- eine beliebige von deren Kombinationen anzuwenden.

12. Verfahren zum Schutz und/oder zur Behandlung von Kulturen, umfassend das Aufbringen einer Zusammensetzung nach einem der Ansprüche 1 bis 10 auf die zu schützenden und/oder zu behandelnden Kulturen; wobei die Kulturen vorzugsweise Weinreben, Kürbisgewächse, Nachtschattengewächse (vorzugsweise Kartoffeln) und beliebige Kombinationen davon sind; noch bevorzugter Weinreben;

wobei das Verfahren vorzugsweise aus den Verfahren ausgewählt ist, um:

- die Kulturen vor pathogenen Pilzen und/oder Pilzkrankheiten zu schützen,
- die Kulturen gegen pathogene Pilze und/oder Pilzkrankheiten zu behandeln,
- die pathogenen Pilze und/oder Pilzkrankheiten auf den Kulturen zu kontrollieren, oder
- eine beliebige von deren Kombinationen anzuwenden.

13. Verwendung nach Anspruch 11 oder Verfahren nach Anspruch 12, wobei der pathogene Pilz aus dem Weinrebenmehltau *(Plasmopara viticola),* dem Echten Mehltau *(Uncinula necator* und/oder *Erysiphe necator)* und der Botrytis-Fäule *(Botrytis cinerea),* vorzugsweise dem Weinrebenmehltau *(Plasmopara viticola),* ausgewählt ist.

14. Verwendung einer Zusammensetzung, die Kaliumbicarbonat und mindestens einen Hilfsstoff umfasst, der aus den anionischen Tensiden aus der Familie der Taurate ausgewählt ist, zur Behandlung und/oder zum Schutz von Kulturen, vorzugsweise von Weinreben, Kürbisgewächsen, Nachtschattengewächsen (vorzugsweise Kartoffeln) und jeder Kombination davon; noch bevorzugter Weinreben;

wobei der Hilfsstoff vorzugsweise ein phytosanitär akzeptabler Hilfsstoff und/oder vorzugsweise ein im Wesentlichen biobasierter Hilfsstoff ist;

wobei die Verwendung vorzugsweise ausgewählt ist aus den Verwendungen, um:

- die Kulturen vor pathogenen Pilzen und/oder Pilzkrankheiten zu schützen,
- die Kulturen gegen pathogene Pilze und/oder Pilzkrankheiten zu behandeln,
- die pathogenen Pilze und/oder Pilzkrankheiten auf den Kulturen zu kontrollieren, oder
- eine beliebige von deren Kombinationen anzuwenden.

15. Verfahren zum Schutz und/oder zur Behandlung von Kulturen, umfassend das Aufbringen einer Zusammensetzung auf die zu schützenden und/oder zu behandelnden Kulturen;

wobei die Zusammensetzung Kaliumbicarbonat und mindestens einen Hilfsstoff umfasst, der aus den anionischen Tensiden aus der Familie der Taurate ausgewählt ist; wobei der Hilfsstoff vorzugsweise ein phytosanitär akzeptabler Hilfsstoff und/oder vorzugsweise ein im Wesentlichen biobasierter Hilfsstoff ist;
wobei die Kulturen vorzugsweise Weinreben, Kürbisgewächse, Nachtschattengewächse (vorzugsweise Kartoffeln) und jede Kombination davon sind; noch bevorzugter Weinreben;
wobei das Verfahren vorzugsweise ausgewählt ist aus den Verfahren, um:

- die Kulturen vor pathogenen Pilzen und/oder Pilzkrankheiten zu schützen,
- die Kulturen gegen pathogene Pilze und/oder Pilzkrankheiten zu behandeln,
- die pathogenen Pilze und/oder Pilzkrankheiten auf den Kulturen zu kontrollieren, oder
- eine beliebige von deren Kombinationen anzuwenden.

16. Verwendung nach Anspruch 14 oder Verfahren nach Anspruch 15, wobei der pathogene Pilz aus dem Weinrebenmehltau (*Plasmopara viticola*), dem Echten Mehltau (*Uncinula necator* und/oder *Erysiphe necator*), der Botrytis-Fäule (*Botrytis cinerea*), der Kraut- und Braunfäule der Nachtschattengewächse (*Phytophthora parasitica* und/oder *Phytophtora infestans*) und der Kraut- und Braunfäule der Kürbisgewächse (*Pseudoperonospora cubensis*), vorzugsweise dem Weinrebenmehltau (*Plasmopara viticola*) ausgewählt ist.

**Claims**

1. Composition comprising :

   - potassium bicarbonate ;
   - at least one excipient selected from anionic surfactants belonging to the taurate family, said excipient preferably being a phytosanitarily acceptable excipient, and/or preferably an essentially biobased excipient; and
   - at least one additional excipient selected from anionic polyelectrolyte polymer surfactants, non-ionic surfactants, cationic surfactants, and any combination thereof;
   the anionic polyelectrolyte polymer surfactants being selected from sulphonates, and any combination thereof; the non-ionic surfactants being selected from ethoxylated alcohols, and any combination thereof; the cationic surfactants being selected from organo-mineral polymers, and any combination thereof;
   said additional excipient preferably being water-soluble; said additional excipient preferably being a phytosanitarily acceptable excipient, and/or preferably an essentially biobased excipient.

2. Composition according to claim 1, **characterized in that** it is in solid form, preferably in the form of a powder, granules, or any combination thereof.

3. Composition according to any one of the preceding claims, wherein :

   - the potassium bicarbonate content ranges from 5% to 90% by weight relative to the total weight of the composition, preferably from 10% to 90%, more preferably from 15% to 85%, more preferably from 20% to 80%, more preferably from 40% to 70%, more preferably from 50 to 65% by weight relative to the total weight of the composition; and/or
   - the content of anionic surfactants belonging to the taurate family ranges from 0.1% to 30% by weight relative to the total weight of the composition, preferably from 0.5% to 20%, more preferably from 1% to 15%, more preferably from 2% to 10%, most preferably from 3% to 6%, by weight relative to the total weight of the composition.

4. Composition according to any one of the preceding claims, wherein the potassium bicarbonate is obtained from an alcoholic fermentation, preferably a wine fermentation, the potassium bicarbonate preferably being obtained by a process comprising the following steps:

   a) capture of the carbon dioxide released by alcoholic fermentation;
   b) bubbling the carbon dioxide captured in step a) into a potassium carbonate solution to obtain potassium bicarbonate crystals, preferably under conditions of saturation of the solution;
   c) optionally, extraction of the potassium bicarbonate crystals obtained in step b).

5. Composition according to any one of the preceding claims, wherein at least one anionic surfactant belonging to the taurate family is selected from N-methyltaurates; preferably from sodium N-methyltaurates, ammonium N-methyltaurates, calcium N-methyltaurates, alkali metal N-methyltaurates, alkaline earth metal N-methyltaurates, and any combination thereof; more preferably from sodium N-methyltaurates.

6. A composition according to any one of the preceding claims, further comprising at least one additional excipient selected from clays, and any combination thereof; said additional excipient preferably being water-soluble; wherein the clay is preferably selected from silicates and any combination thereof, more preferably selected from phyllosilicates, preferably still selected from kaolinites.

7. Composition according to any one of the preceding claims, comprising :

   a) at least one anionic polyelectrolyte polymer surfactant, selected from sulfonates, and any combination thereof; the sulfonate being preferably selected from lignosulfonates; preferably selected from sodium lignosulfonates, ammonium lignosulfonates, calcium lignosulfonates, and any combination thereof; more preferably selected from sodium lignosulfonates; or

b) at least one non-ionic surfactant, selected from ethoxylated alcohols, and any combination thereof; the ethoxylated alcohol being preferably selected from secondary ethoxylated alcohols; more preferably selected from secondary ethoxylated $C_8$-$C_{18}$ alcohols; or

c) at least one cationic surfactant selected from organo-mineral polymers, and any combination thereof; the organo-mineral polymer being preferably selected from siloxanes; preferably selected from alkylsiloxanes; more preferably selected from polydimethylsiloxanes; or

d) any combination of a) - c).

8. Composition according to any one of the preceding claims, wherein :

i. the anionic polyelectrolyte polymer surfactant content ranges from 0.1% to 40% by weight relative to the total weight of the composition, preferably from 0.5% to 30%, more preferably from 1% to 20%, preferably from 2% to 18%, more preferably from 5% to 15%, by weight relative to the total weight of the composition; or

ii. the non-ionic surfactant content ranges from 0.01% to 40% by weight relative to the total weight of the composition, preferably from 0.05% to 30%, more preferably from 0.1% to 20%, more preferably from 0.5% to 15%, most preferably from 1% to 10%, by weight relative to the total weight of the composition; or

iii. the cationic surfactant content ranges from 0.001% to 30% by weight relative to the total weight of the composition, preferably from 0.01% to 20%, more preferably from 0.1% to 10%, more preferably from 0.3% to 5%, more preferably from 0.5% to 2.5%, by weight relative to the total weight of the composition; or

iv. the clay content ranges from 0.5% to 60% by weight relative to the total weight of the composition, preferably from 5% to 50%, more preferably from 10% to 40%, more preferably from 15% to 35%, more preferably from 20% to 30%, by weight relative to the total weight of the composition; or

v. the additional excipient content is any combination of at least two characteristics selected from i to iv.

9. Composition according to any one of the preceding claims, comprising :

- potassium bicarbonate, preferably in an amount ranging from 5% to 90% by weight relative to the total weight of the composition, preferably from 15% to 85%, preferably from 20% to 80%, preferably from 40% to 70%, preferably from 50 to 65% by weight relative to the total weight of the composition;

- at least one anionic surfactant belonging to the taurate family, preferably selected from N-methyltaurates (such as sodium N-methyltaurates); preferably in a content ranging from 0.1% to 30% by weight relative to the total weight of the composition, preferably from 0.5% to 20%, more preferably from 3% to 6%, by weight relative to the total weight of the composition;

- at least one anionic polyelectrolyte polymeric surfactant, preferably selected from lignosulphonates (such as sodium lignosulphonates); preferably in an amount ranging from 0.1% to 40% by weight relative to the total weight of the composition, preferably from 1% to 20%, more preferably from 5% to 15%, by weight relative to the total weight of the composition;

- at least one non-ionic surfactant, preferably selected from ethoxylated alcohols (such as $C_8$-$C_{18}$ ethoxylated secondary alcohols); preferably in an amount ranging from 0.01% to 40% by weight relative to the total weight of the composition, preferably from 0.1% to 20%, more preferably from 1% to 10%, by weight relative to the total weight of the composition;

- at least one cationic surfactant, preferably selected from organo-mineral polymers, preferably selected from siloxanes (such as polydimethylsiloxanes); preferably in an amount ranging from 0.001% to 30% by weight relative to the total weight of the composition, preferably from 0.1% to 10%, more preferably from 0.5% to 2.5%, by weight with respect to the total weight of the composition;

- at least one clay, preferably selected from silicates (such as kaolinites); preferably in an amount ranging from 0.5% to 60% by weight, relative to the total weight of the composition, preferably from 10% to 40%, more preferably from 20% to 30%, by weight, relative to the total weight of the composition; and

- optionally a solvent, preferably an aqueous solvent, for example water.

10. Composition according to any one of the preceding claims, **characterized in that** it is :

i. a phytosanitary composition, preferably an antifungal composition; or

ii. essentially composed of biobased ingredients, said ingredients preferably being biodegradable and/or of natural origin; or

iii. any combination of i. - ii.

11. Use of a composition according to any one of the preceding claims, for treating and/or protecting crops, preferably vines, cucurbits, solanaceae (preferably potatoes), and any combination thereof; more preferably vines; the use being preferably selected from uses for:

  • protecting crops from fungal pathogens and/or fungal diseases,
  • treating crops against pathogenic fungi and/or fungal diseases,
  • controlling fungal pathogens and/or fungal diseases on crops, or
  • any of their combinations.

12. A method of protecting and/or treating crops, comprising applying a composition according to any one of claims 1 to 10 to the crops to be protected and/or treated; wherein the crops are preferably vines, cucurbits, solanaceae (preferably potatoes), and any combination thereof; more preferably vines;
the method being preferably selected from the methods for :

  - protecting crops from fungal pathogens and/or fungal diseases,
  - treating crops against pathogenic fungi and/or fungal diseases,
  - controlling fungal pathogens and/or fungal diseases on crops, and
  - any of their combinations.

13. Use according to claim 11, or method according to claim 12, wherein the pathogenic fungus is selected from downy mildew (*Plasmopara viticola*), powdery mildew (*Uncinula necator* and/or *Erysiphe necator*) and grapevine rot (*Botrytis cinerea*), preferably downy mildew (*Plasmopara viticola*).

14. Use of a composition comprising potassium bicarbonate and at least one excipient selected from anionic surfactants belonging to the taurate family, for treating and/or protecting crops, preferably vines, cucurbits, solanaceae (preferably potatoes), and any combination thereof; more preferably vines;

said excipient preferably being a phytosanitarily acceptable excipient, and/or preferably an essentially biobased excipient;
the use being preferably selected from uses for :

  • protecting crops from fungal pathogens and/or fungal diseases,
  • treating crops against pathogenic fungi and/or fungal diseases,
  • controlling fungal pathogens and/or fungal diseases on crops, or
  • any of their combinations.

15. A method of protecting and/or treating crops, comprising applying a composition to the crops to be protected and/or treated;

the composition comprising potassium bicarbonate and at least one excipient selected from anionic surfactants belonging to the taurate family; said excipient preferably being a phytosanitarily acceptable excipient, and/or preferably an essentially biobased excipient; in which the crops are preferably vines, cucurbits, solanaceae (preferably potatoes), and any combination thereof; more preferably vines;
the method being preferably selected from the methods for :

  - protecting crops from fungal pathogens and/or fungal diseases,
  - treating crops against pathogenic fungi and/or fungal diseases,
  - controlling fungal pathogens and/or fungal diseases on crops, and
  - any of their combinations.

16. Use according to claim 14, or method according to claim 15, wherein the pathogenic fungus is selected from downy mildew (*Plasmopara viticola*), powdery mildew (*Uncinula necator* and/or *Erysiphe necator*), grapevine rot (*Botrytis cinerea*), solanaceous mildew (*Phytophthora parasitica* and/or *Phytophtora infestans*) and cucurbit mildew (*Pseudoperonospora cubensis*), preferably downy mildew (*Plasmopara viticola*).

Fig. 1

Fig. 2

Fig. 3

Fig. 4

Fig. 5

Fig. 6

**Fig. 7**

**Fig. 8**

Fig. 9

**Fig. 10**

**Fig. 11**

**A) Lessivage fin (Pluie 25mm pendant 4 heures)**

**B) Lessivage fort (Orage 20mm en 20 minutes)**

**Fig.12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9600705 A
- WO 9512975 A
- WO 9418831 A